# EUROPEAN PATENT APPLICATION

(11) **EP 4 848 388 A1**
(43) Date of publication of application: **02.12.2026**
(21) Application number: 25764534.1
(22) Date of filing: 25.03.2025
(51) Int. Cl.: H01M 10/04, H01M 50/102, H01M 50/103, H01M 50/477

(54) **BATTERY CELL, BATTERY APPARATUS AND ELECTRICAL APPARATUS**

(71) Applicant: Contemporary Amperex Technology Co., Ltd., Ningde, Fujian 352100 (CN)
(72) Inventor: ZHAO, Fenggang, Ningde, Fujian 352100 (CN); ZHAO, Yan, Ningde, Fujian 352100 (CN); HUANG, Caixia, Ningde, Fujian 352100 (CN); DUAN, Xinghui, Ningde, Fujian 352100 (CN)
(74) Representative: Kraus & Lederer PartGmbB
(86) International application number: PCT/CN2025/084796
(87) International publication number: WO 2026/199179

(57) **Abstract**

The present application discloses a battery cell, a battery apparatus, and an electric apparatus. The battery cell includes a housing, an end cover, a support member, and at least one electrode assembly. The housing accommodates an electrolyte. The end cover is disposed to cover an opening of the housing, and the housing includes a first wall. At least a part of the electrode assembly is accommodated within the housing, the electrode assembly includes a first electrode plate, the electrode assembly has a first end surface facing the first wall, and an end portion of the first electrode plate is disposed facing the first end surface. At least a part of the support member is located between the first end surface and the first wall and is in contact with the first end surface, the support member is provided with at least one accommodating groove, and the accommodating groove has a first opening disposed facing the first end surface.

## Description

### TECHNICAL FIELD

The present application pertains to the field of battery technology, and more particularly, to a battery cell, a battery apparatus, and an electric apparatus.

### BACKGROUND

Energy conservation and emission reduction are key to the sustainable development of the automotive industry. In this context, electric vehicles have become an important component of the sustainable development of the automotive industry due to their advantages in energy saving and environmental protection. For electric vehicles, battery technology-particularly the support member and electrode assembly-is a critical factor related to their development.

In the development of battery technologies, the cycle performance of a battery is an important indicator of the battery cell. If the cycle performance of a battery cannot be guaranteed, it severely impacts the battery usability. Therefore, how to enhance the cycle performance of a battery is a technical issue that urgently needs to be addressed in battery technologies.

The above statements are provided solely for background information related to the present application and do not necessarily constitute prior art.

### SUMMARY

An objective of embodiments of the present application is to provide a battery cell, a battery apparatus, and an electric apparatus, which are beneficial for improving the cycle performance of the battery cell.

The technical solutions adopted by the embodiments of the present application are as follows.

According to a first aspect, a battery cell is provided, including a housing, an end cover, a support member, and at least one electrode assembly. The housing accommodates an electrolyte. The end cover is disposed to cover an opening of the housing, and the housing includes a first wall. At least a part of the electrode assembly is accommodated within the housing, the electrode assembly includes a first electrode plate, the electrode assembly has a first end surface facing the first wall, and an end portion of the first electrode plate is disposed facing the first end surface. At least a part of the support member is located between the first end surface and the first wall and is in contact with the first end surface, the support member is provided with at least one accommodating groove, and the accommodating groove has a first opening disposed facing the first end surface.

With the adoption of the technical solution of the embodiments, at least a part of the electrode assembly is located within the housing, and the housing accommodates an electrolyte; the end cover is disposed to cover the opening of the housing to seal the housing, the housing has a first wall, the electrode assembly includes a first electrode plate, the electrode assembly has a first end surface facing the first wall, the end portion of the first electrode plate is disposed facing the first end surface, the support member is located between the first end surface and the first wall, the support member is in contact with the first end surface, and the accommodating groove of the support member has a first opening facing the first end surface. In this way, the electrolyte accommodated in the accommodating groove may flow to the first end surface of the electrode assembly through the first opening, thereby wetting the end portion of the first electrode plate, reducing the difficulty of wetting the end portion of the first electrode plate, improving the wetting effect of the first electrode plate, improving the wetting effect of the electrode assembly, and enhancing the cycle performance of the battery cell.

In some embodiments, the first end surface of at least one electrode assembly covers the first opening of at least one accommodating groove.

With the adoption of the technical solution of the embodiments, the first end surface can cover the first opening, such that the electrolyte may directly flow to the first end surface through the first opening, thereby wetting the end portion of the first electrode plate, improving the wetting effect of the end portion of the first electrode plate, improving the wetting effect of the first electrode plate, and improving the cycle performance of the battery cell.

In some embodiments, two electrode assemblies are provided, and an arrangement direction of the two electrode assemblies is perpendicular to a thickness direction of the support member; and the first end surfaces of the two electrode assemblies cover the first openings of all the accommodating grooves.

With the adoption of the technical solution of the embodiments, all the first grooves can supply the electrolyte to the electrode assemblies within the battery cell, which is beneficial for improving the wetting effect of the electrode assemblies and enhancing the cycle performance of the battery cell.

In some embodiments, the electrode assembly includes a flat portion, a part of the first electrode plate located in the flat portion includes a first electrode plate layer, a plurality of first electrode plate layers are provided, and the plurality of first electrode plate layers are stacked in a first direction; at least a part of the accommodating groove is a first groove, and the first groove extends in the first direction.

With the adoption of the technical solution of the embodiments, the first grooves extend in a stacking direction of the plurality of first electrode plate layers, which facilitates the flow of the electrolyte accommodated in the first grooves to the plurality of first electrode plate layers, thereby wetting the plurality of first electrode plate layers, improving the overall wetting effect of the electrode assembly, and enhancing the cycle performance of the battery cell.

In some embodiments, at least one first groove spans at least two adjacent first electrode plate layers in the first direction.

With the adoption of the technical solution of the embodiments, the first groove can supply the electrolyte to at least two adjacent first electrode plate layers, thereby wetting a plurality of first electrode plate layers, which is beneficial for improving the overall wetting effect of the electrode assembly and enhancing the cycle performance of the battery cell.

In some embodiments, the support member includes a plurality of first branch portions arranged along a second direction, and at least one first groove is formed between two adjacent first branch portions; and the second direction is perpendicular to the first direction and the thickness direction of the support member.

With the adoption of the technical solution of the embodiments, the support member adopts a structure with a plurality of first branch portions arranged in the second direction, which is simple in structure and convenient to process and manufacture.

In some embodiments, the support member further includes a connecting portion, the plurality of first branch portions are spaced apart in the second direction, and two adjacent first branch portions are connected through the connecting portion.

With the adoption of the technical solution of the embodiments, two adjacent first branch portions are connected through the connecting portion, which can increase the structural strength of the support member and is beneficial for improving the reliability of use of the battery cell.

In some embodiments, two ends of the connecting portion are respectively connected to a middle portion of a respective one of two adjacent first branch portions; and two first grooves are formed between two adjacent first branch portions, and the two first grooves are respectively located on two opposite sides of the connecting portion in the first direction.

With the adoption of the technical solution of the embodiments, the connecting portion is connected to the middle portions of two first branch portions, forming two first grooves, the two first grooves are spaced apart in the first direction, and the electrolyte flows to both sides of the electrode assembly within the battery cell through the first grooves on two opposite sides of the support member in the first direction, which is beneficial for improving the wetting effect of the electrode assembly and enhancing the cycle performance of the battery cell.

In some embodiments, the support member has a first side surface and a second side surface distributed oppositely in the first direction, a distance between at least one connecting portion and the first side surface is not equal to a distance between the connecting portion and the second side surface; and/or, two of the first grooves located on two opposite sides of a same connecting portion in the first direction have unequal dimensions in the first direction.

With the adoption of the technical solution of the embodiments, at least one connecting portion may not be located in the central region of the support member in the first direction, such that the first groove may extend to the central region of the electrode assembly within the battery cell in the first direction, thereby supplying electrolyte to the central region of the electrode assembly within the battery cell in the first direction, improving the wetting effect in the central region of the electrode assembly within the battery cell in the first direction, improving the wetting effect of the electrode assembly, and enhancing the cycle performance of the battery cell.

In some embodiments, a plurality of connecting portions are provided, the plurality of connecting portions include at least one first connecting portion and at least one second connecting portion; the support member has a first side surface, and the first side surface is located on one side of the support member in the first direction; and distances between all the first connecting portions and the first side surface are not equal to distances between all the second connecting portions and the first side surface.

With the adoption of the technical solution of the embodiments, the distances between all the first connecting portions and the first side surface are not equal to the distances between all the second connecting portions and the first side surface, such that the first connecting portions and the second connecting portions are arranged in an offset configuration, which can distribute the pressure of the electrode assembly on the support member, reduce stress concentration in the support member, reduce the risk of deformation of the support member, and improve the reliability of use of the battery cell.

In some embodiments, the support member has a central axis, the central axis is parallel to the second direction; and at least one first connecting portion is located on one side of the central axis in the first direction, and at least one second connecting portion is located on another side of the central axis in the first direction.

With the adoption of the technical solution of the embodiments, the first connecting portions and the second connecting portions are respectively distributed on two opposite sides of the support member in the first direction, such that both opposite side portions of the support member in the first direction have good structural strength and can effectively distribute the pressure of the electrode assembly on the support member, reducing stress concentration in the support member, reducing the risk of deformation of the support member, and improving the reliability of use of the battery cell.

In some embodiments, a plurality of first connecting portions are provided, and the plurality of first connecting portions are distributed in a straight line in the second direction; and/or, a plurality of second connecting portions are provided, and the plurality of second connecting portions are distributed in a straight line in the second direction.

With the adoption of the technical solution of the embodiments, the plurality of connecting portions are regularly distributed, making the processing and manufacturing of the support member simple and convenient. In addition, the pressure of the electrode assembly on the support member can be effectively distributed, reducing stress concentration in the support member, reducing the risk of deformation of the support member, and improving the reliability of use of the battery cell.

In some embodiments, a plurality of first connecting portions are provided, a plurality of second connecting portions are provided, and the plurality of first connecting portions and the plurality of second connecting portions are alternately distributed in the second direction.

With the adoption of the technical solution of the embodiments, the plurality of first connecting portions and the plurality of second connecting portions are alternately distributed in the second direction, making the distribution of the connecting portions more dispersed, which is beneficial for distributing the pressure of the electrode assembly on the support member, reducing stress concentration in the support member, reducing the risk of deformation of the support member, and improving the reliability of use of the battery cell.

In some embodiments, a plurality of connecting portions are provided, and the plurality of connecting portions are distributed in a straight line in the second direction.

With the adoption of the technical solution of the embodiments, the structure of the support member is regular, making processing and manufacturing simple.

In some embodiments, the support member has a first side surface and a second side surface distributed oppositely in the first direction, a distance between at least one connecting portion and the first side surface is equal to a distance between the connecting portion and the second side surface; and/or, two of the first grooves located on two opposite sides of a same connecting portion in the first direction have equal dimensions in the first direction.

With the adoption of the technical solution of the embodiments, the first grooves on two opposite sides of a same connecting portion have equal dimensions in the first direction, such that two opposite sides of the electrode assembly within the battery cell in the first direction can achieve good wetting, which is beneficial for improving the cycle performance of the battery cell.

In some embodiments, at least two first grooves located on the same side of the connecting portion and arranged in the second direction have different dimensions in the first direction.

With the adoption of the technical solution of the embodiments, a notch may be formed on one side of the support member in the first direction, the notch may accommodate the electrolyte, and the electrolyte accommodated in the notch may directly wet the electrode assembly, which is beneficial for improving the cycle performance of the battery cell.

In some embodiments, at least three first grooves located on a same side of the connecting portion and arranged in the second direction have dimensions in the first direction that gradually increase; and/or, another at least three first grooves located on a same side of the connecting portion and arranged in the second direction have dimensions that gradually decrease in the first direction.

With the adoption of the technical solution of the embodiments, a notch may be formed on one side of the support member in the first direction, the notch may accommodate the electrolyte, and the electrolyte accommodated in the notch may directly wet the electrode assembly, which is beneficial for improving the cycle performance of the battery cell.

In some embodiments, at least three consecutively arranged first grooves located on a same side of the connecting portion and arranged in the second direction have dimensions in the first direction that first decrease and then increase.

With the adoption of the technical solution of the embodiments, a V-shaped notch may be formed on one side of the support member in the first direction, the V-shaped notch may accommodate the electrolyte, and the electrolyte accommodated in the V-shaped notch may directly wet the electrode assembly, which is beneficial for improving the cycle performance of the battery cell. In addition, the structural strength of the support member can be effectively ensured, which is beneficial for improving the reliability of use of the battery cell.

In some embodiments, two adjacent first branch portions are connected to a same side of the connecting portion in the first direction and form one first groove.

With the adoption of the technical solution of the embodiments, the support member has a simple structure and is convenient to process and manufacture. In addition, the connecting portion is located at an end portion of the first branch portion, and the first groove can extend from one side of the electrode assembly within the battery cell to the other side in the first direction, which is beneficial for guiding the electrolyte to wet the central region of the electrode assembly within the battery cell, improving the cycle performance of the battery cell.

In some embodiments, a plurality of first grooves are provided, the plurality of first grooves are arranged in the second direction, and at least two first grooves have equal dimensions in the first direction.

With the adoption of the technical solution of the embodiments, the structure of the support member is regular and simple, making processing and manufacturing convenient.

In some embodiments, the support member further includes a plurality of second branch portions spaced apart in the second direction, two adjacent second branch portions are connected to a side of the connecting portion facing away from the first branch portions, and one first groove is formed between two adjacent second branch portions.

With the adoption of the technical solution of the embodiments, the support member is provided with first grooves on two opposite sides in the first direction, and the electrolyte can wet the corresponding two opposite sides of the electrode assembly within the battery cell through the first grooves on two opposite sides of the support member, which is beneficial for improving the cycle performance of the battery cell.

In some embodiments, in the first direction, a projection of at least one first branch portion does not completely overlap with projections of all second branch portions.

With the adoption of the technical solution of the embodiments, the first branch portions and the second branch portions are distributed in an offset configuration, which is beneficial for distributing the pressure of the electrode assembly on the support member, improving the uniformity of force on the connecting portion, reducing stress concentration, reducing the risk of deformation of the support member, and improving the reliability of use of the battery cell.

In some embodiments, in the second direction, a plurality of first branch portions and a plurality of second branch portions are alternately distributed.

With the adoption of the technical solution of the embodiments, the first branch portions and the second branch portions are distributed in an offset configuration and dispersed on two sides of the support member, effectively distributing the pressure of the electrode assembly on the support member, improving the uniformity of force on the connecting portion, reducing stress concentration, reducing the risk of deformation of the support member, and improving the reliability of use of the battery cell.

In some embodiments, in the first direction, at least one first groove has a dimension in the second direction that first decreases and then increases.

With the adoption of the technical solution of the embodiments, the first groove may form a Laval-type nozzle structure, and during the process of the electrolyte flowing into the first groove from an opening of the first groove facing away from the connecting portion and moving toward the connecting portion, the flow area of the electrolyte first gradually decreases, the flow velocity of the electrolyte increases, and the static pressure decreases; and after the electrolyte passes through the section of the first groove with the minimum flow area, the flow velocity of the electrolyte further increases, improving the flow efficiency of the electrolyte into the electrode assembly, improving the wetting effect of the electrode assembly, and enhancing the cycle performance of the battery cell.

In some embodiments, two adjacent first branch portions are arranged at an angle to each other.

With the adoption of the technical solution of the embodiments, two adjacent first branch portions are arranged at an angle to each other, and the support force of the support member on the electrode assembly may be distributed obliquely along the first branch portions, which is beneficial for distributing the support force and improving the reliability of use of the battery cell.

In some embodiments, the support member further includes a plurality of second branch portions spaced apart in the second direction, two adjacent second branch portions are connected to a side of the connecting portion facing away from the first branch portions, and two adjacent second branch portions are arranged at an angle to each other and form one first groove.

With the adoption of the technical solution of the embodiments, two adjacent second branch portions are arranged at an angle to each other, and the support force of the support member on the electrode assembly may be distributed obliquely along the second branch portions, which is beneficial for distributing the support force and improving the reliability of use of the battery cell.

In some embodiments, a plurality of first branch portions are sequentially connected in the second direction, and two adjacent first branch portions are arranged at an angle to each other and form one first groove.

With the adoption of the technical solution of the embodiments, two adjacent first branch portions are arranged at an angle to each other, and the support force of the support member on the electrode assembly may be distributed obliquely along the first branch portions, which is beneficial for distributing the support force and improving the reliability of use of the battery cell.

In some embodiments, the electrode assembly includes a flat portion, a part of the first electrode plate located in the flat portion includes a first electrode plate layer, a plurality of first electrode plate layers are provided, the plurality of first electrode plate layers are stacked in a first direction, and the second direction is perpendicular to the first direction and the thickness direction of the support member. At least a part of the accommodating groove is a first groove, and the first groove extends in the second direction.

With the adoption of the technical solution of the embodiments, the first grooves extend in a direction perpendicular to the stacking direction of the plurality of first electrode plate layers and the thickness direction of the support member, such that the first grooves can extend in a length direction of the first electrode plate layers, allowing the electrolyte accommodated in the first grooves to effectively wet the first electrode plate layers, improving the wetting effect of the electrode assembly, and enhancing the cycle performance of the battery cell.

In some embodiments, the support member includes a connecting portion and a plurality of first branch portions that are spaced apart in the first direction, two ends of the connecting portion are respectively connected to a middle portion of a respective one of two adjacent first branch portions; and two first grooves are formed between two adjacent first branch portions, and the two first grooves are respectively located on two opposite sides of the connecting portion in the second direction.

With the adoption of the technical solution of the embodiments, two adjacent first branch portions are connected through the connecting portion, which can increase the structural strength of the support member and is beneficial for improving the reliability of use of the battery cell. In addition, the support member has a simple structure and is convenient to process and manufacture.

In some embodiments, the support member has a third side surface and a fourth side surface distributed oppositely in the second direction, a distance between at least one connecting portion and the third side surface is equal to a distance between the connecting portion and the fourth side surface; and/or, two first grooves located on two opposite sides of a same connecting portion in the second direction have equal dimensions in the second direction.

With the adoption of the technical solution of the embodiments, the first grooves on two opposite sides of the same connecting portion have equal dimensions in the second direction, such that two opposite sides of the electrode assembly within the battery cell in the second direction can achieve good wetting, which is beneficial for improving the cycle performance of the battery cell.

In some embodiments, a plurality of connecting portions are provided, and the plurality of connecting portions are distributed in a straight line in the first direction.

With the adoption of the technical solution of the embodiments, the structure of the support member is regular, making processing and manufacturing simple.

In some embodiments, in a direction perpendicular to an extending direction of the first groove and the thickness direction of the support member, a dimension of the first groove ranges from 0.5 mm to 30 mm.

With the adoption of the technical solution of the embodiments, the support member has good structural strength to effectively support the electrode assembly, and the first groove can accommodate a sufficient amount of electrolyte to wet the electrode assembly. In addition, when the first groove extends through a side surface of the support member, the electrolyte can flow into the electrode assembly at an appropriate flow rate, improving the cycle performance of the battery cell.

In some embodiments, in the thickness direction of the support member, a dimension of the first groove ranges from 0.1 mm to 3 mm.

With the adoption of the technical solution of the embodiments, the first groove can accommodate a sufficient amount of electrolyte to wet the electrode assembly, and also facilitates the reasonable design of the thickness of the support member, which is beneficial for improving the energy density of the battery cell.

In some embodiments, the support member has a first surface and a second surface oppositely disposed in its thickness direction and a side surface connected between the first surface and the second surface, the first surface faces the first end surface, the second surface faces away from the first end surface, the first opening is located on the first surface, and at least one accommodating groove extends through the side surface and forms a second opening.

With the adoption of the technical solution of the embodiments, the provision of the second opening allows the electrolyte outside the support member and the electrode assembly to flow into the accommodating groove through the second opening, and then flow to the first end surface through the accommodating groove and the first opening, effectively improving the wetting effect of the electrode assembly and enhancing the cycle performance of the battery cell.

In some embodiments, at least one side portion of the first end surface protrudes beyond the side surface and forms an accommodating space, and the second opening is in communication with the accommodating space.

With the adoption of the technical solution of the embodiments, the electrolyte located in the accommodating space may enter the accommodating groove through the second opening, and then flow to the end portion of the first electrode plate through the accommodating groove and the first opening, improving the wetting effect of the first electrode plate and enhancing the cycle performance of the battery cell.

In some embodiments, at least one end of at least one accommodating groove in the first direction extends through the side surface and forms the second opening, and the first direction is a width direction of the support member.

With the adoption of the technical solution of the embodiments, the electrolyte may enter the accommodating groove through the second opening formed by the accommodating groove on the side surface, and then flow to the first end surface along the accommodating groove, thereby wetting the first electrode plate, improving the wetting effect of the first electrode plate, and enhancing the cycle performance of the battery cell.

In some embodiments, a width of the support member is denoted as W, and a total dimension of all the electrode assemblies in the first direction is denoted as T₁, where 0.9 ≤ W/T₁ < 1.

With the adoption of the technical solution of the embodiments, in the first direction, the electrode assembly protrudes beyond two opposite sides of the support member, and the two opposite sides of the support member may form an accommodating space, the electrolyte in the accommodating space may flow into the accommodating groove through the second opening, and then flow to the first end surface through the accommodating groove, thereby wetting the first electrode plate, improving the wetting effect of the first electrode plate, and enhancing the cycle performance of the battery cell. In addition, the support member can effectively support the electrode assembly, improving the reliability of use of the battery cell.

In some embodiments, at least one end of at least one accommodating groove in the second direction extends through the side surface and forms the second opening, and the second direction is a length direction of the support member.

With the adoption of the technical solution of the embodiments, the electrolyte may enter the accommodating groove through the second opening formed by the accommodating groove on the side surface, and then flow to the first end surface along the accommodating groove, thereby wetting the first electrode plate, improving the wetting effect of the first electrode plate, and enhancing the cycle performance of the battery cell.

In some embodiments, in the second direction, a dimension of the electrode assembly is denoted as L₁, and a length of the support member is denoted as L₂, where 0.95 ≤ L₂/L₁ < 1.

With the adoption of the technical solution of the embodiments, in the second direction, the electrode assembly protrudes beyond two opposite sides of the support member, and the two opposite sides of the support member may form an accommodating space, the electrolyte in the accommodating space may flow into the accommodating groove through the second opening, and then flow to the first end surface through the accommodating groove, thereby wetting the first electrode plate, improving the wetting effect of the first electrode plate, and enhancing the cycle performance of the battery cell. In addition, the support member can effectively support the electrode assembly, improving the reliability of use of the battery cell.

In some embodiments, in the first direction, end portions of two adjacent first branch portions on a same side are connected with the connecting portion, and end portions of two adjacent first branch portions on another side are connected with the connecting portion.

With the adoption of the technical solution of the embodiments, two opposite ends of two adjacent first branch portions in the first direction are each connected with a connecting portion, improving the structural strength of the support member, which is beneficial for improving the reliability of use of the battery cell.

In some embodiments, the support member has a first surface and a second surface oppositely disposed in its thickness direction, the first surface faces the first end surface, the second surface faces away from the first end surface, the first opening is located on the first surface, and at least one accommodating groove extends through the second surface and forms a third opening.

With the adoption of the technical solution of the embodiments, the electrolyte may flow into the accommodating groove from the third opening, improving the wetting effect of the electrode assembly, which is beneficial for improving the cycle performance of the battery cell.

In some embodiments, the battery cell includes a first insulating member, at least a part of the first insulating member being located within the housing, where the first insulating member has a receiving space, the support member and at least a part of the electrode assembly are located in the receiving space, and the first insulating member has a first through hole communicating the receiving space with an exterior of the first insulating member.

With the adoption of the technical solution of the embodiments, the electrolyte may enter the receiving space through the first through hole to wet the electrode assembly, which is beneficial for improving the wetting effect of the electrode assembly and enhancing the cycle performance of the battery cell. In addition, the support member is located within the first insulating member and is provided with an accommodating groove, a larger amount of electrolyte accumulates in the accommodating groove and the space at the side of the support member, and the electrolyte in the accommodating groove wets the electrode assembly through the first opening, improving the wetting performance of the electrode assembly and enhancing the cycle performance of the battery cell.

In some embodiments, the first insulating member has a second wall, at least a part of the second wall being located between the support member and the first wall, where the second wall is provided with the first through hole, and the first through hole extends through the second wall in the thickness direction of the support member; and in the thickness direction of the support member, a projection of the first through hole does not coincide with projections of all the third openings.

With the adoption of the technical solution of the embodiments, the first through hole extends through the second wall, allowing the electrolyte outside the first insulating member to enter the first insulating member through the first through hole, thereby wetting the electrode assembly and improving the cycle performance of the battery cell; and the third openings and the first through hole are arranged in an offset configuration, such that the second wall can block active material falling from the electrode assembly, reducing the risk of the fallen active material contacting the first wall, reducing the risk of corrosion of the housing by the fallen active material, and improving the reliability of use of the battery cell.

In some embodiments, the support member further includes a substrate, a plurality of first branch portions are spaced apart in the second direction, the substrate is located between the first end surface and the first wall, and the plurality of first branch portions are connected to a surface of the substrate facing the first end surface.

With the adoption of the technical solution of the embodiments, the provision of the substrate can increase the structural strength of the support member, improving the reliability of use of the battery cell. In addition, the substrate can also close an opening of the first groove facing away from the electrode assembly to block active material falling from the electrode assembly from passing through the support member, reducing issues such as electrochemical corrosion of the housing, which is also beneficial for improving the structural reliability of the battery cell.

In some embodiments, the support member includes a connecting portion, two ends of the connecting portion are connected to middle portions of two adjacent first branch portions; two first grooves are formed between two adjacent first branch portions, and the two first grooves are respectively located on two opposite sides of the connecting portion in the first direction.

In some embodiments, at least a part of a surface of at least one first branch portion facing the first end surface is an arcuate surface.

With the adoption of the technical solution of the embodiments, the provision of the arcuate surface can reduce the contact area between the first end surface and the support member and increase the contact area between the electrolyte in the accommodating groove and the first end surface, improving the wetting effect of the electrode assembly, and enhancing the cycle performance of the battery cell.

In some embodiments, at least a part of a surface of at least one connecting portion facing the first end surface is an arcuate surface.

With the adoption of the technical solution of the embodiments, the provision of the arcuate surface can reduce the contact area between the first end surface and the support member and increase the contact area between the electrolyte in the accommodating groove and the first end surface, improving the wetting effect of the electrode assembly, and enhancing the cycle performance of the battery cell.

In some embodiments, at least one end of the support member in the second direction is provided with a second through hole, the second through hole extends through the support member in the thickness direction of the support member, and the first branch portion is provided with the second through hole; and/or, the connecting portion is provided with the second through hole.

With the adoption of the technical solution of the embodiments, the provision of the second through hole enables the utilization of differences in shape, position, and other aspects of the second through hole to distinguish two ends of the support member in the second direction, facilitating the assembly of the first insulating member.

In some embodiments, the support member further includes a substrate and a plurality of spaced-apart protruding portions; where the substrate is located between the first end surface and the first wall, the plurality of protruding portions are connected to a surface of the substrate facing the first end surface, and the plurality of protruding portions and the substrate form at least one accommodating groove.

With the adoption of the technical solution of the embodiments, the support member adopts a structure of a substrate and protruding portions, where the protruding portions support the electrode assembly, which is beneficial for reducing the contact area between the support member and the electrode assembly, improving the wetting effect of the electrode assembly, and enhancing the cycle performance of the battery cell; and the support member can form interconnected accommodating grooves, which is beneficial for improving the wetting effect of the electrode assembly and enhancing the cycle performance of the battery cell. In addition, the support member has a simple structure and is convenient to process and manufacture.

In some embodiments, a plurality of accommodating grooves are provided, and the plurality of protruding portions are arranged in a matrix and form a plurality of accommodating grooves arranged in a crisscross pattern.

With the adoption of the technical solution of the embodiments, the support member forms a plurality of accommodating grooves arranged in a crisscross pattern. The plurality of accommodating grooves arranged in a crisscross pattern are beneficial for improving the wetting effect of the electrode assembly and enhancing the cycle performance of the battery cell. In addition, the support member has a simple structure and is convenient to process and manufacture.

In some embodiments, at least a part of a surface of at least one protruding portion facing the first end surface is an arcuate surface.

With the adoption of the technical solution of the embodiments, a surface of the protruding portion facing away from the substrate may be an arcuate surface, so as to increase the contact area between the electrolyte and the first end surface, improving the wetting effect of the electrode assembly and enhancing the cycle performance of the battery cell.

In some embodiments, in the thickness direction of the support member, a dimension of the substrate ranges from 0.1 mm to 1 mm.

With the adoption of the technical solution of the embodiments, the support member has good structural strength to effectively support the electrode assembly. In addition, the substrate occupies a small space, which is beneficial for improving the volumetric energy density of the battery cell.

In some embodiments, a thickness of the support member ranges from 0.1 mm to 3 mm.

With the adoption of the technical solution of the embodiments, the support member has good structural strength to effectively support the electrode assembly. In addition, the support member occupies a small space, which is beneficial for improving the volumetric energy density of the battery cell.

In some embodiments, the support member has a first surface, the first surface faces the first end surface, and the first opening is located on the first surface. An area of the first surface is denoted as S₁, and a total area of the first openings of all the accommodating grooves is denoted as S₂, where 0.1 ≤ S₂/(S₁+S₂) ≤ 0.8; optionally, 0.4 ≤ S₂/(S₁+S₂) ≤ 0.7.

With the adoption of the technical solution of the embodiments, the support member can effectively support the electrode assembly, and the accommodating grooves can accommodate a sufficient amount of electrolyte or allow the electrolyte to flow into the electrode assembly at a good flow rate through the accommodating grooves, improving the wetting effect of the electrode assembly and enhancing the cycle performance of the battery cell.

In some embodiments, the support member is an insulating component.

With the adoption of the technical solution of the embodiments, the support member can insulate and separate the first wall from the electrode assembly, reducing the risk of a short circuit in the battery cell and improving the reliability of use of the battery cell.

In some embodiments, the battery cell includes a first insulating member, at least a part of the first insulating member being located within the housing, where the first insulating member has a receiving space, the support member and at least a part of the electrode assembly are located in the receiving space, the first insulating member has a second wall, at least a part of the second wall is located between the support member and the first wall, and the support member and the second wall are an integral structure.

With the adoption of the technical solution of the embodiments, the second wall of the first insulating member and the support member are integrally formed, which can save manufacturing processes and improve production efficiency.

In some embodiments, the battery cell has a third through hole, and the third through hole extends through the support member and the second wall in the thickness direction of the support member.

With the adoption of the technical solution of the embodiments, the electrolyte outside the first insulating member may directly wet the electrode assembly through the third through hole, improving the wetting effect of the electrode assembly and enhancing the cycle performance of the battery cell.

In some embodiments, the battery cell includes a first insulating member, at least a part of the first insulating member being located within the housing, where the first insulating member has a receiving space, and the support member and at least a part of the electrode assembly are located in the receiving space.

With the adoption of the technical solution of the embodiments, the first insulating member can insulate and separate the electrode assembly from the housing, which is beneficial for improving the reliability of use of the battery cell.

In some embodiments, the battery cell includes a second insulating member, at least a part of the second insulating member being located on a side of the end cover facing the electrode assembly, where the first insulating member is connected to the second insulating member.

With the adoption of the technical solution of the embodiments, the second insulating member can insulate and separate the electrode assembly from the end cover, reducing the risk of a short circuit in the electrode assembly and improving the reliability of use of the battery cell.

In some embodiments, the battery cell includes an electrode terminal and a second insulating member, where the electrode terminal is disposed on the end cover, the electrode terminal is electrically connected to the electrode assembly, at least a part of the second insulating member is located on a side of the end cover facing the electrode assembly, and the second insulating member insulates and separates the electrode terminal from the end cover.

With the adoption of the technical solution of the embodiments, the second insulating member can insulate and separate the electrode assembly from the end cover as well as the end cover from the electrode terminal, reducing the risk of a short circuit in the battery cell and improving the reliability of use of the battery cell.

In some embodiments, the housing is an insulating housing.

With the adoption of the technical solution of the embodiments, the insulating housing itself has insulating properties, enabling insulation between the housing and the electrode assembly. This is beneficial for eliminating the need for the first insulating member and improving the energy density of the battery cell.

In some embodiments, an inner wall of the housing is covered with an insulating coating.

With the adoption of the technical solution of the embodiments, the insulating coating can insulate and separate the housing from the electrode assembly, which is beneficial for eliminating the need for the first insulating member and improving the energy density of the battery cell.

In some embodiments, the housing includes an integrally formed peripheral wall and an end wall, where the peripheral wall is connected to a periphery of the end wall, the end cover is hermetically connected to an opening of the peripheral wall facing away from the end wall, and the end wall forms the first wall.

With the adoption of the technical solution of the embodiments, the housing includes an integrally formed peripheral wall and end wall, which can reduce the risk of electrolyte leakage between the peripheral wall and the end wall and is beneficial for improving the sealing performance of the battery cell. In addition, the housing has an opening on one side, and the support member and the end cover are located on two opposite sides of the electrode assembly, facilitating the insertion of the electrode assembly and the support member into the housing.

With the adoption of the technical solution of the embodiments, under its own weight, the electrolyte accumulates at the bottom of the housing and in the accommodating groove of the support member, and the first opening of the accommodating groove is disposed facing the first end surface, such that the accumulated electrolyte can wet the bottom of the first electrode plate and wick upward along the first electrode plate, which is beneficial for overcoming limitations in the height direction and charge rate of the battery cell, enabling the battery cell to have higher energy density and cycle performance.

In some embodiments, along the direction of gravity, the bottom wall of the housing forms the first wall.

With the adoption of the technical solution of the embodiments, under its own weight, the electrolyte accumulates at the bottom of the housing and in the accommodating groove of the support member, and the first opening of the accommodating groove is disposed facing the first end surface, such that the accumulated electrolyte can wet the bottom of the first electrode plate and wick upward along the first electrode plate, which is beneficial for overcoming limitations in the height direction and charge rate of the battery cell, enabling the battery cell to have higher energy density and cycle performance.

In some embodiments, the electrode assembly includes a second electrode plate and a separator, and the first electrode plate and the second electrode plate have different polarities; where a part of the separator is located between the first electrode plate and the second electrode plate, an end portion of the separator facing the support member extends beyond the first electrode plate and the second electrode plate, and the end portion of the separator facing the support member is bent to form a stacked structure and the first end surface.

With the adoption of the technical solution of the embodiments, the support member is provided with an accommodating groove, and the stacked structure at positions opposite to the first opening is not subjected to pressure, making these positions of the stacked structure that are not under pressure relatively loose. This allows the electrolyte to flow to the first electrode plate and the second electrode plate through the loose portions of the stacked structure, thereby improving the wetting effect of the electrode assembly and enhancing the cycle performance of the battery cell. In addition, the electrolyte can also directly pass through the end portion of the separator extending beyond the first electrode plate and the second electrode plate and flow to the first electrode plate and the second electrode plate, improving the wetting effect of the first electrode plate and the second electrode plate, and enhancing the cycle performance of the battery cell. The end portion of the separator facing the support member extends beyond between the first electrode plate and the second electrode plate, enabling the separator to insulate and separate the end portions of the first electrode plate and the second electrode plate near the support member from each other, reducing the risk of a short circuit in the electrode assembly, and improving the reliability of use of the battery cell.

In some embodiments, the electrode assembly includes a flat portion, a part of the first electrode plate located in the flat portion includes a first electrode plate layer, a part of the second electrode plate located in the flat portion includes a second electrode plate layer, and a part of the separator located in the flat portion includes a separator layer; and a plurality of first electrode plate layers, the second electrode plate layers, and the separator layers are provided; where each separator layer includes a main body portion and a bent portion, at least a part of the main body portion is located between the first electrode plate layer and the second electrode plate layer that are adjacent, an end portion of the main body portion facing the support member is connected to the bent portion, the bent portion is entirely located outside the corresponding adjacent first electrode plate layer and first electrode plate layer, and the bent portion is bent relative to the main body portion; and the bent portions of two adjacent separator layers are stacked, and a gap is formed between the bent portions of two adjacent separator layers.

With the adoption of the technical solution of the embodiments, the electrolyte may flow to the first electrode plate and the second electrode plate through the gap between the bent portions of two adjacent separator layers, improving the wetting effect of the electrode assembly. In addition, the support member is provided with an accommodating groove, and a position of the bent portion opposite the first opening is suspended, making the bent portions of two adjacent separator layers relatively loose at the suspended position, such that the gap between the bent portions of two adjacent separator layers has a larger space at the suspended position, allowing the electrolyte to quickly flow to the first electrode plate and the second electrode plate through this space, thereby effectively improving the wetting effect of the electrode assembly and enhancing the cycle performance of the battery cell.

In some embodiments, portions of the bent portions of two adjacent separator layers are arranged in an offset configuration.

With the adoption of the technical solution of the embodiments, in the bent portions of two adjacent separator layers, the electrolyte may directly enter between the bent portions of two adjacent separator layers from a part of the bent portion of one separator layer that is not covered by the bent portion of another separator layer, reducing the difficulty of the electrolyte flowing to the first electrode plate or the second electrode plate, improving the wetting effect of the electrode assembly, and enhancing the cycle performance of the battery cell.

In some embodiments, a part of the bent portion of at least one separator layer away from an end portion of the main body portion is located in a corresponding accommodating groove.

With the adoption of the technical solution of the embodiments, the electrolyte may directly enter between the bent portions of two adjacent separator layers through the end portion of the bent portion away from the main body portion, allowing the electrolyte to flow to the first electrode plate or the second electrode plate more quickly, thereby improving the wetting effect of the electrode assembly and enhancing the cycle performance of the battery cell.

In some embodiments, the electrode assembly is a wound structure, and a tab is led out from an end portion of the electrode assembly facing away from the first wall; or, the electrode assembly is a laminated structure, and a tab is led out from at least one side portion of the electrode assembly, other than a side portion near the first wall.

With the adoption of the technical solution of the embodiments, the tab and the support member are located on two opposite sides of the electrode assembly, which can reduce the influence of the tab on the flow of the electrolyte to the first electrode plate and is beneficial for improving the cycle performance and usability of the battery cell.

In some embodiments, the battery cell is a lithium iron phosphate battery cell, and in the thickness direction of the support member, a dimension of the battery cell ranges from 100 mm to 400 mm; or, the battery cell is a ternary lithium battery cell, and in the thickness direction of the support member, a dimension of the battery cell ranges from 100 mm to 300 mm.

With the adoption of the technical solution of the embodiments, in the thickness direction of the support member, the dimension of the battery cell is set within the above range, and the large dimension of the battery cell in the thickness direction of the support member is beneficial for improving the energy density of the battery cell. The electrode assembly within the battery cell has a large dimension in the thickness direction of the support member, making it difficult for the electrolyte to flow to an end portion of the electrode assembly facing away from the support member, limiting the performance of the battery cell. The support member in the embodiments of the present application is provided with an accommodating groove that can supply the electrolyte to the electrode assembly of the battery cell, enhancing the wicking ability of the electrolyte in the thickness direction of the support member, and improving the cycle performance of the battery cell.

According to a second aspect, a battery apparatus is provided, including a plurality of battery cells as described above.

The battery apparatus in embodiments of the present application adopts the above battery cell. The battery cell has good cycle performance, which is beneficial for improving the usability and service life of the battery apparatus.

In some embodiments, in the battery apparatus, in the direction of gravity, the bottom wall of the housing forms the first wall.

With the adoption of the technical solution of the embodiments, in the battery apparatus, under its own weight, the electrolyte accumulates at the bottom of the housing and in the accommodating groove of the support member, and the first opening of the accommodating groove is disposed facing the first end surface, such that the accumulated electrolyte can wet the bottom of the first electrode plate and wick upward along the first electrode plate, which is beneficial for overcoming limitations in the height direction and charge rate of the battery cell, enabling the battery cell to have higher energy density and cycle performance.

According to a third aspect, an electric apparatus is provided, including the battery cell as described above or the battery apparatus as described above, where the battery cell or the battery apparatus is configured to store or supply electrical energy.

The electric apparatus in embodiments of the present application adopts the above battery cell. The battery cell has good cycle performance, which is beneficial for improving the usability and service life of the electric apparatus.

The above description is only an overview of the technical solution of the present application. To more clearly understand the technical means of the present application, it can be implemented in accordance with the content of the specification, and to make the above and other purposes, features, and advantages of the present application more apparent and understandable, specific embodiments of the present application are provided below.

### BRIEF DESCRIPTION OF DRAWINGS

To more clearly illustrate the technical solutions in the embodiments of the present application, the drawings required for the description of the embodiments or the prior art are briefly introduced below. It is apparent that the drawings described below are only some embodiments of the present application, and those of ordinary skill in the art can obtain other drawings based on these drawings without creative effort.
FIG. 1 is a schematic structural diagram of a vehicle according to some embodiments of the present application.
FIG. 2 is an exploded schematic diagram of a battery apparatus according to some embodiments of the present application.
FIG. 3 is a schematic structural diagram of a battery cell according to some embodiments of the present application.
FIG. 4 is an exploded schematic diagram of a battery cell according to some embodiments of the present application.
FIG. 5 is an exploded schematic diagram of a battery cell according to other embodiments of the present application.
FIG. 6 is a schematic structural diagram of a battery cell according to further embodiments of the present application.
FIG. 7 is a cross-sectional view along line A-A in FIG. 6.
FIG. 8 is a partial enlarged view at B in FIG. 7.
FIG. 9 is a cross-sectional view of an electrode assembly according to some embodiments of the present application.
FIG. 10 is a cross-sectional view of an electrode assembly according to other embodiments of the present application.
FIG. 11 is a schematic structural diagram of a battery cell according to further embodiments of the present application.
FIG. 12 is a cross-sectional view along line C-C in FIG. 11.
FIG. 13 is a cross-sectional view of an electrode assembly according to further embodiments of the present application.
FIG. 14 is a cross-sectional view of an electrode assembly according to further embodiments of the present application.
FIG. 15 is a schematic structural diagram of a support member according to some embodiments of the present application.
FIG. 16 is a schematic structural diagram of the support member shown in FIG. 15.
FIG. 17 is a schematic structural diagram of a support member according to other embodiments of the present application.
FIG. 18 is a schematic structural diagram of a support member according to further embodiments of the present application.
FIG. 19 is a schematic structural diagram of a support member according to further embodiments of the present application.
FIG. 20 is a schematic structural diagram of a support member according to further embodiments of the present application.
FIG. 21 is a schematic structural diagram of a support member according to further embodiments of the present application.
FIG. 22 is a schematic structural diagram of a support member according to further embodiments of the present application.
FIG. 23 is a schematic structural diagram of a support member according to further embodiments of the present application.
FIG. 24 is a schematic structural diagram of a support member according to further embodiments of the present application.
FIG. 25 is a schematic structural diagram of a battery cell according to further embodiments of the present application.
FIG. 26 is a cross-sectional view along line D-D in FIG. 25.
FIG. 27 is a partial enlarged view at E in FIG. 26.
FIG. 28 is a schematic structural diagram of a battery cell according to further embodiments of the present application.
FIG. 29 is a partial enlarged view at E in FIG. 26 of a battery cell according to further embodiments of the present application.
FIG. 30 is a schematic structural diagram of a support member according to further embodiments of the present application.
FIG. 31 is a schematic structural diagram of a support member according to further embodiments of the present application.
FIG. 32 is a schematic structural diagram of a support member according to further embodiments of the present application.
FIG. 33 is a schematic structural diagram of a support member according to further embodiments of the present application.
FIG. 34 is a schematic structural diagram of a support member and a second wall according to some embodiments of the present application.
FIG. 35 is a cross-sectional view along line F-F in FIG. 34.
FIG. 36 is a partial schematic diagram of a cross-sectional view of a battery cell along line A-A in FIG. 6 according to further embodiments of the present application.

The reference signs in the figures are as follows:
1000. vehicle; 1100. battery apparatus; 1200. controller; 1300. motor; 100. battery cell; 1001. accommodating space; 1002. third through hole; 110. housing; 111. peripheral wall; 112. end wall; 113. first wall; 120. end cover; 130. electrode assembly; 1301. first end surface; 1302. flat portion; 1303. curved portion; 1304. tab; 1305. positive tab; 1306. negative tab; 131. first electrode plate; 1311. first electrode plate layer; 132. second electrode plate; 1321. second electrode plate layer; 133. separator; 1331. separator layer; 13311. main body portion; 13312. bent portion; 1332. separator segment; 1333. gap; 134. positive electrode plate; 135. negative electrode plate; 140. support member; 1401. accommodating groove; 14011. first groove; 14012. second groove; 1402. first opening; 1403. first surface; 1404. second surface; 1405. side surface; 14051. first side surface; 14052. second side surface; 14053. third side surface; 14054. fourth side surface; 1406. second opening; 1407. third opening; 1408. second through hole; 141. first branch portion; 142. connecting portion; 1421. first connecting portion; 1422. second connecting portion; 143. second branch portion; 144. substrate; 145. protruding portion; 150. first insulating member; 1501. receiving space; 151. second wall; 1511. first through hole; 160. electrode terminal; 161. positive electrode terminal; 162. negative electrode terminal; 170. second insulating member; 200. enclosure; 210. first enclosure; and 220. second enclosure.

### DESCRIPTION OF EMBODIMENTS

To make the purposes, technical solutions, and advantages of the embodiments of the present application clearer, the technical solutions in the embodiments of the present application are described clearly and completely below in conjunction with the drawings in the embodiments of the present application. It is apparent that the described embodiments are some, but not all, embodiments of the present application. Based on the embodiments in the present application, all other embodiments obtained by those of ordinary skill in the art without creative effort fall within the scope of protection of the present application.

In the description of the embodiments of the present application, the terms "first" and "second" are used for descriptive purposes only and are not to be construed as indicating or implying relative importance or implicitly indicating the number of technical features indicated. Thus, a feature defined with "first" or "second" may explicitly or implicitly include at least one such feature.

In the description of the present application, the term "a plurality of" means at least two, such as two, three, etc., unless otherwise explicitly and specifically defined.

In the description of the present application, unless otherwise explicitly specified and defined, terms such as "installed," "connected," "connection," and "fixed" should be understood broadly. For example, it may be a fixed connection, a detachable connection, or an integral formation; it may be a direct connection, an indirect connection through an intermediary, or an internal communication or interaction between two elements, unless otherwise explicitly defined. Those of ordinary skill in the art can understand the specific meanings of the above terms in the present application based on specific circumstances.

In the present application, unless otherwise explicitly specified and defined, a first feature being "on" or "under" a second feature may mean direct contact between the first and second features, or indirect contact through an intermediary. Moreover, a first feature being "above," "over," or "on top of" a second feature may mean the first feature is directly above or obliquely above the second feature, or simply that the first feature is at a higher level than the second feature. A first feature being "below," "under," or "beneath" a second feature may mean the first feature is directly below or obliquely below the second feature, or simply that the first feature is at a lower level than the second feature.

In the description of the present application, it should be understood that the orientation or positional relationships indicated by terms such as "inner," "outer," "side," "upper," "bottom," "front," and "rear" are solely for the convenience of describing the present application and simplifying the description, and do not indicate or imply that the referred device or element must have a specific orientation, be constructed, and operated in a specific orientation, and thus should not be construed as limiting the present application.

In the description of the present application, it should be noted that the term "and/or" is merely an association relationship describing associated objects, indicating that three relationships may exist. For example, A and/or B may indicate: A exists alone, A and B exist simultaneously, and B exists alone.

It should also be noted that in the embodiments of the present application, the same reference signs are used to indicate the same components or parts. For identical parts in the embodiments of the present application, the drawings may only label the reference sign for one part or component as an example. It should be understood that the reference signs are equally applicable to other identical parts or components.

A battery cell may be a secondary battery, which refers to a battery cell that can be recharged to activate the active material for continued use after discharge.

A battery apparatus refers to a single physical module including one or more battery cells to provide higher voltage and capacity.

A battery cell includes an electrode assembly and a casing for accommodating the electrode assembly. The casing includes an end cover and a housing, the electrode assembly is placed within the housing, and the end cover covers an opening of the housing to seal the housing. The electrode assembly includes a separator and two electrode plates of opposite polarities, and the separator separates the two electrode plates. The battery cell further includes a support member, the support member is disposed between the housing and the electrode assembly, and an end surface of the electrode assembly opposite an end portion of the electrode plate abuts the support member, increasing the difficulty of the electrolyte flowing to the end portion of the electrode plate, which is unfavorable for improving the cycle performance of the electrode assembly.

Based on this, some embodiments of the present application provide a battery cell, including a housing, an end cover, a support member, and at least one electrode assembly. The housing accommodates an electrolyte. The end cover is disposed to cover an opening of the housing, and the housing includes a first wall. At least a part of the electrode assembly is accommodated within the housing, the electrode assembly includes a first electrode plate, the electrode assembly has a first end surface facing the first wall, and an end portion of the first electrode plate is disposed facing the first end surface; and the support member is accommodated within the housing. At least a part of the support member is located between the first end surface and the first wall, and the support member is in contact with the first end surface; where the support member is provided with at least one accommodating groove, and the accommodating groove has a first opening disposed facing the first end surface.

The support member of the battery cell in the embodiments of the present application is provided with an accommodating groove, and the accommodating groove forms a first opening facing the first end surface, such that the electrolyte accommodated in the accommodating groove may flow to the first end surface of the electrode assembly through the first opening, thereby wetting the end portion of the first electrode plate, reducing the difficulty of wetting the end portion of the first electrode plate, improving the wetting effect of the first electrode plate, improving the wetting effect of the electrode assembly, and enhancing the cycle performance of the battery cell.

The following embodiments are described with an electric apparatus as a vehicle for convenience of explanation.

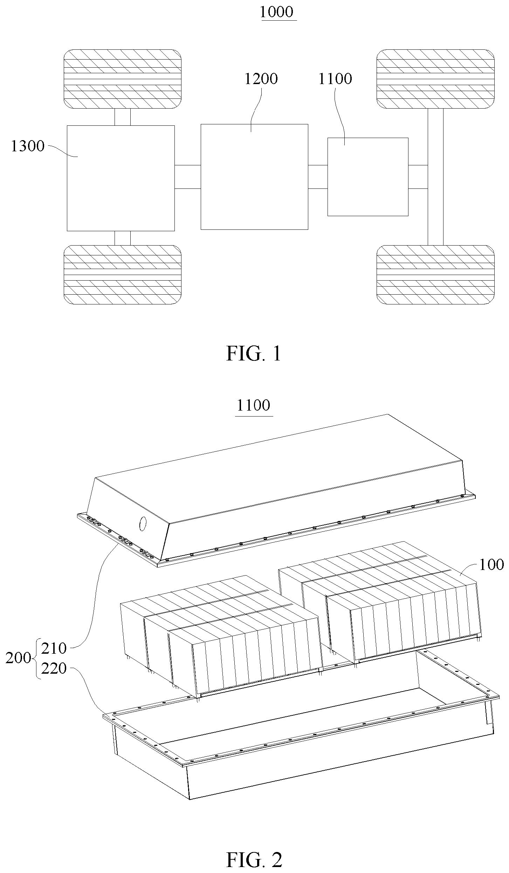

As shown in FIG. 1, a battery apparatus 1100 is disposed inside a vehicle 1000, and the battery apparatus 1100 may be disposed at the bottom, head, or tail of the vehicle 1000. The battery apparatus 1100 may be used to supply power to the vehicle 1000. For example, the battery apparatus 1100 may serve as an operating power source for the vehicle 1000.

The vehicle 1000 may further include a controller 1200 and a motor 1300, where the controller 1200 is used to control the battery apparatus 1100 to supply power to the motor 1300, for example, for the power requirements of starting, navigating, and driving the vehicle 1000.

In some embodiments of the present application, the battery apparatus 1100 may not only serve as an operating power source for the vehicle 1000 but also as a driving power source for the vehicle 1000, replacing or partially replacing fuel or natural gas to provide driving power for the vehicle 1000.

As shown in FIG. 2, in some embodiments, the battery apparatus 1100 may include one or more battery cell assemblies for providing voltage and capacity.

A battery cell assembly may include a plurality of battery cells 100, and the plurality of battery cells 100 are connected in series, parallel, or series-parallel through a busbar component, where being connected in series-parallel means a combination of series and parallel connections of the plurality of battery cells 100.

The battery cell 100 may be a secondary battery cell, which refers to a battery cell 100 that can be recharged to activate the active material for continued use after discharge.

In an example, the battery cell 100 may be a lithium-ion battery cell, a sodium-ion battery cell, a sodium-lithium-ion battery cell, a lithium metal battery cell, a sodium metal battery cell, a lithium-sulfur battery cell, a magnesium-ion battery cell, a nickel-hydrogen battery cell, a nickel-cadmium battery cell, a lead-acid battery cell, or the like.

In some embodiments, a battery cell assembly is typically formed by arranging a plurality of battery cells 100. In an example, a battery cell assembly may be a battery module, where the battery module is formed by arranging and fixing a plurality of battery cells 100 into an independent module. In an example, a battery module may be formed by bundling a plurality of battery cells 100 with a strap.

In some embodiments, the battery apparatus 1100 may be a battery pack, where the battery pack includes an enclosure 200 and one or more battery cell assemblies, and the battery cell assemblies are accommodated within the enclosure 200. In an example, a battery cell assembly may be a battery module, and the battery cell assembly may be accommodated within the enclosure 200 by fixing the battery module in the enclosure 200. In an example, a battery cell assembly may also be accommodated within the enclosure 200 by directly fixing a plurality of battery cells 100 in the enclosure 200.

In some embodiments, the enclosure 200 is used to accommodate the battery cells 100, and the enclosure 200 may have various structures.

In some embodiments, the enclosure 200 may include a first enclosure 210 and a second enclosure 220. The first enclosure 210 and the second enclosure 220 are snap-fitted, forming an enclosed space inside the enclosure 200 to accommodate the battery cell assemblies. Here, "enclosed" refers to covering or closing, which may be sealed or unsealed. The first enclosure 210 may be a top cover or a bottom plate.

In some embodiments, the enclosure 200 may include a top cover, a frame, and a bottom plate. The top cover and the bottom plate are respectively connected to the frame, forming an enclosed space inside the enclosure 200 to accommodate the battery cell assemblies. In an example, the frame may include a plurality of side beams.

In some embodiments, the enclosure 200 may serve as a part of a chassis structure of the vehicle 1000. For example, a part of the enclosure 200 may form at least a part of a floor of the vehicle 1000, or a part of the enclosure 200 may form at least a part of cross beams and longitudinal beams of the vehicle 1000.

In some embodiments, the battery apparatus 1100 may be an energy storage device.

An energy storage device may be used in energy storage power stations, wind power generation systems, solar power generation systems, mobile power systems, temporary power supply systems, or the like. An energy storage device may store electrical energy as needed and output electrical energy at appropriate times. For example, an energy storage device may store electrical energy during low electricity consumption periods and supply electrical energy to relevant users or electrical equipment during peak electricity consumption periods.

In some embodiments, an energy storage device includes an energy storage container, an energy storage cabinet, or the like.

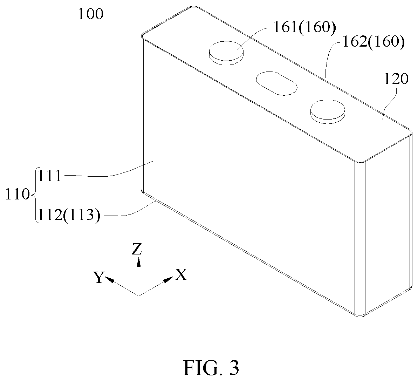

As shown in FIG. 3 to FIG. 5, an embodiment of the present application provides a battery cell 100, including a housing 110, an end cover 120, and an electrode assembly 130, where the housing 110 has an opening, and the end cover 120 is connected to the housing 110 and covers the opening.

The housing 110 is a component used to cooperate with the end cover 120 to form an internal cavity of the battery cell 100, and the formed internal cavity can be used to accommodate the electrode assembly 130, electrolyte, and other components.

The housing 110 and the end cover 120 may be independent components. By way of example, an opening may be provided on the housing 110, and the end cover 120 covers the opening to form the internal cavity of the battery cell 100.

The material of the housing 110 may be various, such as copper, iron, aluminum, stainless steel, and aluminum alloy.

The shape of the end cover 120 may be adapted to the shape of the housing 110 to cooperate with the housing 110. The material of the end cover 120 may be the same as or different from the material of the housing 110. Optionally, the end cover 120 may be made of a material with a certain hardness and strength (such as copper, iron, aluminum, stainless steel, aluminum alloy, and plastic), so that the end cover 120 is not easily deformed when subjected to squeezing or collision, enabling the battery cell 100 to have higher structural strength and improved reliability.

The end cover 120 is connected to the housing 110 by welding, bonding, snap-fitting, or other methods.

The housing 110 may have an opening at one end or at two ends.

In some examples, the housing 110 may be a structure with an opening on one side, and one end cover 120 is provided to cover the housing 110.

By way of example, the housing 110 includes an integrally formed peripheral wall 111 and an end wall 112, where the peripheral wall 111 is connected to a periphery of the end wall 112, and the end cover 120 is hermetically connected to an opening of the peripheral wall 111 facing away from the end wall 112. The peripheral wall 111 and the end wall 112 are manufactured by an integral forming process such as stamping or integral casting.

In other examples, the housing 110 may alternatively be a structure with openings on two sides, and two end covers 120 are provided, respectively covering the two openings of the housing 110.

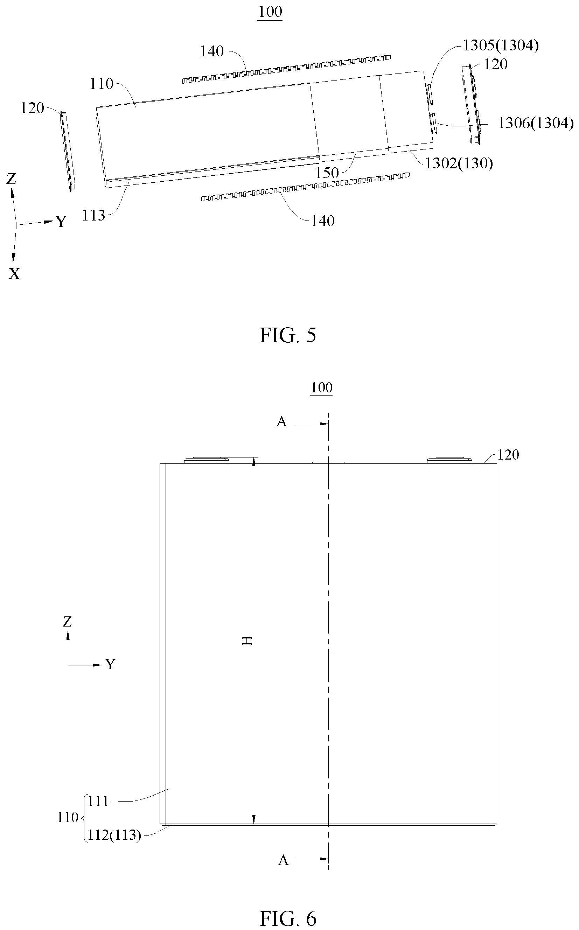

As shown in FIG. 6 to FIG. 14, the electrode assembly 130 is a component in the battery cell 100 where electrochemical reactions occur. The electrode assembly 130 may be entirely accommodated within the housing 110 or partially accommodated within the housing 110. For example, a part of a tab 1304 of the electrode assembly 130 may extend outside the housing 110.

Optionally, the electrode assembly 130 is entirely accommodated within the housing 110. One or more electrode assemblies 130 may be provided, where a plurality of electrode assemblies 130 may be stacked, although the plurality of electrode assemblies 130 may have other arrangement methods.

In some embodiments, the electrode assembly 130 includes a positive electrode plate 134 and a negative electrode plate 135. During charging and discharging of the battery cell 100, active ions (such as lithium ions) intercalate and deintercalate back and forth between the positive electrode plate 134 and the negative electrode plate 135.

In some embodiments, the positive electrode plate 134 may include a positive electrode current collector and a positive electrode active material layer disposed on at least one surface of the positive electrode current collector.

In an example, the positive electrode current collector has two surfaces opposite in its thickness direction, and the positive electrode active material layer is disposed on either or both of the two opposite surfaces of the positive electrode current collector.

In an example, the positive electrode current collector may use a metal foil, a conductive polymer material, a carbon material, or a composite current collector. For example, as a metal foil, pure metal, alloy, or surface-treated metal may be used, including but not limited to stainless steel, copper, aluminum, nickel, nickel alloy, titanium, or silver. A composite current collector may include a polymer material base layer and a metal layer. The composite current collector may be formed by forming a metal material (aluminum, aluminum alloy, nickel, nickel alloy, titanium, titanium alloy, silver, silver alloy, or the like) on a polymer material substrate (such as a substrate of polypropylene, polyethylene terephthalate, polybutylene terephthalate, polystyrene, or polyethylene).

In an example, the positive electrode active material layer includes a positive electrode active material, and the positive electrode active material may include at least one of the following materials: lithium-containing phosphates, lithium transition metal oxides, and their respective modified compounds. However, the present application is not limited to these materials, and other conventional materials that can be used as positive electrode active materials for batteries may also be used. These positive electrode active materials may be used alone or in combination of two or more. Examples of lithium-containing phosphates may include but are not limited to at least one of lithium iron phosphate (such as LiFePO₄ (also abbreviated as LFP)), a composite material of lithium iron phosphate and carbon, lithium manganese phosphate (such as LiMnPO₄), a composite material of lithium manganese phosphate and carbon, lithium manganese iron phosphate, and a composite material of lithium manganese iron phosphate and carbon. Examples of lithium transition metal oxides may include but are not limited to at least one of lithium cobalt oxide (such as LiCoO₂), lithium nickel oxide (such as LiNiO₂), lithium manganese oxide (such as LiMnO₂ and LiMn₂O₄), lithium nickel cobalt oxide, lithium manganese cobalt oxide, lithium nickel manganese oxide, lithium nickel cobalt manganese oxide (such as LiNi_{1/3}Co_{1/3}Mn_{1/3}O₂ (also abbreviated as NCM₃₃₃), LiNi_{0.5}Co_{0.2}Mn_{0.3}O₂ (also abbreviated as NCM₅₂₃), LiNi_{0.5}Co_{0.25}Mn_{0.25}O₂ (also abbreviated as NCM₂₁₁), LiNi_{0.6}Co_{0.2}Mn_{0.2}O₂ (also abbreviated as NCM₆₂₂), LiNi_{0.8}Co_{0.1}Mn_{0.1}O₂ (also abbreviated as NCM₈₁₁), lithium nickel cobalt aluminum oxide (such as LiNi_{0.8}Co_{0.15}Al_{0.05}O₂), and their modified compounds. A modified compound refers to a material obtained by modifying the above substances through doping or coating.

In some embodiments, the negative electrode plate 135 may include a negative electrode current collector and a negative electrode active material layer disposed on at least one surface of the negative electrode current collector.

In an example, the negative electrode current collector has two surfaces opposite in its thickness direction, and the negative electrode active material layer is disposed on either or both of the two opposite surfaces of the negative electrode current collector.

In an example, the negative electrode current collector may use a metal foil, a conductive polymer material, a carbon material, or a composite current collector. For example, as a metal foil, pure metal, alloy, or surface-treated metal may be used, including but not limited to stainless steel, copper, aluminum, nickel, nickel alloy, titanium, or silver. A composite current collector may include a polymer material base layer and a metal layer. The composite current collector may be formed by forming a metal material (copper, copper alloy, nickel, nickel alloy, titanium, titanium alloy, silver, silver alloy, or the like) on a polymer material substrate (such as a substrate of polypropylene, polyethylene terephthalate, polybutylene terephthalate, polystyrene, or polyethylene).

In an example, the negative electrode active material may use a negative electrode active material known in the art for battery cells 100. In an example, the negative electrode active material may include at least one of the following materials: artificial graphite, natural graphite, soft carbon, hard carbon, silicon-based materials, tin-based materials, and lithium titanate. The silicon-based material may be selected from at least one of elemental silicon, silicon-oxygen compounds, silicon-carbon composites, silicon-nitrogen composites, and silicon alloys. The tin-based material may be selected from at least one of elemental tin, tin-oxygen compounds, and tin alloys. However, the present application is not limited to these materials, and other conventional materials that can be used as negative electrode active materials for battery cells 100 may also be used. These negative electrode active materials may be used alone or in combination of two or more.

In some embodiments, the material of the positive electrode current collector may be aluminum, and the material of the negative electrode current collector may be copper.

In some embodiments, the electrode assembly 130 further includes a separator 133, and the separator 133 is disposed between the positive electrode plate 134 and the negative electrode plate 135. The separator 133 can prevent a short circuit between the positive and negative electrodes while allowing active ions to pass through.

The separator 133 may be partially located between the positive electrode plate 134 and the negative electrode plate 135. By way of example, two ends of the separator 133 in an axial direction of the battery cell 100 may protrude beyond the positive electrode plate 134 and the negative electrode plate 135; or, the entire separator 133 may be located between the positive electrode plate 134 and the negative electrode plate 135.

In some embodiments, the separator 133 is a separation film. The separation film of the present application may be any well-known porous separation film with good chemical stability and mechanical stability.

In an example, the main material of the separation film may be selected from at least one of glass fiber, non-woven fabric, polyethylene, polypropylene, polyvinylidene fluoride, and ceramic. The separation film may be a single-layer film or a multilayer composite film, without particular limitation. When the separation film is a multilayer composite film, the materials of each layer may be the same or different. The separator 133 may be a single component located between the positive electrode plate 134 and the negative electrode plate 135, or may be attached to a surface of the positive electrode plate 134 or the negative electrode plate 135. An inorganic particle coating, an organic particle coating, or an organic/inorganic composite coating may also be applied to a surface of the separation film.

In some embodiments, the battery cell 100 further includes an electrolyte, and the electrolyte serves to conduct ions between the positive electrode plate 134 and the negative electrode plate 135. The electrolyte of the present application may be selected according to requirements.

In some embodiments, the electrolyte includes an electrolyte salt and a solvent.

In some embodiments, the electrolyte salt may be selected from at least one of lithium hexafluorophosphate, lithium tetrafluoroborate, lithium perchlorate, lithium hexafluoroarsenate, lithium bis(fluorosulfonyl)imide, lithium bis(trifluoromethanesulfonyl)imide, lithium trifluoromethanesulfonate, lithium difluorophosphate, lithium difluoro(oxalate)borate, lithium bis(oxalate)borate, lithium difluoro(bisoxalate)phosphate, and lithium tetrafluoro(oxalate)phosphate.

In some embodiments, the solvent may be selected from at least one of ethylene carbonate, propylene carbonate, ethyl methyl carbonate, diethyl carbonate, dimethyl carbonate, dipropyl carbonate, methyl propyl carbonate, ethyl propyl carbonate, butylene carbonate, fluoroethylene carbonate, methyl formate, methyl acetate, ethyl acetate, propyl acetate, methyl propionate, ethyl propionate, propyl propionate, methyl butyrate, ethyl butyrate, 1,4-butyrolactone, sulfolane, dimethyl sulfone, methyl ethyl sulfone, and diethyl sulfone. The solvent may also be an ether solvent. The ether solvent may include one or more of ethylene glycol dimethyl ether, ethylene glycol diethyl ether, diethylene glycol dimethyl ether, triethylene glycol dimethyl ether, tetraethylene glycol dimethyl ether, 1,3-dioxolane, tetrahydrofuran, methyltetrahydrofuran, diphenyl ether, and crown ether.

In some embodiments, the electrolyte may optionally include additives. For example, the additives may include negative electrode film-forming additives, positive electrode film-forming additives, and additives that can improve certain performance of the battery cell 100, such as additives that improve overcharge/fast charge performance, high-temperature performance, or low-temperature performance of the battery cell 100.

The electrode assembly 130 may be a wound structure, a laminated structure, or a hybrid structure of winding and lamination. The shape of the electrode assembly 130 may be cylindrical, flat, prismatic, or the like.

In some embodiments, the electrode assembly 130 is provided with tabs 1304, and the tabs 1304 can conduct current from the electrode assembly 130. The tabs 1304 include a positive tab 1305 and a negative tab 1306.

In an example, the battery cell 100 may be a cylindrical battery cell, a prismatic battery cell, a pouch battery cell, or a battery cell of other shapes. Prismatic battery cells include square-housing battery cells, blade-shaped battery cells, or multi-prismatic battery cells, such as hexagonal prismatic battery cells.

In some embodiments, the battery cell 100 includes a housing 110, an end cover 120, a support member 140, and at least one electrode assembly 130. The housing 110 accommodates an electrolyte. The end cover 120 is disposed to cover an opening of the housing 110, and the housing 110 includes a first wall 113. At least a part of the electrode assembly 130 is accommodated within the housing 110, the electrode assembly 130 includes a first electrode plate 131, the electrode assembly 130 has a first end surface 1301 facing the first wall 113, and an end portion of the first electrode plate 131 is disposed facing the first end surface 1301. At least a part of the support member 140 is located between the first end surface 1301 and the first wall 113 and is in contact with the first end surface 1301, the support member 140 is provided with at least one accommodating groove 1401, and the accommodating groove 1401 has a first opening 1402 disposed facing the first end surface 1301.

The first wall 113 refers to any wall portion of the housing 110.

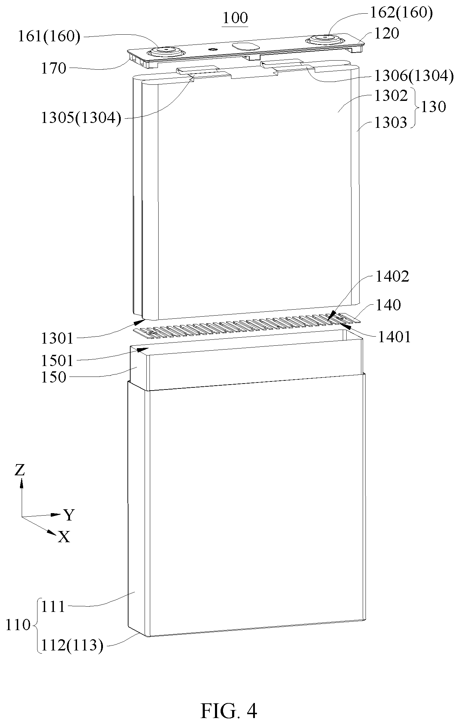

As shown in FIG. 4, in some examples, the first wall 113 may refer to the end wall 112.

In some examples, the peripheral wall 111 includes a plurality of first sidewalls. The plurality of first sidewalls are sequentially connected end-to-end in a circumferential direction of the end wall 112, and the first wall 113 may refer to any one of the first sidewalls in the peripheral wall 111.

As shown in FIG. 5, in some examples, the housing 110 has openings on two opposite sides, two end covers 120 are provided, the two end covers 120 are hermetically connected to the two openings of the housing 110, the housing 110 includes a plurality of second sidewalls, the plurality of first sidewalls are sequentially connected end-to-end along a circumferential direction of the end cover 120, and the first wall 113 may refer to any one of the second sidewalls in the housing 110.

The electrode assembly 130 includes a positive electrode plate 134, a negative electrode plate 135, and a separator 133. The electrode assembly 130 includes a first electrode plate 131, and the first electrode plate 131 may be the positive electrode plate 134 or the negative electrode plate 135.

In some examples, the positive electrode plate 134, the negative electrode plate 135, and the separator 133 are wound together.

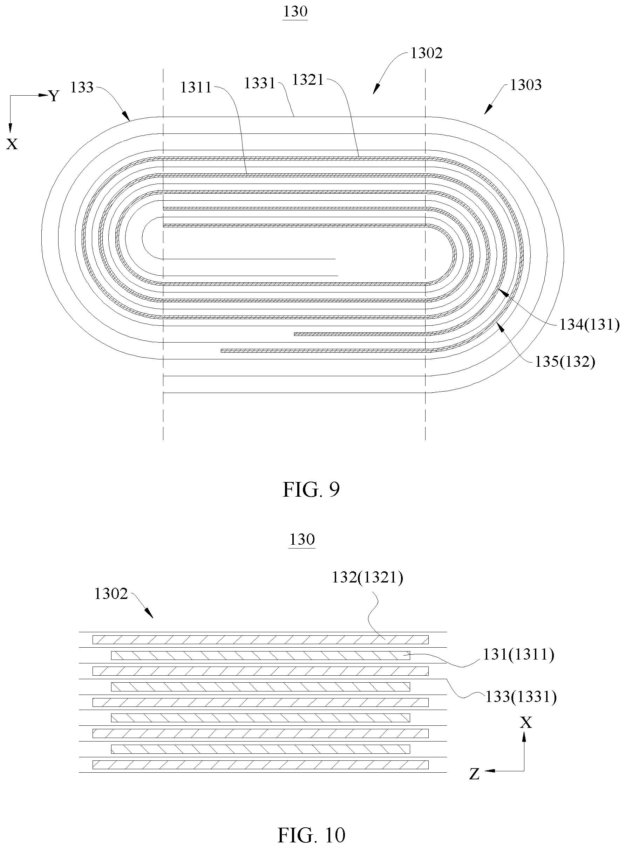

As shown in FIG. 9, as an example, the electrode assembly 130 is a wound structure. By way of example, the positive electrode plate 134, the separator 133, and the negative electrode plate 135 are wound into a cylindrical wound structure and then flattened to obtain a flat electrode assembly 130.

As shown in FIG. 6 to FIG. 9, in some examples, when the electrode assembly 130 is a wound structure, "the end portion of the first electrode plate 131" may refer to an end portion of the first electrode plate 131 in an axial direction of the electrode assembly 130, where the axial direction (see direction Z) of the electrode assembly 130 is perpendicular to a winding direction of the electrode assembly 130. After the positive electrode plate 134, the negative electrode plate 135, and the separator 133 are wound, an accommodation gap is formed between the positive electrode plate 134 and the negative electrode plate 135, the separator 133 is located in the accommodation gap, the accommodation gap has openings at two opposite ends in the axial direction of the electrode assembly 130, and "the end portion of the first electrode plate 131" may refer to an end portion of the first electrode plate 131 near the opening of the accommodation gap facing the first wall 113. In addition, the electrolyte may also flow into the space between the positive electrode plate 134 and the negative electrode plate 135 through this opening to wet the positive electrode plate 134 and the negative electrode plate 135. The separator 133 may fill the opening, or the separator 133 may fill a partial region of the opening.

During winding, the first electrode plate 131 is wound in a length direction of the first electrode plate 131, and "the end portion of the first electrode plate 131" may refer to an end portion of the first electrode plate 131 in its width direction and facing the first wall 113.

In some examples, the electrode assembly 130 is a laminated structure.

As shown in FIG. 10, in an example, a plurality of positive electrode plates 134 and negative electrode plates 135 may be respectively provided, and the plurality of positive electrode plates 134 and negative electrode plates 135 are alternately stacked. A plurality of separator 133 may be provided, respectively disposed between any positive electrode plate 134 or negative electrode plate 135 that are adjacent; or, the separator 133 may be continuously disposed and folded between any positive electrode plate 134 or negative electrode plate 135 that are adjacent. The positive electrode plate 134 and the negative electrode plate 135 are stacked in a thickness direction of the positive electrode plate 134, and "the end portion of the first electrode plate 131" may refer to an end portion of the positive electrode plate 134 in its width direction or length direction or an end portion of the negative electrode plate 135 in its width direction or length direction.

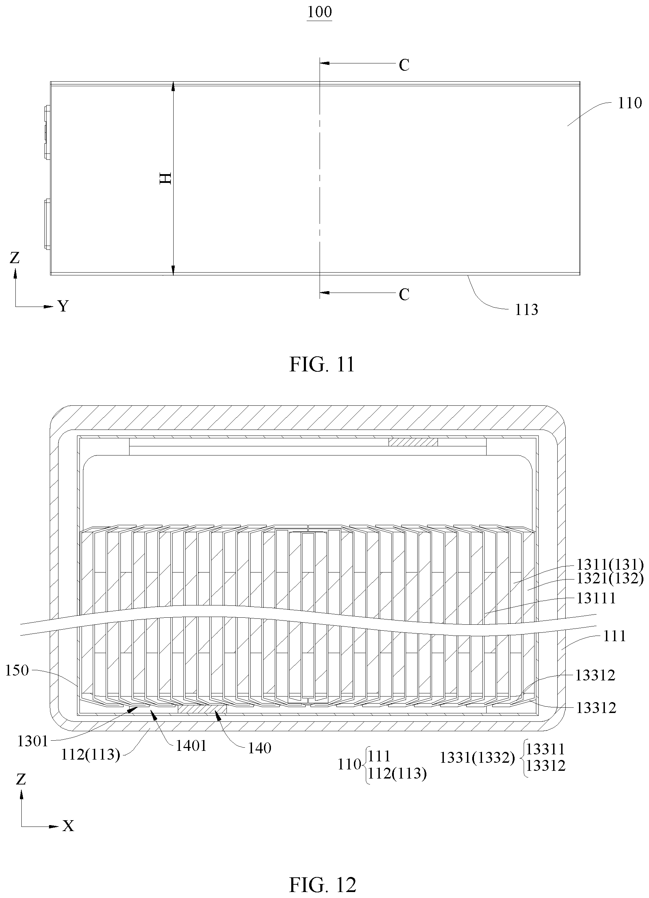

As shown in FIG. 11 to FIG. 14, in an example, a plurality of positive electrode plates 134 may be provided, the negative electrode plate 135 is folded to form a plurality of stacked folding segments, one positive electrode plate 134 is sandwiched between each pair of adjacent folding segments. The separator 133 may be continuously disposed and folded between any positive electrode plate 134 or folding segment that are adjacent. "The end portion of the first electrode plate 131" may refer to an end portion of the positive electrode plate 134 in its width direction or length direction or an end portion of the folding segment in its width direction or length direction.

The first end surface 1301 may refer to an end surface of the electrode assembly 130 on a same side as the end portion of the first electrode plate 131, and the first end surface 1301 may be a flat surface or an approximately flat surface.

As shown in FIG. 6 to FIG. 10, in some examples, the electrode assembly 130 is a wound structure, and a surface formed by the end portion of the separator 133 near the first electrode plate 131 being wound, extending beyond between the positive electrode plate 134 and the negative electrode plate 135 and then bent is the first end surface 1301.

In some examples, the electrode assembly 130 is a laminated structure, a plurality of separators 133 are provided, respectively disposed between any positive electrode plate 134 or negative electrode plate 135 that are adjacent. A surface formed by the end portions of the plurality of separators 133 near the first electrode plate 131 extending beyond between the positive electrode plate 134 and the negative electrode plate 135 and then bent is the first end surface 1301.

As shown in FIG. 11 to FIG. 14, in some examples, the electrode assembly 130 is a laminated structure, and the separator 133 may be continuously disposed and folded between any positive electrode plate 134 or negative electrode plate 135 that are adjacent. The separator 133 is folded to form a plurality of separator segments 1332, and in the plurality of separator segments 1332, end portions of two adjacent separator segments 1332 near the first wall 113 are connected and bent, thereby forming the first end surface 1301.

The end portion of the separator 133 near the first electrode plate 131 extending beyond between the positive electrode plate 134 and the negative electrode plate 135 can insulate and separate the end portions of the positive electrode plate 134 and the negative electrode plate 135 from each other, reducing the risk of a short circuit between the positive electrode plate 134 and the negative electrode plate 135, which is beneficial for improving the reliability of use of the battery cell 100.

In some examples, the end portion of the separator 133 near the first electrode plate 131 does not extend beyond between the positive electrode plate 134 and the negative electrode plate 135, and an end surface of the positive electrode plate 134 or the negative electrode plate 135 facing the first wall 113 forms the first end surface 1301.

The support member 140 may refer to a component located between the first wall 113 and the first end surface 1301, and the support member 140 can support the electrode assembly 130.

In some examples, the support member 140 is a plate-like structure, and the first wall 113 and the first end surface 1301 are located on two opposite sides of the support member 140 in its thickness direction Z. The first direction X may refer to a width direction of the support member 140, and the second direction Y may refer to a length direction of the support member 140.

By way of example, the support member 140 may also be referred to as a bottom support plate, which raises the electrode assembly 130 to reduce the risk of interference between the electrode assembly 130 and a corner at the bottom of the housing 110. The corner may refer to a rounded structure or an inclined linear structure connected between the end wall 112 and the peripheral wall 111.

The support member 140 is in contact with the first end surface 1301. The support member 140 directly contacts the first end surface 1301, and no other components are disposed between the support member 140 and the first end surface 1301.

The accommodating groove 1401 may refer to a groove structure formed by the support member 140. A plurality of accommodating grooves 1401 may be provided, each accommodating groove 1401 has a first opening 1402 disposed facing the first end surface 1301, and the first opening 1402 may refer to an opening formed by the accommodating groove 1401 on a surface of the support member 140 in direct contact with the first end surface 1301.

By way of example, one accommodating groove 1401 has one first opening 1402, and a plurality of accommodating grooves 1401 have a plurality of first openings 1402.

In some examples, the accommodating groove 1401 extends through a surface of the support member 140 facing away from the first end surface 1301, that is, the accommodating groove 1401 is a through groove.

In some examples, the accommodating groove 1401 does not extend through the surface of the support member 140 facing away from the first end surface 1301, that is, the accommodating groove 1401 is a blind groove.

In the battery cell 100 in the embodiments of the present application, at least a part of the electrode assembly 130 is located within the housing 110, and the housing 110 accommodates an electrolyte. The end cover 120 is disposed to cover an opening of the housing 110 to seal the housing 110, and the housing 110 has a first wall 113. The electrode assembly 130 includes a first electrode plate 131, the electrode assembly 130 has a first end surface 1301 facing the first wall 113, and an end portion of the first electrode plate 131 is disposed facing the first end surface 1301. The support member 140 is located between the first end surface 1301 and the first wall 113, the support member 140 is in contact with the first end surface 1301, and the accommodating groove 1401 of the support member 140 has a first opening 1402 facing the first end surface 1301, such that the electrolyte accommodated in the accommodating groove 1401 may flow to the first end surface 1301 of the electrode assembly 130 through the first opening 1402, thereby wetting the end portion of the first electrode plate 131, reducing the difficulty of wetting the end portion of the first electrode plate 131, improving the wetting effect of the first electrode plate 131, improving the wetting effect of the electrode assembly 130, and enhancing the cycle performance of the battery cell 100.

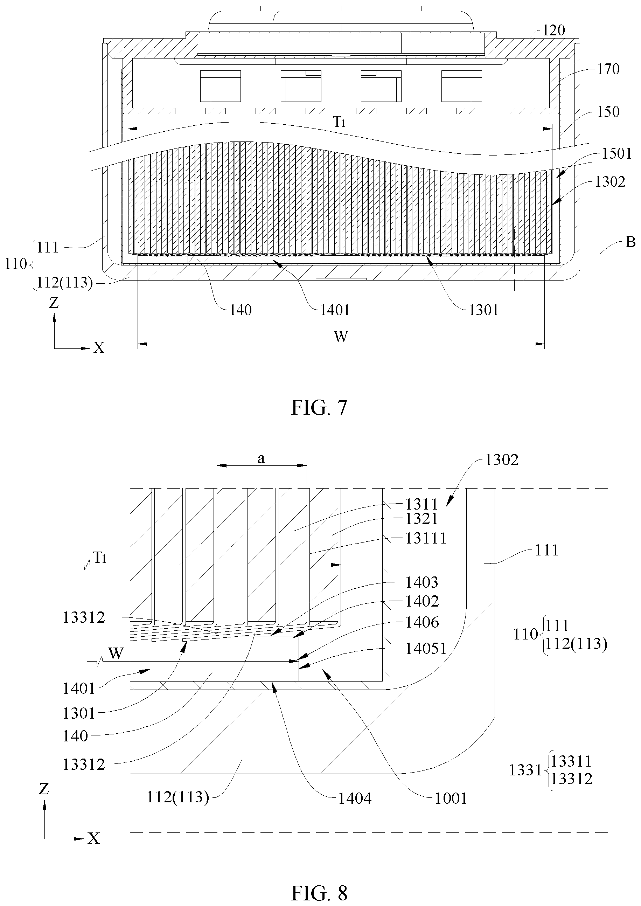

As shown in FIG. 8, in some embodiments, the first end surface 1301 of at least one electrode assembly 130 covers the first opening 1402 of at least one accommodating groove 1401.

In some examples, one electrode assemblies 130 is provided, and the first end surface 1301 covers the first openings 1402 of one or more accommodating grooves 1401.

In some examples, a plurality of electrode assemblies 130 are provided, where the first end surface 1301 of one electrode assembly 130 covers the first openings 1402 of one or more accommodating grooves 1401, or the first end surfaces 1301 of a plurality of electrode assemblies 130 collectively cover the first openings 1402 of one or more accommodating grooves 1401.

The first opening 1402 being covered by the first end surface 1301 may be either completely covered by the first end surface 1301 or partially covered by the first end surface 1301.

With the adoption of the technical solution of the embodiments, the first end surface 1301 can cover the first opening 1402, such that the electrolyte may directly flow to the first end surface 1301 through the first opening 1402, thereby wetting the end portion of the first electrode plate 131, improving the wetting effect of the end portion of the first electrode plate 131, improving the wetting effect of the first electrode plate 131, and improving the cycle performance of the battery cell 100.

In some embodiments, two electrode assemblies 130 are provided, and an arrangement direction of the two electrode assemblies 130 is perpendicular to a thickness direction Z of the support member 140; and the first end surfaces 1301 of the two electrode assemblies 130 cover the first openings 1402 of all the accommodating grooves 1401.

By way of example, the two electrode assemblies 130 are stacked in the first direction X, or the two electrode assemblies 130 are stacked in the second direction Y. Of course, in other examples, the two electrode assemblies 130 may alternatively be stacked in other directions perpendicular to the thickness direction Z of the support member 140.

The arrangement direction of the two electrode assemblies 130 is perpendicular to the thickness direction Z of the support member 140, such that the first end surfaces 1301 of the two electrode assemblies 130 are distributed side by side in a direction perpendicular to the thickness direction Z of the support member 140, the first end surfaces 1301 of the two electrode assemblies 130 can be in contact with the support member 140, and the first openings 1402 of all the accommodating grooves 1401 can be covered by the first end surfaces 1301 of the two electrode assemblies 130. However, it is not required that the first opening 1402 of each accommodating groove 1401 is completely covered by the first end surfaces 1301 of the two electrode assemblies 130; and partial regions of the first openings 1402 of some accommodating grooves 1401 may not be covered by the first end surfaces 1301 of the two electrode assemblies 130.

With the adoption of the technical solution of the embodiments, all the first grooves 14011 can supply the electrolyte to the electrode assemblies 130 within the battery cell 100, which is beneficial for improving the wetting effect of the electrode assemblies 130 and enhancing the cycle performance of the battery cell 100.

In some embodiments, the housing 110 includes an integrally formed peripheral wall 111 and an end wall 112, where the peripheral wall 111 is connected to a periphery of the end wall 112, the end cover 120 is hermetically connected to an opening of the peripheral wall 111 facing away from the end wall 112, and the end wall 112 forms the first wall 113.

The end wall 112 may refer to a wall portion of the housing 110 opposite the end cover 120, and the end wall 112 of the housing 110 forms the first wall 113.

With the adoption of the technical solution of the embodiments, the housing 110 includes an integrally formed peripheral wall 111 and end wall 112, which can reduce the risk of electrolyte leakage between the peripheral wall 111 and the end wall 112 and is beneficial for improving the sealing performance of the battery cell 100. In addition, the housing 110 has an opening on one side, and the support member 140 and the end cover 120 are located on two opposite sides of the electrode assembly 130, facilitating the insertion of the electrode assembly 130 and the support member 140 into the housing 110.

In some embodiments, in the direction of gravity, the bottom wall of the housing 110 forms the first wall 113.

In some examples, the "direction of gravity" may refer to the orientation of gravitational force when the battery cell 100 is installed in the battery apparatus 1100. In this state, the support member 140 is located below the electrode assembly 130, the first wall 113 is located below the support member 140, and the first wall 113 is the bottom wall of the housing 110.

For example, the "direction of gravity" may refer to the thickness direction Z of the support member 140.

In some examples, an enclosure 200 of the battery apparatus 1100 includes an upper enclosure and a lower enclosure connected to each other, the upper enclosure and the lower enclosure being connected to form an installation cavity. The battery cell 100 is installed in the installation cavity, and a wall portion of the bottom wall of the housing 110 of the battery cell 100 facing the lower enclosure 200 is the first wall 113. The upper enclosure may adopt the structure of the first enclosure 210 described above, and the lower enclosure may adopt the structure of the second enclosure 220 described above.

In some examples, the enclosure 200 of the battery apparatus 1100 includes a bottom protective plate, and a wall portion of the housing 110 of the battery cell 100 facing the bottom protective plate is the first wall 113.

With the adoption of the technical solution of the embodiments, under its own weight, the electrolyte accumulates at the bottom of the housing 110 and in the accommodating groove 1401 of the support member 140, and the first opening 1402 of the accommodating groove 1401 is disposed facing the first end surface 1301, such that the accumulated electrolyte can wet the bottom of the first electrode plate 131 and wick upward along the first electrode plate 131, which is beneficial for overcoming limitations in the height direction and charge rate of the battery cell 100, enabling the battery cell 100 to have higher energy density and cycle performance.

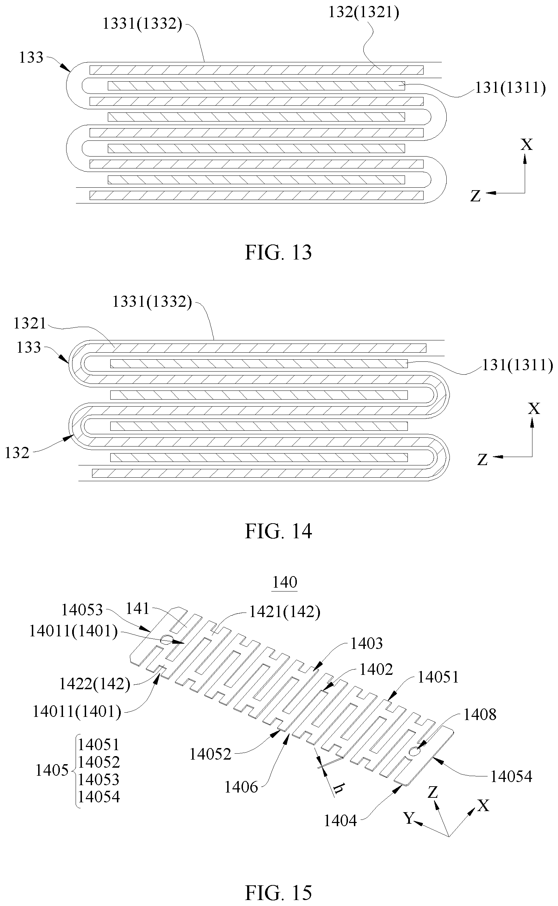

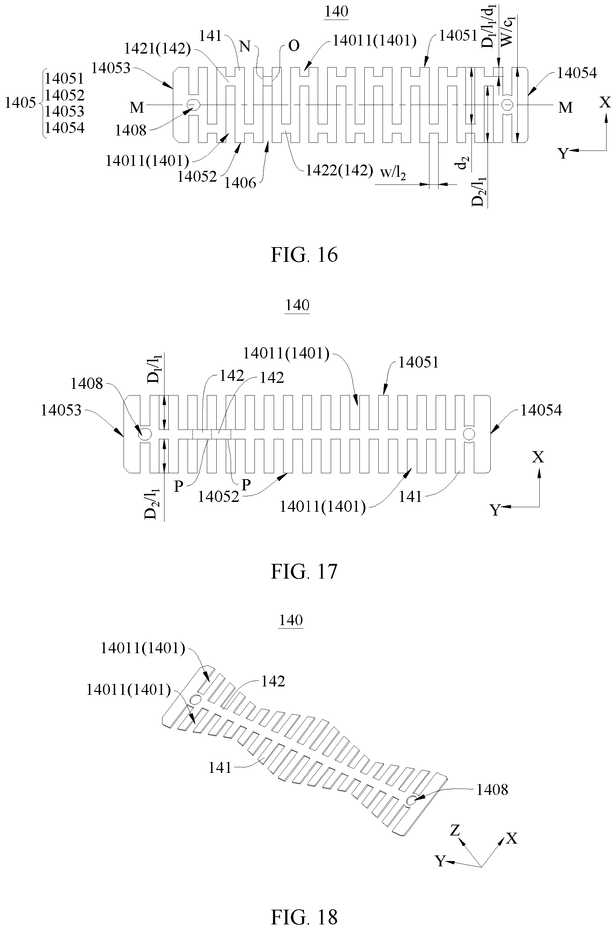

As shown in FIG. 15 and FIG. 16, in some embodiments, the electrode assembly 130 includes a flat portion 1302, a part of the first electrode plate 131 located in the flat portion 1302 includes a first electrode plate layer 1311, a plurality of first electrode plate layers 1311 are provided, and the plurality of first electrode plate layers 1311 are stacked in a first direction X. At least a part of the accommodating groove 1401 is a first groove 14011, and the first groove 14011 extends in the first direction X.

As shown in FIG. 9, in some examples, the electrode assembly 130 is a flat wound structure, a part of the electrode assembly 130 with a flat structure is the flat portion 1302, a part of the first electrode plate 131 located in the flat portion 1302 is substantially arranged flat, a layer of flat structure of the first electrode plate 131 in the flat portion 1302 is a first electrode plate layer 1311, and the first electrode plate 131 is wound more than one turn, forming a plurality of first electrode plate layers 1311. A stacking direction of the plurality of first electrode plate layers 1311 is the first direction X.

The electrode assembly 130 further includes curved portions 1303. Two ends of the flat portion 1302 are each connected with a curved portion 1303. A part of the electrode assembly 130 with a bent structure is the curved portion 1303, and a part of the first electrode plate 131 located in the curved portion 1303 is substantially distributed in a bent manner. By way of example, the part of the first electrode plate 131 in the curved portion 1303 is a semicircular arc structure or a structure similar to a semicircular arc.

As shown in FIG. 10, FIG. 13, and FIG. 14, in some examples, the electrode assembly 130 is a laminated structure, the electrode assembly 130 is entirely a flat structure, and a layer of flat structure of the first electrode plate 131 in the flat portion 1302 is a first electrode plate layer 1311; and a plurality of first electrode plates 131 are provided, and one first electrode plate 131 is one first electrode plate layer 1311; or, the first electrode plate 131 is folded to form a plurality of first electrode plate layers 1311. The stacking direction of the plurality of first electrode plate layers 1311 is the first direction X.

The first groove 14011 is one accommodating groove 1401, and one or more first grooves 14011 may be provided; when one accommodating groove 1401 is provided, the accommodating groove 1401 is the first groove 14011; and when a plurality of accommodating grooves 1401 are provided, one or more first grooves 14011 may be provided.

By way of example, some of the plurality of accommodating grooves 1401 are first grooves 14011, and some are other groove structures.

By way of example, all of the plurality of accommodating grooves 1401 are first grooves 14011, and each accommodating groove 1401 is referred to as a first groove 14011.

The first groove 14011 extends in the first direction X. It can be understood that the first groove 14011 has a certain dimension in the first direction X, and the dimension l₁ of the first groove 14011 in the first direction X can be greater than a dimension l₂ of the first groove 14011 in the second direction Y, but it is not required that the dimension l₁ of the first groove 14011 in the first direction X is greater than the dimension l₂ of the first groove 14011 in the second direction Y.

With the adoption of the technical solution of the embodiments, the first groove 14011 extends along a stacking direction of the plurality of first electrode plate layers 1311, which facilitates the flow of the electrolyte accommodated in the first groove 14011 to the plurality of first electrode plate layers 1311, thereby wetting the plurality of first electrode plate layers 1311, improving the overall wetting effect of the electrode assembly 130, and enhancing the cycle performance of the battery cell 100.

In some embodiments, at least one first groove 14011 spans at least two adjacent first electrode plate layers 1311 in the first direction X.

In some examples, in the thickness direction Z of the support member 140, a projection of one or more first grooves 14011 intersects with projections of two adjacent first electrode plate layers 1311. A dimension l₁ of one or more first grooves 14011 in the first direction X is greater than a dimension a of two adjacent first electrode plate layers 1311 in the first direction X.

With the adoption of the technical solution of the embodiments, the first groove 14011 can supply the electrolyte to at least two adjacent first electrode plate layers 1311, thereby wetting a plurality of first electrode plate layers 1311, which is beneficial for improving the overall wetting effect of the electrode assembly 130 and enhancing the cycle performance of the battery cell 100.

In some embodiments, the support member 140 includes a plurality of first branch portions 141 arranged in a second direction Y, and at least one first groove 14011 is formed between two adjacent first branch portions 141; and the second direction Y is perpendicular to the first direction X and the thickness direction Z of the support member 140.

A plurality of first branch portions 141 are provided. The plurality of first branch portions 141 are arranged in the second direction Y, and the space between two adjacent first branch portions 141 may form one or more first grooves 14011.

By way of example, one first groove 14011 may be formed between two adjacent first branch portions 141.

By way of example, two first grooves 14011 may be formed between two adjacent first branch portions 141, and the two first grooves 14011 are arranged in the first direction X.

In some examples, the first branch portion 141 refers to a strip structure extending in the first direction X, the plurality of first branch portions 141 are spaced apart in the second direction Y, and the space between two adjacent first branch portions 141 may form one first groove 14011 or two first grooves 14011.

In some examples, the first branch portion 141 refers to a strip structure inclined relative to the first direction X, and the space between two adjacent first branch portions 141 may form one first groove 14011.

With the adoption of the technical solution of the embodiments, the support member 140 adopts a structure of a plurality of first branch portions 141 arranged in the second direction Y, which is simple in structure and convenient to process and manufacture.

In some embodiments, the support member 140 further includes a connecting portion 142, the plurality of first branch portions 141 are spaced apart in the second direction Y, and two adjacent first branch portions 141 are connected through the connecting portion 142.

The plurality of first branch portions 141 are spaced apart in the second direction Y, and a gap between two adjacent first branch portions 141 may form one first groove 14011 or two first grooves 14011.

The connecting portion 142 may refer to a part of the support member 140 used to connect two adjacent first branch portions 141. The connecting portion 142 may be perpendicularly connected to the first branch portions 141, or the connecting portion 142 may be inclined relative to the first branch portions 141. The connecting portion 142 and the first branch portions 141 may be manufactured by an integral injection molding or monolithic machining process, or the connecting portion 142 and the first branch portions 141 may be separately formed and then assembled together.

With the adoption of the technical solution of the embodiments, two adjacent first branch portions 141 are connected through the connecting portion 142, which can increase the structural strength of the support member 140 and is beneficial for improving the reliability of use of the battery cell 100.

In some embodiments, two ends of the connecting portion 142 are respectively connected to a middle portion of a respective one of two adjacent first branch portions 141, two first grooves 14011 are formed between two adjacent first branch portions 141, and the two first grooves 14011 are respectively located on two opposite sides of the connecting portion 142 in the first direction X.

By way of example, the connecting portion 142 may be connected between the middle portions of two adjacent first branch portions 141, and the connecting portion 142 divides a gap between two adjacent first branch portions 141 into two parts, thereby forming two first grooves 14011. The dividing lines between the connecting portion 142 and the two adjacent first branch portions 141 may be seen as dashed lines N and O in FIG. 16.

With the adoption of the technical solution of the embodiments, the connecting portion 142 is connected to the middle portions of two first branch portions 141, forming two first grooves 14011, the two first grooves 14011 are spaced apart in the first direction X, and the electrolyte flows to two sides of the electrode assembly 130 within the battery cell 100 through the first grooves 14011 on two opposite sides of the support member 140 in the first direction X, which is beneficial for improving the wetting effect of the electrode assembly 130 and enhancing the cycle performance of the battery cell 100.

In some embodiments, the support member 140 has a first side surface 14051 and a second side surface 14052 distributed oppositely in the first direction X, a distance between at least one connecting portion 142 and the first side surface 14051 is not equal to a distance between the connecting portion 142 and the second side surface 14052; and/or, two of the first grooves 14011 located on two opposite sides of a same connecting portion 142 in the first direction X have unequal dimensions in the first direction X.

Of the two side surfaces 1405 of the support member 140 distributed oppositely in the first direction X, one side surface 1405 is the first side surface 14051, and the other side surface 1405 is the second side surface 14052.

In some examples, end surfaces of all the first branch portions 141 on a same side of the support member 140 in the first direction X collectively form the first side surface 14051, and end surfaces of all the first branch portions 141 on another side of the support member 140 in the first direction X collectively form the second side surface 14052. The first side surface 14051 and the second side surface 14052 may be flat surface structures, V-shaped surface structures, or the like.

In some examples, dimensions c₁ of the plurality of first branch portions 141 in the first direction X are equal, the plurality of first branch portions 141 are arranged side by side, and the first side surface 14051 and the second side surface 14052 are flat surfaces. In other examples, dimensions c₁ of the plurality of first branch portions 141 in the first direction X may alternatively be unequal.

For a same connecting portion 142, a distance D₁ between the connecting portion 142 and the first side surface 14051 is greater than or less than a distance D₂ between the connecting portion 142 and the second side surface 14052, such that the connecting portion 142 is not located in the central region of the support member 140 in the first direction X, thereby forming two first grooves 14011 with different dimensions in the first direction X. One or more connecting portions 142 not located in the central region of the support member 140 in the first direction X are provided.

Of the two first grooves 14011 located on two opposite sides of a same connecting portion 142 in the first direction X, a dimension l₁ in the first direction X of the first groove 14011 near the first side surface 14051 is not equal to a dimension l₁ in the first direction X of the first groove 14011 away from the first side surface 14051. Of these two first grooves 14011, a dimension l₁ in the first direction X of one first groove 14011 is greater than or less than a dimension l₁ in the first direction X of the other first groove 14011.

In some examples, the support member 140 has a first side surface 14051 and a second side surface 14052 distributed oppositely in the first direction X, and a distance between at least one connecting portion 142 and the first side surface 14051 is not equal to a distance between the connecting portion 142 and the second side surface 14052.

In some examples, two first grooves 14011 located on two opposite sides of a same connecting portion 142 in the first direction X have unequal dimensions in the first direction X.

In some examples, the support member 140 has a first side surface 14051 and a second side surface 14052 distributed oppositely in the first direction X, a distance between at least one connecting portion 142 and the first side surface 14051 is not equal to a distance between the connecting portion 142 and the second side surface 14052; and two first grooves 14011 located on two opposite sides of a same connecting portion 142 in the first direction X have unequal dimensions in the first direction X.

In some cases, it is difficult for the electrolyte to reach the central region of the electrode assembly 130 within the battery cell 100 in the first direction X. With the adoption of the technical solution of the embodiments, at least one connecting portion 142 may not be located in the central region of the support member 140 in the first direction X, such that the first groove 14011 may extend to the central region of the electrode assembly 130 within the battery cell 100 in the first direction X, thereby supplying electrolyte to the central region of the electrode assembly 130 within the battery cell 100 in the first direction X, improving the wetting effect in the central region of the electrode assembly 130 within the battery cell 100 in the first direction X, improving the wetting effect of the electrode assembly 130, and enhancing the cycle performance of the battery cell 100.

In some embodiments, a plurality of connecting portions 142 are provided, the plurality of connecting portions 142 include at least one first connecting portion 1421 and at least one second connecting portion 1422; the support member 140 has a first side surface 14051, and the first side surface 14051 is located on one side of the support member 140 in the first direction X; and distances between all the first connecting portions 1421 and the first side surface 14051 are not equal to distances between all the second connecting portions 1422 and the first side surface 14051.

The first connecting portion 1421 is one connecting portion 142, the second connecting portion 1422 is one connecting portion 142, and a plurality of first connecting portions 1421 and second connecting portions 1422 may be provided.

By way of example, the quantity of first connecting portions 1421 may be equal to or different from the quantity of second connecting portions 1422. The quantity of connecting portions 142 is greater than or equal to a sum of the quantity of first connecting portions 1421 and the quantity of second connecting portions 1422.

By way of example, distances d₁ between all the first connecting portions 1421 and the first side surface 14051 are equal, distances d₂ between all the second connecting portions 1422 and the first side surface 14051 are equal, and the distance d₁ between the first connecting portions 1421 and the first side surface 14051 is greater than or less than the distance d₂ between the second connecting portions 1422 and the first side surface 14051.

With the adoption of the technical solution of the embodiments, the distances between all the first connecting portions 1421 and the first side surface 14051 are not equal to the distances between all the second connecting portions 1422 and the first side surface 14051, such that the first connecting portions 1421 and the second connecting portions 1422 are arranged in an offset configuration, which can distribute the pressure of the electrode assembly 130 on the support member 140, reduce stress concentration in the support member 140, reduce the risk of deformation of the support member 140, and improve the reliability of use of the battery cell 100.

In some embodiments, the support member 140 has a central axis M, the central axis M is parallel to the second direction Y; and at least one first connecting portion 1421 is located on one side of the central axis M in the first direction X, and at least one second connecting portion 1422 is located on another side of the central axis M in the first direction X.

By way of example, the central axis M is equidistant from the first side surface 14051 and the second side surface 14052, the central axis M is parallel or approximately parallel to the second direction Y. The central axis M may divide the support member 140 into two symmetrical parts. A connecting portion 142 located on one side of the central axis M in the first direction X is the first connecting portion 1421, and one or more first connecting portions 1421 are provided. A connecting portion 142 located on another side of the central axis M in the first direction X is the second connecting portion 1422, and one or more second connecting portions 1422 are provided. The central axis M is located between the first connecting portions 1421 and the second connecting portions 1422.

With the adoption of the technical solution of the embodiments, the first connecting portions 1421 and the second connecting portions 1422 are respectively distributed on two opposite sides of the support member 140 in the first direction X, such that two opposite side portions of the support member 140 in the first direction X have good structural strength and can effectively distribute the pressure of the electrode assembly 130 on the support member 140, reducing stress concentration in the support member 140, reducing the risk of deformation of the support member 140, and improving the reliability of use of the battery cell 100.

In some embodiments, a plurality of first connecting portions 1421 are provided, and the plurality of first connecting portions 1421 are distributed in a straight line in the second direction Y; and/or, a plurality of second connecting portions 1422 are provided, and the plurality of second connecting portions 1422 are distributed in a straight line in the second direction Y.

In some examples, the plurality of first connecting portions 1421 are distributed in a straight line in the second direction Y, and projections of the plurality of first connecting portions 1421 in the second direction Y coincide.

In some examples, the plurality of second connecting portions 1422 are distributed in a straight line in the second direction Y, and projections of the plurality of second connecting portions 1422 in the second direction Y coincide.

In some examples, the plurality of first connecting portions 1421 are distributed in a straight line in the second direction Y, and the plurality of second connecting portions 1422 are distributed in a straight line in the second direction Y.

With the adoption of the technical solution of the embodiments, the plurality of connecting portions 142 are regularly distributed, making the processing and manufacturing of the support member 140 simple and convenient. In addition, the pressure of the electrode assembly 130 on the support member 140 can be effectively distributed, reducing stress concentration in the support member 140, reducing the risk of deformation of the support member 140, and improving the reliability of use of the battery cell 100.

In some embodiments, a plurality of first connecting portions 1421 are provided, a plurality of second connecting portions 1422 are provided, and the plurality of first connecting portions 1421 and the plurality of second connecting portions 1422 are alternately distributed in the second direction Y.

In the second direction Y, one second connecting portion 1422 is disposed between two adjacent first connecting portions 1421, or one first connecting portion 1421 is disposed between two adjacent second connecting portions 1422.

In some examples, the plurality of connecting portions 142 may be divided only into two types: first connecting portions 1421 and second connecting portions 1422.

In some examples, the plurality of connecting portions 142 are divided into first connecting portions 1421, second connecting portions 1422, and other types of connecting portions 142.

By way of example, in the second direction Y, the first connecting portion 142 is connected to the central region of the first and second first branch portions 141 in the first direction X; the last connecting portion 142 is connected to the central region of the last and second-to-last first branch portions 141 in the first direction X; and the plurality of connecting portions 142 between the first connecting portion 142 and the last connecting portion 142 consist of a plurality of first connecting portions 1421 and a plurality of second connecting portions 1422 alternately distributed in the second direction.

With the adoption of the technical solution of the embodiments, the plurality of first connecting portions 1421 and the plurality of second connecting portions 1422 are alternately distributed in the second direction Y, making the distribution of the connecting portions 142 more dispersed, which is beneficial for distributing the pressure of the electrode assembly 130 on the support member 140, reducing stress concentration in the support member 140, reducing the risk of deformation of the support member 140, and improving the reliability of use of the battery cell 100.

As shown in FIG. 17, in some embodiments, a plurality of connecting portions 142 are provided, and the plurality of connecting portions 142 are distributed in a straight line in the second direction Y.

By way of example, the boundary line of the connecting portion may be referred to the dashed frame P in FIG. 17.

With the adoption of the technical solution of the embodiments, the structure of the support member 140 is regular, making processing and manufacturing simple.

In some embodiments, the support member 140 has a first side surface 14051 and a second side surface 14052 distributed oppositely in the first direction X, a distance between at least one connecting portion 142 and the first side surface 14051 is equal to a distance between the connecting portion 142 and the second side surface 14052; and/or, two of the first grooves 14011 located on two opposite sides of a same connecting portion 142 in the first direction X have equal dimensions in the first direction X.

A distance between one or more connecting portions 142 and the first side surface 14051 is equal to a distance between the connecting portion 142 and the second side surface 14052, such that one or more connecting portions 142 are located in the central region of the support member 140 in the first direction X, thereby forming two first grooves 14011 with the same dimension in the first direction X.

For a same connecting portion 142, a distance D₁ between the connecting portion 142 and the first side surface 14051 is equal to a distance D₂ between the connecting portion 142 and the second side surface 14052, such that the connecting portion 142 is located in the central region of the support member 140 in the first direction X, thereby forming two first grooves 14011 with a same dimension in the first direction X. One or more connecting portions 142 located in the central region of the support member 140 in the first direction X are provided.

Of the two first grooves 14011 located on two opposite sides of the same connecting portion 142 in the first direction X, a dimension l₁ in the first direction X of the first groove 14011 near the first side surface 14051 is equal to a dimension l₁ in the first direction X of the first groove 14011 away from the first side surface 14051. Of these two first grooves 14011, a dimension l₁ in the first direction X of one first groove 14011 is equal to a dimension l₁ in the first direction X of the other first groove 14011.

In some examples, the support member 140 has a first side surface 14051 and a second side surface 14052 distributed oppositely in the first direction X, and a distance between at least one connecting portion 142 and the first side surface 14051 is equal to a distance between the connecting portion 142 and the second side surface 14052.

In some examples, two first grooves 14011 located on two opposite sides of a same connecting portion 142 in the first direction X have equal dimensions in the first direction X.

In some examples, the support member 140 has a first side surface 14051 and a second side surface 14052 distributed oppositely in the first direction X, a distance between at least one connecting portion 142 and the first side surface 14051 is equal to a distance between the connecting portion 142 and the second side surface 14052; and two first grooves 14011 located on two opposite sides of a same connecting portion 142 in the first direction X have equal dimensions in the first direction X.

With the adoption of the technical solution of the embodiments, the first grooves 14011 on two opposite sides of a same connecting portion 142 have equal the dimensions in the first direction X, such that two opposite sides of the electrode assembly 130 within the battery cell 100 in the first direction X can achieve good wetting, which is beneficial for improving the cycle performance of the battery cell 100.

As shown in FIG. 18, in some embodiments, at least two first grooves 14011 located on a same side of the connecting portion 142 and arranged in the second direction Y have different dimensions l₁ in the first direction X.

Of the plurality of first grooves 14011 located on a same side of the connecting portion 142 in the first direction X, two or three or more first grooves 14011 have different dimensions l₁ in the first direction X, such that portions of the plurality of first branch portions 141 on a same side of the support member 140 in the first direction X have different dimensions, and a notch may be formed on one side of the support member 140 in the first direction X.

With the adoption of the technical solution of the embodiments, a notch may be formed on one side of the support member 140 in the first direction X, the notch may accommodate the electrolyte, and the electrolyte accommodated in the notch may directly wet the electrode assembly 130, which is beneficial for improving the cycle performance of the battery cell 100.

In some embodiments, at least three first grooves 14011 located on a same side of the connecting portion 142 and arranged in the second direction Y have dimensions l₁ in the first direction X that gradually increase; and/or, another at least three first grooves 14011 located on a same side of the connecting portion 142 and arranged in the second direction Y have dimensions l₁ in the first direction X that gradually decrease.

In some examples, at least three first grooves 14011 located on a same side of the connecting portion 142 and arranged in the second direction Y have dimensions l₁ in the first direction X that gradually increase. Of the plurality of first grooves 14011 located on the same side of the connecting portion 142 in the first direction X, three or four or more first grooves 14011 arranged consecutively may have dimensions l₁ in the first direction X that gradually increase, or three or four or more first grooves 14011 arranged non-consecutively may have dimensions l₁ in the first direction X that gradually increase.

In some examples, another at least three first grooves 14011 located on a same side of the connecting portion 142 and arranged in the second direction Y have dimensions l₁ in the first direction X that gradually decrease. Of the plurality of first grooves 14011 located on a same side of the connecting portion 142 in the first direction X, three or four or more first grooves 14011 arranged consecutively in the second direction Y may have dimensions l₁ in the first direction X that gradually decrease, or three or four or more first grooves 14011 arranged non-consecutively in the second direction Y may have dimensions l₁ in the first direction X that gradually decrease.

In some examples, at least three first grooves 14011 located on a same side of the connecting portion 142 and arranged in the second direction Y have dimensions l₁ in the first direction X that gradually increase; and another at least three first grooves 14011 located on a same side of the connecting portion 142 and arranged in the second direction Y have dimensions l₁ in the first direction X that gradually decrease. Of the plurality of first grooves 14011 located on a same side of the connecting portion 142 in the first direction X, three or four or more first grooves 14011 arranged consecutively in the second direction Y have dimensions l₁ in the first direction X that gradually increase, and three or four or more first grooves 14011 arranged non-consecutively in the second direction Y have dimensions l₁ in the first direction X that gradually increase; and another three or four or more first grooves 14011 arranged consecutively in the second direction Y have dimensions l₁ in the first direction X that gradually decrease, and another three or four or more first grooves 14011 arranged non-consecutively in the second direction Y have dimensions l₁ in the first direction X that gradually decrease.

With the adoption of the technical solution of the embodiments, a notch may be formed on one side of the support member 140 in the first direction X, the notch may accommodate the electrolyte, and the electrolyte accommodated in the notch may directly wet the electrode assembly 130, which is beneficial for improving the cycle performance of the battery cell 100.

In some embodiments, at least three consecutively arranged first grooves 14011 located on a same side of the connecting portion 142 and arranged in the second direction Y have dimensions l₁ in the first direction X that first decrease and then increase.

Of the plurality of first grooves 14011 located on the same side of the connecting portion 142 and arranged in the second direction Y, at least three or four or more consecutively arranged first grooves 14011 have dimensions l₁ in the first direction X that first decrease and then increase.

With the adoption of the technical solution of the embodiments, a V-shaped notch may be formed on one side of the support member 140 in the first direction X, the V-shaped notch may accommodate the electrolyte, and the electrolyte accommodated in the V-shaped notch may directly wet the electrode assembly 130, which is beneficial for improving the cycle performance of the battery cell 100. In addition, the structural strength of the support member 140 can be effectively ensured, which is beneficial for improving the reliability of use of the battery cell 100.

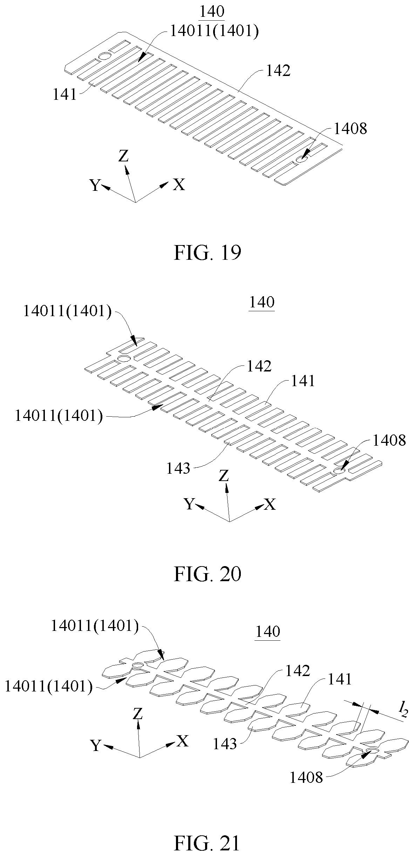

As shown in FIG. 19, in some embodiments, two adjacent first branch portions 141 are connected to a same side of the connecting portion 142 in the first direction X and form one first groove 14011.

By way of example, the connecting portion 142 is connected to a same end portion of two adjacent first branch portions 141 in the first direction X, thereby forming one first groove 14011. The end portions of two adjacent first branch portions 141 are connected to a same side of the connecting portion 142, and the two adjacent first branch portions 141 are located on the same side of the connecting portion 142.

With the adoption of the technical solution of the embodiments, the support member 140 has a simple structure and is convenient to process and manufacture. In addition, the connecting portion 142 is located at an end portion of the first branch portion 141, and the first groove 14011 can extend from one side of the electrode assembly 130 within the battery cell 100 to the other side in the first direction X, which is beneficial for guiding the electrolyte to wet the central region of the electrode assembly 130 within the battery cell 100, improving the cycle performance of the battery cell 100.

In some embodiments, a plurality of first grooves 14011 are provided, the plurality of first grooves 14011 are arranged in the second direction Y, and dimensions l₁ in the first direction X of at least two first grooves 14011 are equal.

Two or more first grooves 14011 have equal dimensions l₁ in the first direction X.

With the adoption of the technical solution of the embodiments, the structure of the support member 140 is regular and simple, making processing and manufacturing convenient.

As shown in FIG. 20, in some embodiments, the support member 140 further includes a plurality of second branch portions 143 spaced apart in the second direction Y, two adjacent second branch portions 143 are connected to a side of the connecting portion 142 facing away from the first branch portions 141, and one first groove 14011 is formed between two adjacent second branch portions 143.

The first branch portions 141 and the second branch portions 143 are located on two opposite sides of the connecting portion 142 in the first direction X, and the plurality of first branch portions 141 and the plurality of second branch portions 143 may be arranged in a one-to-one correspondence or in an offset configuration.

With the adoption of the technical solution of the embodiments, the support member 140 is provided with first grooves 14011 on two opposite sides in the first direction X, and the electrolyte can wet the corresponding two opposite sides of the electrode assembly 130 within the battery cell 100 through the first grooves 14011 on two opposite sides of the support member 140, which is beneficial for improving the cycle performance of the battery cell 100.

In some embodiments, in the first direction X, a projection of at least one first branch portion 141 does not completely overlap with projections of all second branch portions 143.

Projections of all second branch portions 143 in the first direction X are a plurality of projection images spaced apart in the second direction Y, and projections of one or more first branch portions 141 in the first direction X do not completely coincide with any of the plurality of projection images.

By way of example, at least one first branch portion 141 and a corresponding second branch portion 143 are arranged in an offset configuration.

With the adoption of the technical solution of the embodiments, the first branch portions 141 and the second branch portions 143 are distributed in an offset configuration, which is beneficial for distributing the pressure of the electrode assembly 130 on the support member 140, improving the uniformity of force on the connecting portion 142, reducing stress concentration, reducing the risk of deformation of the support member 140, and improving the reliability of use of the battery cell 100.

In some embodiments, in the second direction Y, a plurality of first branch portions 141 and a plurality of second branch portions 143 are alternately distributed.

One second branch portion 143 is correspondingly disposed between two adjacent first branch portions 141, or one first branch portion 141 is correspondingly disposed between two adjacent second branch portions 143.

With the adoption of the technical solution of the embodiments, the first branch portions 141 and the second branch portions 143 are distributed in an offset configuration and dispersed on two sides of the support member 140, effectively distributing the pressure of the electrode assembly 130 on the support member 140, improving the uniformity of force on the connecting portion 142, reducing stress concentration, reducing the risk of deformation of the support member 140, and improving the reliability of use of the battery cell 100.

As shown in FIG. 21, in some embodiments, in the first direction X, at least one first groove 14011 has a dimension l₂ in the second direction Y that first decreases and then increases.

By way of example, a first branch portion 141 or a part of a first branch portion 141 located on one side of the connecting portion 142 in the first direction X is a diamond-shaped structure, a corner of the diamond-shaped structure is connected to one side of the connecting portion 142, and in the first direction X, a distance between two adjacent first branch portions 141 in the second direction Y first decreases and then increases.

By way of example, the second branch portion 143 may be a diamond-shaped structure, a corner of the diamond-shaped structure is connected to one side of the connecting portion 142, and a distance between two adjacent second branch portions 143 in the first direction X first decreases and then increases.

With the adoption of the technical solution of the embodiments, the first groove 14011 may form a Laval-type nozzle structure, and during the process of the electrolyte flowing into the first groove 14011 from an opening of the first groove 14011 facing away from the connecting portion 142 and moving toward the connecting portion 142, the flow area of the electrolyte first gradually decreases, the flow velocity of the electrolyte increases, and the static pressure decreases; and after the electrolyte passes through the section of the first groove 14011 with the minimum flow area, the flow velocity of the electrolyte further increases, improving the flow efficiency of the electrolyte into the electrode assembly 130, improving the wetting effect of the electrode assembly 130, and enhancing the cycle performance of the battery cell 100.

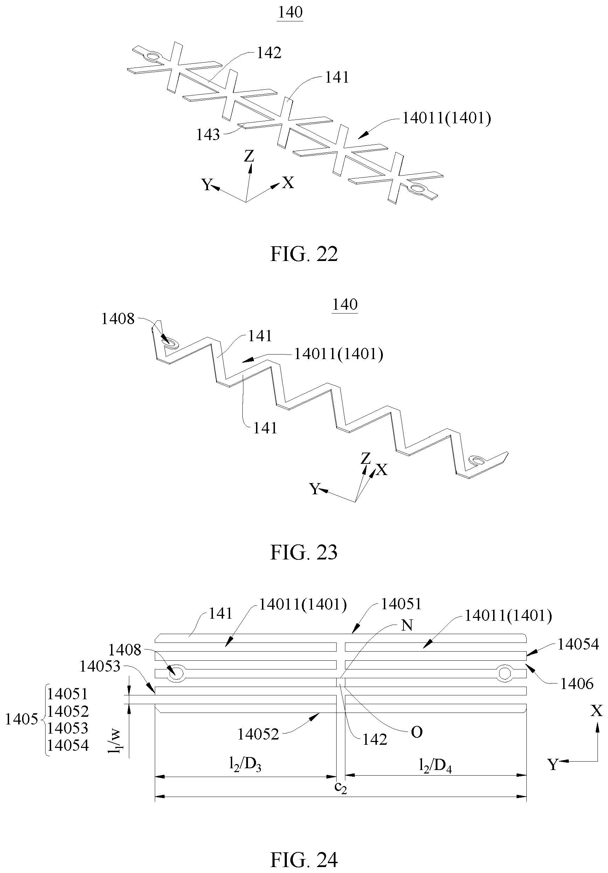

As shown in FIG. 22, in some embodiments, two adjacent first branch portions 141 are arranged at an angle to each other.

By way of example, the first branch portion 141 is inclined relative to the second direction Y, an angle between two adjacent first branch portions 141 may be 30°, 60°, 90°, or the like, and the first branch portion 141 and the connecting portion 142 are also arranged at an angle to each other.

By way of example, two first branch portions 141 located on a same side of the support member 140 and consecutively arranged in the second direction Y form a first branch portion group, a plurality of first branch portion groups are provided, the plurality of first branch portion groups are spaced apart in the second direction Y, and one first groove 14011 may be formed between two adjacent first branch portion groups. In each first branch portion group, end portions of two first branch portions 141 near the connecting portion 142 intersect and are connected to the connecting portion 142, and the two first branch portions 141 form a V-shaped structure.

With the adoption of the technical solution of the embodiments, two adjacent first branch portions 141 are arranged at an angle to each other, and the support force of the support member 140 on the electrode assembly 130 may be distributed obliquely along the first branch portions 141, which is beneficial for distributing the support force and improving the reliability of use of the battery cell 100.

In some embodiments, the support member 140 further includes a plurality of second branch portions 143 spaced apart in the second direction Y, two adjacent second branch portions 143 are connected to a side of the connecting portion 142 facing away from the first branch portions 141, and two adjacent second branch portions 143 are arranged at an angle to each other and form one first groove 14011.

By way of example, the second branch portion 143 is inclined relative to the second direction Y, an angle between two adjacent second branch portions 143 may be 30°, 60°, 90°, or the like, and the second branch portion 143 and the connecting portion 142 are also arranged at an angle to each other.

By way of example, two second branch portions 143 located on a same side of the support member 140 and consecutively arranged in the second direction Y form a second branch portion group, a plurality of second branch portion groups are provided, the plurality of second branch portion groups are spaced apart in the second direction Y, and one first groove 14011 may be formed between two adjacent second branch portion groups. In each second branch portion group, end portions of the two second branch portions 143 near the connecting portion 142 intersect and are connected to the connecting portion 142, and the two second branch portions 143 form a V-shaped structure.

The first branch portion groups and the second branch portion groups may be arranged in a one-to-one correspondence. By way of example, a first branch portion group and a corresponding second branch portion group may form an X-shaped structure.

Of course, in other examples, the first branch portion groups and the second branch portion groups may also be arranged in an offset configuration.

With the adoption of the technical solution of the embodiments, two adjacent second branch portions 143 are arranged at an angle to each other, and the support force of the support member 140 on the electrode assembly 130 may be distributed obliquely along the second branch portions 143, which is beneficial for distributing the support force and improving the reliability of use of the battery cell 100.

As shown in FIG. 23, in some embodiments, a plurality of first branch portions 141 are sequentially connected in the second direction Y, and two adjacent first branch portions 141 are arranged at an angle to each other and form one first groove 14011.

By way of example, the first branch portion 141 is inclined relative to the first direction X, an angle between two adjacent first branch portions 141 may be 30°, 60°, 90°, or the like, the two adjacent first branch portions 141 form a V-shaped structure, and the plurality of first branch portions 141 are sequentially connected to form a zigzag structure.

With the adoption of the technical solution of the embodiments, two adjacent first branch portions 141 are arranged at an angle to each other, and the support force of the support member 140 on the electrode assembly 130 may be distributed obliquely along the first branch portions 141, which is beneficial for distributing the support force and improving the reliability of use of the battery cell 100.

As shown in FIG. 24, in some embodiments, the electrode assembly 130 includes a flat portion 1302, a part of the first electrode plate 131 located in the flat portion 1302 includes a first electrode plate layer 1311, a plurality of first electrode plate layers 1311 are provided, the plurality of first electrode plate layers 1311 are stacked in a first direction X, and the second direction Y is perpendicular to the first direction X and the thickness direction Z of the support member 140. At least a part of the accommodating groove 1401 is a first groove 14011, and the first groove 14011 extends in the second direction Y.

The first groove 14011 extends in the second direction Y. It can be understood that the first groove 14011 has a certain dimension in the second direction Y, and the dimension l₂ of the first groove 14011 in the second direction Y can be greater than a dimension l₁ of the first groove 14011 in the first direction X, but it is not required that the dimension l₂ of the first groove 14011 in the second direction Y is greater than the dimension l₁ of the first groove 14011 in the first direction X.

With the adoption of the technical solution of the embodiments, the first groove 14011 extends in a direction perpendicular to the stacking direction of the plurality of first electrode plate layers 1311 and the thickness direction Z of the support member 140, such that the first groove 14011 can extend in a length direction of the first electrode plate layers 1311, allowing the electrolyte accommodated in the first groove 14011 to effectively wet the first electrode plate layers 1311, improving the wetting effect of the electrode assembly 130, and enhancing the cycle performance of the battery cell 100.

In some embodiments, the support member 140 includes a connecting portion 142 and a plurality of first branch portions 141 that are spaced apart in the first direction X, two ends of the connecting portion 142 are respectively connected to a middle portion of a respective one of two adjacent first branch portions 141; and two first grooves 14011 are formed between two adjacent first branch portions 141, and the two first grooves 14011 are respectively located on two opposite sides of the connecting portion 142 in the second direction Y.

A plurality of first branch portions 141 are provided. The plurality of first branch portions 141 are spaced apart in the first direction X, and the connecting portion 142 is connected to middle portions of two adjacent first branch portions 141, thereby forming two first grooves 14011 between two adjacent first branch portions 141.

In some examples, the first branch portion 141 refers to a strip structure extending in the second direction Y, the plurality of first branch portions 141 are spaced apart in the first direction X, the connecting portion 142 is perpendicularly connected between two adjacent first branch portions 141, and the space between two adjacent first branch portions 141 may form two first grooves 14011.

By way of example, the connecting portion 142 may be connected between the middle portions of two adjacent first branch portions 141, and the connecting portion 142 divides a gap between two adjacent first branch portions 141 into two parts, thereby forming two first grooves 14011. The dividing lines between the connecting portion 142 and the two adjacent first branch portions 141 may be seen as dashed lines N and O in FIG. 24.

With the adoption of the technical solution of the embodiments, two adjacent first branch portions 141 are connected through the connecting portion 142, which can increase the structural strength of the support member 140 and is beneficial for improving the reliability of use of the battery cell 100. In addition, the support member 140 has a simple structure and is convenient to process and manufacture.

In some embodiments, the support member 140 has a third side surface 14053 and a fourth side surface 14054 distributed oppositely in the second direction Y, a distance between at least one connecting portion 142 and the third side surface 14053 is equal to a distance between the connecting portion 142 and the fourth side surface 14054; and/or, two first grooves 14011 located on two opposite sides of a same connecting portion 142 in the second direction Y have equal dimensions l₂ in the second direction Y.

Of the two side surfaces 1405 of the support member 140 distributed oppositely in the second direction Y, one side surface 1405 is the third side surface 14053, and the other side surface 1405 is the fourth side surface 14054.

In some examples, end surfaces of all the first branch portions 141 on a same side of the support member 140 in the second direction Y collectively form the third side surface 14053, and end surfaces of all the first branch portions 141 on another side of the support member 140 in the second direction Y collectively form the fourth side surface 14054. The third side surface 14053 and the fourth side surface 14054 may be flat surfaces or structures similar to V-shaped surfaces.

In some examples, the plurality of first branch portions 141 in the second direction Y have equal dimensions c₂. The plurality of first branch portions 141 are arranged side by side, and the third side surface 14053 and the fourth side surface 14054 are flat surfaces. Of course, in other examples, the plurality of first branch portions 141 in the second direction Y may have unequal dimensions c₂.

For a same connecting portion 142, a distance D₃ between the connecting portion 142 and the third side surface 14053 is equal to a distance D₄ between the connecting portion 142 and the fourth side surface 14054, such that the connecting portion 142 is located in the central region of the support member 140 in the second direction Y, thereby forming two first grooves 14011 with different dimensions in the second direction Y. One or more connecting portions 142 located in the central region of the support member 140 in the second direction Y are provided.

Of the two first grooves 14011 located on two opposite sides of the same connecting portion 142 in the second direction Y, a dimension l₂ of the first groove 14011 near the third side surface 14053 in the second direction Y is equal to a dimension l₂ of the first groove 14011 away from the third side surface 14053 in the second direction Y. Of these two first grooves 14011, a dimension l₂ of one first groove 14011 in the second direction Y is equal to a dimension l₂ of the other first groove 14011 in the second direction Y.

In some examples, the support member 140 has a third side surface 14053 and a fourth side surface 14054 distributed oppositely in the second direction Y, and a distance between at least one connecting portion 142 and the third side surface 14053 is equal to a distance between the connecting portion 142 and the fourth side surface 14054.

In some examples, two first grooves 14011 located on two opposite sides of a same connecting portion 142 in the second direction Y have equal dimensions l₂ in the second direction Y.

In some examples, the support member 140 has a third side surface 14053 and a fourth side surface 14054 distributed oppositely in the second direction Y, a distance between at least one connecting portion 142 and the third side surface 14053 is equal to a distance between the connecting portion 142 and the fourth side surface 14054; and two first grooves 14011 located on two opposite sides of a same connecting portion 142 in the second direction Y have equal dimensions l₂ in the second direction Y.

With the adoption of the technical solution of the embodiments, the first grooves 14011 on two opposite sides of the same connecting portion 142 have equal dimensions l₂ in the second direction Y, such that two opposite sides of the electrode assembly 130 within the battery cell 100 in the second direction Y can achieve good wetting, which is beneficial for improving the cycle performance of the battery cell 100.

In some embodiments, a plurality of connecting portions 142 are provided, and the plurality of connecting portions 142 are distributed in a straight line in the first direction X.

With the adoption of the technical solution of the embodiments, the structure of the support member 140 is regular, making processing and manufacturing simple.

As shown in FIG. 16 and FIG. 24, in some embodiments, in a direction perpendicular to an extending direction of the first groove 14011 and the thickness direction Z of the support member 140, a dimension of the first groove 14011 ranges from 0.5 mm to 30 mm.

In a direction perpendicular to the extending direction of the first groove 14011 and the thickness direction Z of the support member 140, a dimension of the first groove 14011 is denoted as w, where w may be a groove width of the first groove 14011.

By way of example, as shown in FIG. 16, the first groove 14011 extends in the first direction X, and w is a dimension l₂ of the first groove 14011 in the second direction Y.

By way of example, as shown in FIG. 24, the first groove 14011 extends in the second direction Y, and w is a dimension l₁ of the first groove 14011 in the first direction X.
w may be 0.5 mm, 30 mm, or any value between 0.5 mm and 30 mm. By way of example, w may include but is not limited to 0.5 mm, 1 mm, 3 mm, 5 mm, 7 mm, 9 mm, 10 mm, 15 mm, 20 mm, 25 mm, or 30 mm.

With the adoption of the technical solution of the embodiments, the support member 140 has good structural strength to effectively support the electrode assembly 130, and the first groove 14011 can accommodate a sufficient amount of electrolyte to wet the electrode assembly 130. In addition, when the first groove 14011 extends through a side surface 1405 of the support member 140, the electrolyte can flow into the electrode assembly 130 at an appropriate flow rate, improving the cycle performance of the battery cell 100.

As shown in FIG. 16, in some embodiments, in the thickness direction Z of the support member 140, a dimension of the first groove 14011 ranges from 0.1 mm to 3 mm.

In the thickness direction Z of the support member 140, a dimension of the first groove 14011 is denoted as h, where h may be a groove depth of the first groove 14011.

By way of example, the first groove 14011 extends through the support member 140 in the thickness direction of the support member 140, and h is a thickness T of the support member 140.

By way of example, the first groove 14011 does not extend through the support member 140 in the thickness direction of the support member 140, and h is less than the thickness T of the support member 140.
h may be 0.1 mm, 3 mm, or any value between 0.1 mm and 3 mm. By way of example, h may include but is not limited to 0.1 mm, 0.2 mm, 0.5 mm, 0.8 mm, 1 mm, 1.5 mm, 2 mm, 2.5 mm, or 3 mm.

With the adoption of the technical solution of the embodiments, the first groove 14011 can accommodate a sufficient amount of electrolyte to wet the electrode assembly 130. The thickness of the support member 140 can be reasonably set, which is beneficial for improving the energy density of the battery cell 100.

As shown in FIG. 16 and FIG. 24, in some embodiments, the support member 140 has a first surface 1403 and a second surface 1404 oppositely disposed in its thickness direction and a side surface 1405 connected between the first surface 1403 and the second surface 1404, the first surface 1403 faces the first end surface 1301, the second surface 1404 faces away from the first end surface 1301, the first opening 1402 is located on the first surface 1403, and at least one accommodating groove 1401 extends through the side surface 1405 and forms a second opening 1406.

Of the two surfaces of the support member 140 oppositely disposed in the thickness direction, a surface facing the electrode assembly 130 is the first surface 1403, a surface facing the first wall 113 is the second surface 1404, the support member 140 is in direct contact with the first end surface 1301, the first opening 1402 is provided on the first surface 1403, and an outer peripheral surface connected between the first surface 1403 and the second surface 1404 is the side surface 1405. One or more accommodating grooves 1401 extend through the side surface 1405, and an opening formed by one accommodating groove 1401 extending through the side surface 1405 is the second opening 1406.

By way of example, the side surface 1405 includes a first side surface 14051, a second side surface 14052, a third side surface 14053, and a fourth side surface 14054, the first side surface 14051 and the second side surface 14052 are distributed oppositely in a width direction of the support member 140, and the third side surface 14053 and the fourth side surface 14054 are distributed oppositely in a length direction of the support member 140. One or more accommodating grooves 1401 may extend through at least one of the first side surface 14051, the second side surface 14052, the third side surface 14053, and the fourth side surface 14054.

With the adoption of the technical solution of the embodiments, the provision of the second opening 1406 allows the electrolyte outside the support member 140 and the electrode assembly 130 to flow into the accommodating groove 1401 through the second opening 1406, and then flow to the first end surface 1301 through the accommodating groove 1401 and the first opening 1402, effectively improving the wetting effect of the electrode assembly 130 and enhancing the cycle performance of the battery cell 100.

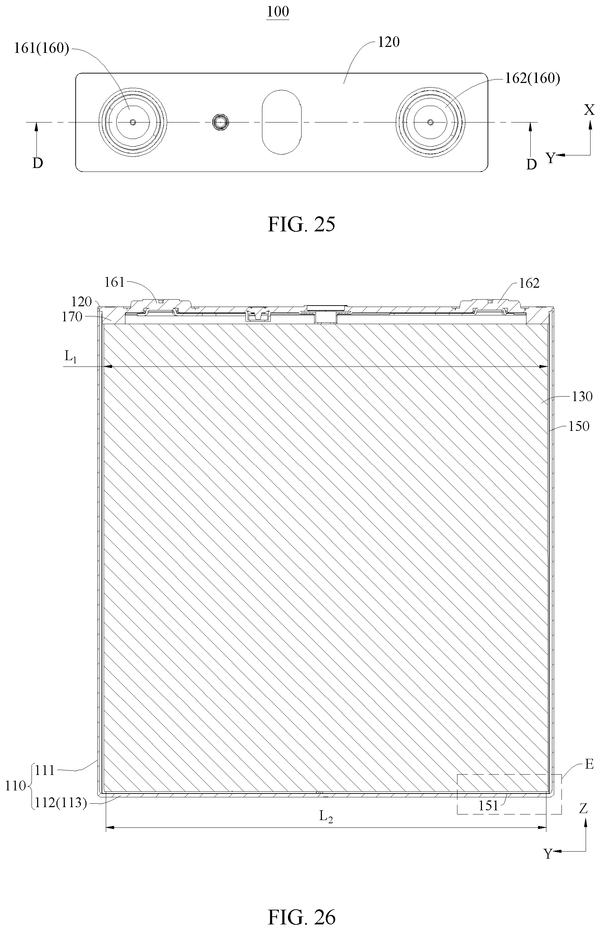

As shown in FIG. 8, and FIG. 25 to FIG. 27, in some embodiments, at least one side portion of the first end surface 1301 protrudes beyond the side surface 1405 and forms an accommodating space 1001, and the second opening 1406 is in communication with the accommodating space 1001.

In some examples, one electrode assembly 130 may be provided. A side portion of the first end surface 1301 at least protrudes beyond at least one of the first side surface 14051, the second side surface 14052, the third side surface 14053, and the fourth side surface 14054.

By way of example, two opposite side portions of the first end surface 1301 in the width direction of the support member 140 protrude beyond the first side surface 14051 and the second side surface 14052, respectively; and two opposite side portions of the first end surface 1301 in the length direction of the support member 140 protrude beyond the third side surface 14053 and the fourth side surface 14054, respectively. An annular space may be formed on the outer side of the support member 140, serving as the accommodating space 1001.

In some examples, a plurality of electrode assemblies 130 may be provided, the plurality of electrode assemblies 130 are stacked in the width direction of the support member 140, a side portion of the first end surface 1301 of an outermost electrode assembly 130 protrudes beyond at least one of the first side surface 14051 and the second side surface 14052, and a side portion of the first end surface 1301 of at least one electrode assembly 130 protrudes beyond at least one of the third side surface 14053 and the fourth side surface 14054.

By way of example, a plurality of electrode assemblies 130 may be provided. The plurality of electrode assemblies 130 are stacked in the width direction of the support member 140, and the first end surfaces 1301 of two outermost electrode assemblies 130 protrude beyond the first side surface 14051 and the second side surface 14052, respectively. Two opposite side portions of the first end surfaces 1301 of the plurality of electrode assemblies 130 in the length direction of the support member 140 protrude beyond the third side surface 14053 and the fourth side surface 14054, respectively. A length of the electrode assemblies 130 is greater than a length of the support member 140, and a sum of thicknesses of the plurality of electrode assemblies 130 is greater than a width of the support member 140. An annular space may be formed on the outer side of the support member 140, serving as the accommodating space 1001.

In some examples, the electrode assembly 130 is externally wrapped with a first insulating member 150, and a space defined by an inner surface of the first insulating member 150, an outer peripheral surface of the support member 140, and the first end surface 1301 is the accommodating space 1001. The accommodating space 1001 is in communication with the second opening 1406, and the electrolyte in the accommodating space 1001 may flow into the accommodating groove 1401 through the second opening 1406.

With the adoption of the technical solution of the embodiments, the electrolyte located in the accommodating space 1001 may enter the accommodating groove 1401 through the second opening 1406, and then flow to an end portion of the first electrode plate 131 through the accommodating groove 1401 and the first opening 1402, improving the wetting effect of the first electrode plate 131 and enhancing the cycle performance of the battery cell 100. In particular, in a case that the bottom wall of the housing 110 is the first wall 113, the electrolyte may accumulate in the accommodating space 1001, and the electrolyte in the accommodating space 1001 can wet the first electrode plate 131 through the accommodating groove 1401 and wet upward along the first electrode plate 131, effectively improving the wetting effect of the electrode assembly 130 and enhancing the cycle performance of the battery cell 100.

As shown in FIG. 8, FIG. 15, and FIG. 16, in some embodiments, at least one end of at least one accommodating groove 1401 in the first direction X extends through the side surface 1405 and forms the second opening 1406, and the first direction X is a width direction of the support member 140.

An opening formed by the accommodating groove 1401 extending through the side surface 1405 is the second opening 1406, one end of one accommodating groove 1401 extending through the side surface 1405 may form one second opening 1406, and two ends of one accommodating groove 1401 extending through the side surface 1405 may form two second openings 1406.

By way of example, the first groove 14011 extends in the first direction X. One or more first grooves 14011 have one end extending through the first side surface 14051, or one or more first grooves 14011 have the other end extending through the second side surface 14052, or one or more first grooves 14011 have two ends respectively extending through the first side surface 14051 and the second side surface 14052.

With the adoption of the technical solution of the embodiments, the electrolyte may enter the accommodating groove 1401 through the second opening 1406 formed by the accommodating groove 1401 on the side surface 1405, and then flow to the first end surface 1301 along the accommodating groove 1401, thereby wetting the first electrode plate 131, improving the wetting effect of the first electrode plate 131, and enhancing the cycle performance of the battery cell 100.

As shown in FIG. 7 and FIG. 8, in some embodiments, a width of the support member 140 is denoted as W, and a total dimension of all the electrode assemblies 130 in the first direction X is denoted as T₁, where 0.9 ≤ W/T₁ < 1.

In some examples, T₁ may be a sum of thicknesses of all the electrode assemblies 130, and W may be a width of the support member 140.

W/T₁ < 1 means that the sum of thicknesses of all the electrode assemblies 130 is greater than the width of the support member 140, and the support member 140 may form an accommodating space 1001 on two sides along the width direction, the electrolyte in the accommodating space 1001 may flow into the accommodating groove 1401 through the second opening 1406, and then flow to the first end surface 1301 through the accommodating groove 1401, thereby wetting the electrode assembly 130, improving the wetting effect of the electrode assembly 130, and enhancing the cycle performance of the battery cell 100. In addition, in the first direction X, the support member 140 does not protrude beyond the electrode assembly 130, which is also beneficial for improving the energy density of the battery cell 100. W/T₁ ≥ 0.9 allows the support member 140 to effectively support the electrode assembly 130, which is beneficial for reducing stress concentration in the electrode assembly 130 and improving the reliability of use of the battery cell 100.

The value of W/T₁ may be 0.9 or any value between 0.9 and 1. By way of example, W/T₁ may include but is not limited to 0.9, 0.92, 0.94, 0.96, 0.98, or 0.99.

With the adoption of the technical solution of the embodiments, in the first direction X, the electrode assembly 130 protrudes beyond two opposite sides of the support member 140, and the two opposite sides of the support member 140 may form an accommodating space 1001, the electrolyte in the accommodating space 1001 may flow into the accommodating groove 1401 through the second opening 1406, and then flow to the first end surface 1301 through the accommodating groove 1401, thereby wetting the first electrode plate 131, improving the wetting effect of the first electrode plate 131, and enhancing the cycle performance of the battery cell 100. In addition, the support member 140 can effectively support the electrode assembly 130, improving the reliability of use of the battery cell 100.

As shown in FIG. 24 to FIG. 27, in some embodiments, at least one end of at least one accommodating groove 1401 in the second direction Y extends through the side surface 1405 and forms the second opening 1406, and the second direction Y is a length direction of the support member 140.

By way of example, the first groove 14011 extends in the second direction Y. One or more first grooves 14011 have one end extending through the third side surface 14053, or one or more first grooves 14011 have the other end extending through the fourth side surface 14054, or one or more first grooves 14011 have two ends respectively extending through the third side surface 14053 and the fourth side surface 14054.

With the adoption of the technical solution of the embodiments, the electrolyte may enter the accommodating groove 1401 through the second opening 1406 formed by the accommodating groove 1401 on the side surface 1405, and then flow to the first end surface 1301 along the accommodating groove 1401, thereby wetting the first electrode plate 131, improving the wetting effect of the first electrode plate 131, and enhancing the cycle performance of the battery cell 100.

In some embodiments, in the second direction Y, a dimension of the electrode assembly 130 is denoted as L₁, and a length of the support member 140 is denoted as L₂, where 0.95 ≤ L₂/L₁ < 1.

L₁ may be a length of the electrode assembly 130, and W may be a length of the support member 140.

L₂/L₁ < 1 means that the length of the electrode assembly 130 is greater than the length of the support member 140, the accommodating space 1001 may be formed on two sides of the support member 140 in the length direction, and the electrolyte in the accommodating space 1001 may flow into the accommodating groove 1401 through the second opening 1406, and then flow to the first end surface 1301 through the accommodating groove 1401, thereby wetting the first electrode plate 131, improving the wetting effect of the first electrode plate 131, and enhancing the cycle performance of the battery cell 100. In addition, in the second direction Y, the support member 140 does not protrude beyond the electrode assembly 130, which is also beneficial for improving the energy density of the battery cell 100. L₂/L₁ ≥ 0.95 allows the support member 140 to effectively support the electrode assembly 130, which is beneficial for reducing stress concentration in the electrode assembly 130 and improving the reliability of use of the battery cell 100.

The value of L₂/L₁ may be 0.95 or any value between 0.95 and 1. By way of example, L₂/L₁ may include but is not limited to 0.95, 0.96, 0.98, or 0.99.

With the adoption of the technical solution of the embodiments, in the second direction Y, the electrode assembly 130 protrudes beyond two opposite sides of the support member 140, and the two opposite sides of the support member 140 may form an accommodating space 1001, the electrolyte in the accommodating space 1001 may flow into the accommodating groove 1401 through the second opening 1406, and then flow to the first end surface 1301 through the accommodating groove 1401, thereby wetting the first electrode plate 131, improving the wetting effect of the first electrode plate 131, and enhancing the cycle performance of the battery cell 100. In addition, the support member 140 can effectively support the electrode assembly 130, improving the reliability of use of the battery cell 100.

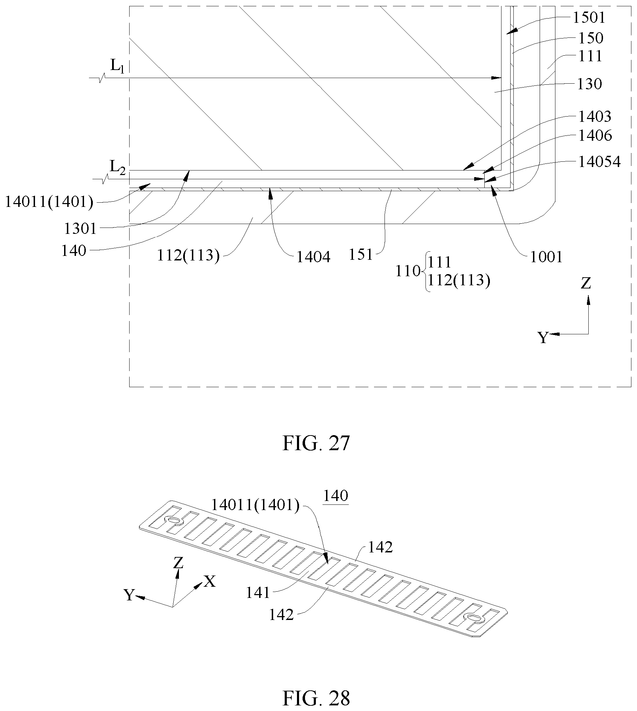

As shown in FIG. 28, in some embodiments, in the first direction X, end portions of two adjacent first branch portions 141 on a same side are connected with a connecting portion 142, and end portions of two adjacent first branch portions 141 on another side are connected with a connecting portion 142.

By way of example, two connecting portions 142 are spaced apart in parallel in the first direction X, two adjacent first branch portions 141 are spaced apart in the second direction Y, and the two adjacent first branch portions 141 are connected between the two connecting portions 142.

With the adoption of the technical solution of the embodiments, two opposite ends of two adjacent first branch portions 141 in the first direction X are each connected with a connecting portion 142, improving the structural strength of the support member 140, which is beneficial for improving the reliability of use of the battery cell 100.

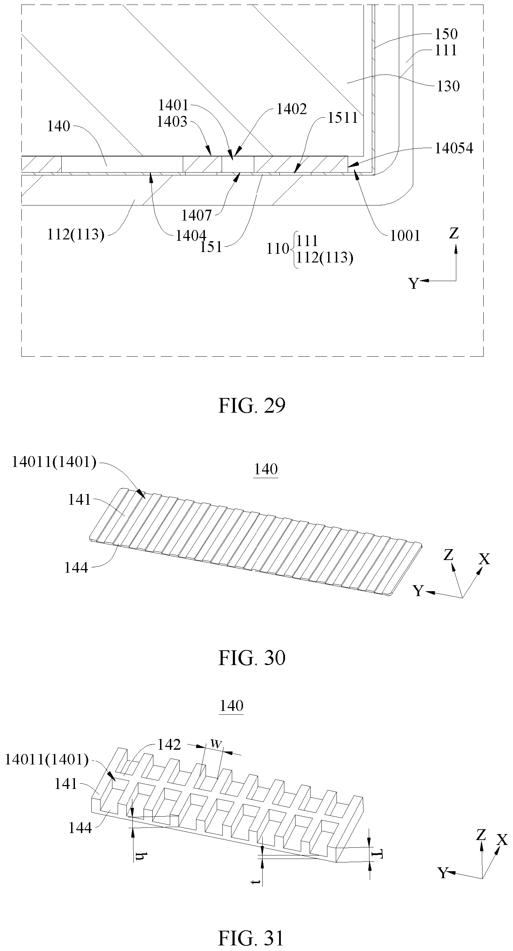

As shown in FIG. 29, in some embodiments, the support member 140 has a first surface 1403 and a second surface 1404 oppositely disposed in its thickness direction, the first surface 1403 faces the first end surface 1301, the second surface 1404 faces away from the first end surface 1301, the first opening 1402 is located on the first surface 1403, and at least one accommodating groove 1401 extends through the second surface 1404 and forms a third opening 1407.

One or more accommodating grooves 1401 extend through the support member 140 in the thickness direction Z of the support member 140, an opening formed by one accommodating groove 1401 on the second surface 1404 is the third opening 1407, and the shape of the first opening 1402 may be the same as or different from the shape of the third opening 1407.

With the adoption of the technical solution of the embodiments, the electrolyte may flow into the accommodating groove 1401 from the third opening 1407, improving the wetting effect of the electrode assembly 130, which is beneficial for improving the cycle performance of the battery cell 100.

In some embodiments, the battery cell 100 includes a first insulating member 150, at least a part of the first insulating member 150 being located within the housing 110, where the first insulating member 150 has a receiving space 1501, the support member 140 and at least a part of the electrode assembly 130 are located in the receiving space 1501, and the first insulating member 150 has a first through hole 1511 communicating the receiving space 1501 with an exterior of the first insulating member 150.

The first insulating member 150 may refer to a component externally wrapped around the electrode assembly 130, and the first insulating member 150 is made of an insulating material, such as polypropylene, polyethylene, or polyethylene terephthalate. The first insulating member 150 may be referred to as a Mylar film. The first insulating member 150 may cover the electrode assembly 130 by folding or wrapping, a cavity formed by the first insulating member 150 is a receiving space 1501, the entire electrode assembly 130 may be located in the receiving space 1501, or a part of the electrode assembly 130 is located in the receiving space 1501, with tabs 1304 of the electrode assembly 130 located outside the receiving space 1501. The support member 140 is located in the receiving space 1501.

By way of example, the first insulating member 150 and the support member 140 may be separate components, that is, the first insulating member 150 and the support member 140 are separately formed and then assembled together.

A wall portion of the first insulating member 150 is provided with the first through hole 1511, and the first through hole 1511 extends through the wall portion of the first insulating member 150, thereby connecting the exterior of the first insulating member 150 with the receiving space 1501. One or more first through holes 1511 may be provided, and the plurality of first through holes 1511 may be located on different wall portions of the first insulating member 150 or on a same wall portion.

In some cases, the support member 140 is located outside the first insulating member 150, and the first end surface 1301 of the electrode assembly 130 directly abuts the first insulating member 150. The support member 140 is located between the first wall 113 and the first insulating member 150, such that a larger amount of electrolyte accumulates in a space at a side portion of the support member 140, that is, a larger amount of electrolyte accumulates outside the first insulating member 150. However, it is difficult for the external electrolyte to pass through the first insulating member 150 to wet the electrode assembly 130, which is unfavorable for improving the cycle performance of the battery cell 100.

With the adoption of the technical solution of the embodiments, the electrolyte may enter the receiving space 1501 through the first through hole 1511 to wet the electrode assembly 130, which is beneficial for improving the wetting effect of the electrode assembly 130 and enhancing the cycle performance of the battery cell 100. In addition, the support member 140 is located within the first insulating member 150 and is provided with an accommodating groove 1401, a larger amount of electrolyte will accumulate in the accommodating groove 1401 and the space at the side portion of the support member 140, and the electrolyte in the accommodating groove 1401 will wet the electrode assembly 130 through the first opening 1402, improving the wetting performance of the electrode assembly 130 and enhancing the cycle performance of the battery cell 100.

In some embodiments, the first insulating member 150 has a second wall 151, at least a part of the second wall 151 being located between the support member 140 and the first wall 113, where the second wall 151 is provided with the first through hole 1511, and the first through hole 1511 extends through the second wall 151 in the thickness direction Z of the support member 140; and in the thickness direction Z of the support member 140, a projection of the first through hole 1511 does not coincide with projections of all the third openings 1407.

The wall portion of the first insulating member 150 located between the support member 140 and the first wall 113 is the second wall 151. The second wall 151 may be entirely located between the support member 140 and the first wall 113, or partially located between the support member 140 and the first wall 113.

The second wall 151 is provided with the first through hole 1511, and the first through hole 1511 extends through the second wall 151 in the thickness direction Z of the support member 140. In the thickness direction Z of the support member 140, a projection of the first through hole 1511 is arranged offset from projections of all the third openings 1407.

With the adoption of the technical solution of the embodiments, the first through hole 1511 extends through the second wall 151, allowing the electrolyte outside the first insulating member 150 to enter the first insulating member 150 through the first through hole 1511, thereby wetting the electrode assembly 130 and improving the cycle performance of the battery cell 100; and the third openings 1407 and the first through hole 1511 are arranged in an offset configuration, such that the second wall 151 can block active material falling from the electrode assembly 130, reducing the risk of the fallen active material contacting the first wall 113, reducing the risk of corrosion of the housing 110 by the fallen active material, and improving the reliability of use of the battery cell 100.

As shown in FIG. 30 and FIG. 31, in some embodiments, the support member 140 further includes a substrate 144, a plurality of first branch portions 141 are spaced apart in the second direction Y, the substrate 144 is located between the first end surface 1301 and the first wall 113, and the plurality of first branch portions 141 are connected to a surface of the substrate 144 facing the first end surface 1301.

The substrate 144 may refer to a plate structure in the support member 140 located on the first branch portions 141 and facing away from the electrode assembly 130. The substrate 144 may provide a mounting base for the first branch portions 141, serving to support the first branch portions 141. The substrate 144 and the first branch portions 141 may be manufactured by integral forming processes such as integral injection molding or monolithic machining, or the first branch portions 141 and the substrate 144 may be separately formed and then assembled together.

In some examples, the support member 140 includes a connecting portion 142, the connecting portion 142 is connected to the substrate 144, two ends of the connecting portion 142 are connected to middle portions of two adjacent first branch portions 141; and two first grooves 14011 are formed between two adjacent first branch portions 141, and the two first grooves 14011 are respectively located on two opposite sides of the connecting portion 142 in the first direction X.

With the adoption of the technical solution of the embodiments, the provision of the substrate 144 can increase the structural strength of the support member 140, improving the reliability of use of the battery cell 100. In addition, the substrate 144 can also close an opening of the first groove 14011 facing away from the electrode assembly 130 to block active material falling from the electrode assembly 130 from passing through the support member 140, reducing issues such as electrochemical corrosion of the housing 110, which is also beneficial for improving the structural reliability of the battery cell 100.

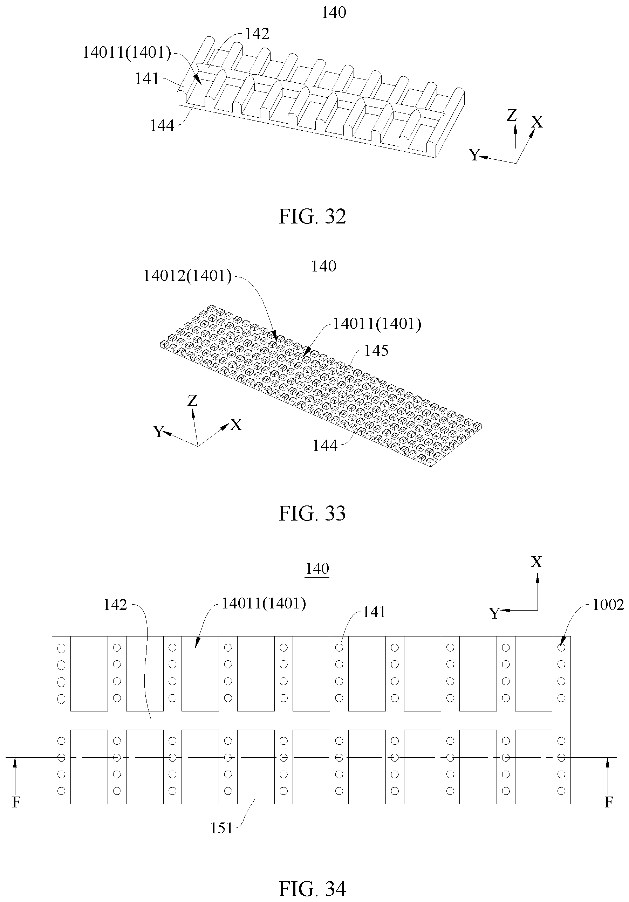

As shown in FIG. 32, in some embodiments, at least a part of a surface of at least one first branch portion 141 facing the first end surface 1301 is an arcuate surface.

One or more first branch portions 141 have a surface facing the electrode assembly 130 that is partially an arcuate surface, or one or more first branch portions 141 have a surface facing the electrode assembly 130 that is entirely an arcuate surface. The arcuate surface may be a circular arc surface, an elliptical arc surface, etc.

In some examples, an upper surface of the first branch portion 141 and left and right surfaces of the first branch portion 141 are smoothly connected through arcuate surfaces for transition; where the upper surface of the first branch portion 141 may be a flat surface or a line.

With the adoption of the technical solution of the embodiments, the provision of the arcuate surface can reduce a contact area between the first end surface 1301 and the support member 140 and increase the contact area between the electrolyte in the accommodating groove 1401 and the first end surface 1301, improving the wetting effect of the electrode assembly 130, and enhancing the cycle performance of the battery cell 100.

In some embodiments, at least a part of a surface of at least one connecting portion 142 facing the first end surface 1301 is an arcuate surface.

One or more connecting portions 142 have a surface facing the electrode assembly 130 that is partially an arcuate surface, or one or more connecting portions 142 have a surface facing the electrode assembly 130 that is entirely an arcuate surface. The arcuate surface may be a circular arc surface, an elliptical arc surface, or the like.

In some examples, an upper surface of the connecting portion 142 and front and rear surfaces of the connecting portion 142 are smoothly connected through arcuate surfaces for transition; where the upper surface of the connecting portion 142 may be a flat surface or a line.

With the adoption of the technical solution of the embodiments, the provision of the arcuate surface can reduce the contact area between the first end surface 1301 and the support member 140 and increase the contact area between the electrolyte in the accommodating groove 1401 and the first end surface 1301, improving the wetting effect of the electrode assembly 130, and enhancing the cycle performance of the battery cell 100.

As shown in FIG. 15, in some embodiments, at least one end of the support member 140 in the second direction Y is provided with a second through hole 1408, the second through hole 1408 extends through the support member 140 in the thickness direction Z of the support member 140, and the first branch portion 141 is provided with the second through hole 1408; and/or, the connecting portion 142 is provided with the second through hole 1408.

In some examples, the second through hole 1408 extends through the support member 140 in the thickness direction Z of the support member 140, and the second through hole 1408 extends through the first surface 1403 and the second surface 1404 to form an opening. A second through hole 1408 is provided at one end of the support member 140 in the second direction Y, or second through holes 1408 are provided at both opposite ends of the support member 140 in the second direction Y, and the second through hole 1408 is provided on the first branch portion 141 or the connecting portion 142 located at an end of the support member 140 in the second direction Y.

By way of example, both the first branch portion 141 and the connecting portion 142 at a same end or different ends of the support member 140 in the second direction Y are provided with second through holes 1408.

By way of example, the shapes of the second through holes 1408 at two ends of the support member 140 are different, which can facilitate distinguishing two ends of the support member 140 in the second direction Y, facilitating the assembly of the first insulating member 150.

In some examples, in the second direction Y, any one of the first three first branch portions 141 is provided with a second through hole 1408; any one of the last three first branch portions 141 is provided with a second through hole 1408.

By way of example, in the second direction Y, the first branch portion 141 is provided with a second through hole 1408; and the last first branch portion 141 is provided with a second through hole 1408.

In some examples, in the second direction Y, any one of the first three connecting portions 142 is provided with a second through hole 1408; and any one of the last three connecting portions 142 is provided with a second through hole 1408.

By way of example, in the second direction Y, the first connecting portion 142 is provided with a second through hole 1408; and the last connecting portion 142 is provided with a second through hole 1408.

With the adoption of the technical solution of the embodiments, the provision of the second through hole 1408 enables the utilization of differences in shape, position, and other aspects of the second through hole 1408 to distinguish two ends of the support member 140 in the second direction Y, facilitating the assembly of the first insulating member 150.

As shown in FIG. 33, in some embodiments, the support member 140 further includes a substrate 144 and a plurality of spaced-apart protruding portions 145; where the substrate 144 is located between the first end surface 1301 and the first wall 113, the plurality of protruding portions 145 are connected to a surface of the substrate 144 facing the first end surface 1301, and the plurality of protruding portions 145 and the substrate 144 form at least one accommodating groove 1401.

The substrate 144 may refer to a main body portion of the support member 140, a surface of the substrate 144 facing the electrode assembly 130 is provided with a protruding structure, the protruding structure is the protruding portion 145, and a plurality of protruding portions 145 may be provided, where the plurality of protruding portions 145 may be regularly arranged on the surface of the substrate 144 or arranged in a disorderly manner on the surface of the substrate 144.

The structure of the protruding portion 145 may be various, such as a circular column structure or a polygonal column structure.

With the adoption of the technical solution of the embodiments, the support member 140 adopts a structure of a substrate 144 and protruding portions 145, where the protruding portions 145 support the electrode assembly 130, which is beneficial for reducing the contact area between the support member 140 and the electrode assembly 130, improving the wetting effect of the electrode assembly 130, and enhancing the cycle performance of the battery cell 100; and the support member 140 can form interconnected accommodating grooves 1401, which is beneficial for improving the wetting effect of the electrode assembly 130 and enhancing the cycle performance of the battery cell 100. In addition, the support member 140 has a simple structure and is convenient to process and manufacture.

In some embodiments, a plurality of accommodating grooves 1401 are provided, and the plurality of protruding portions 145 are arranged in a matrix and form a plurality of accommodating grooves 1401 arranged in a crisscross pattern.

By way of example, the plurality of accommodating grooves 1401 include first grooves 14011 and second grooves 14012, the first grooves 14011 extend in the first direction X, the second grooves 14012 extend in the second direction Y, a plurality of first grooves 14011 and second grooves 14012 are provided, and the plurality of first grooves 14011 and a plurality of second grooves 14012 intersect and communicate, thereby forming a network structure.

With the adoption of the technical solution of the embodiments, the support member 140 forms a plurality of accommodating grooves 1401 arranged in a crisscross pattern. The plurality of accommodating grooves 1401 arranged in a crisscross pattern are beneficial for improving the wetting effect of the electrode assembly 130 and enhancing the cycle performance of the battery cell 100. In addition, the support member 140 has a simple structure and is convenient to process and manufacture.

In some embodiments, at least a part of a surface of at least one protruding portion 145 facing the first end surface 1301 is an arcuate surface.

In some examples, an upper surface of the protruding portion 145 and an outer peripheral surface of the protruding portion 145 are each smoothly connected through arcuate surfaces for transition; where the upper surface of the protruding portion 145 may be a flat surface or a point.

With the adoption of the technical solution of the embodiments, a surface of the protruding portion 145 facing away from the substrate 144 may be an arcuate surface, so as to increase the contact area between the electrolyte and the first end surface 1301, improving the wetting effect of the electrode assembly 130 and enhancing the cycle performance of the battery cell 100.

As shown in FIG. 31, in some embodiments, in the thickness direction Z of the support member 140, a dimension of the substrate 144 ranges from 0.1 mm to 1 mm.

In the thickness direction Z of the support member 140, a dimension of the substrate 144 is denoted as t, and t is a thickness of the substrate 144.
t may be 0.1 mm, 1 mm, or any value between 0.1 mm and 1 mm. By way of example, t may include but is not limited to 0.1 mm, 0.2 mm, 0.5 mm, 0.8 mm, or 1 mm.

With the adoption of the technical solution of the embodiments, the support member 140 has good structural strength to effectively support the electrode assembly 130. In addition, the substrate 144 occupies a small space, which is beneficial for improving the volumetric energy density of the battery cell 100.

In some embodiments, a thickness of the support member 140 ranges from 0.1 mm to 3 mm.

A thickness of the support member 140 is denoted as T. T may be 0.1 mm, 3 mm, or any value between 0.1 mm and 3 mm. By way of example, T may include but is not limited to 0.1 mm, 0.2 mm, 0.5 mm, 0.8 mm, 1 mm, 1.5 mm, 2 mm, 2.5 mm, or 3 mm.

With the adoption of the technical solution of the embodiments, the support member 140 has good structural strength to effectively support the electrode assembly 130. In addition, the support member 140 occupies a small space, which is beneficial for improving the volumetric energy density of the battery cell 100.

In some embodiments, the support member 140 has a first surface 1403, the first surface 1403 faces the first end surface 1301, and the first opening 1402 is located on the first surface 1403. An area of the first surface 1403 is denoted as S₁, and a total area of the first openings 1402 of all the accommodating grooves 1401 is denoted as S₂, where 0.1 ≤ S₂/(S₁+S₂) ≤ 0.8.

The first surface 1403 may refer to a surface of the support member 140 used for contacting the first end surface 1301, and the first surface 1403 is used for supporting the electrode assembly 130. The first surface 1403 may also be referred to as a support region, all the first openings 1402 form a hollowed-out region of the first surface 1403, and the support region and the hollowed-out region together form a total region. S₂/(S₁+S₂) may refer to an area proportion of the support region in the total region.

By way of example, the support member 140 is rectangular, and S₁+S₂ equals a length of the support member 140 multiplied by a width.

The value of S₂/(S₁+S₂) may be 0.1, 0.8, or any value between 0.1 and 0.8. By way of example, S₂/(S₁+S₂) may include but is not limited to 0.1, 0.2, 0.3, 0.4, 0.5, 0.6, 0.7, or 0.8.

With the adoption of the technical solution of the embodiments, the setting of 0.1 ≤ S₂/(S₁+S₂) ≤ 0.8 enables the support member 140 to effectively support the electrode assembly 130 and the accommodating grooves 1401 to accommodate a sufficient amount of electrolyte or the electrolyte to flow into the electrode assembly 130 at a good flow rate through the accommodating grooves 1401, improving the wetting effect of the electrode assembly 130 and enhancing the cycle performance of the battery cell 100.

In some embodiments, 0.4 ≤ S₂/(S₁+S₂) ≤ 0.7.

With the adoption of the technical solution of the embodiments, the reliability of use and cycle performance of the battery cell 100 can be better balanced.

In some embodiments, the support member 140 is an insulating component.

The support member 140 is an insulating component, and the support member 140 is made of an insulating material, such as polypropylene, polyphenylene sulfide, or epoxy resin.

With the adoption of the technical solution of the embodiments, the support member 140 can insulate and separate the first wall 113 from the electrode assembly 130, reducing the risk of a short circuit in the battery cell 100 and improving the reliability of use of the battery cell 100.

In some embodiments, the battery cell 100 includes a first insulating member 150, at least a part of the first insulating member 150 being located within the housing 110, where the first insulating member 150 has a receiving space 1501, the support member 140 and at least a part of the electrode assembly 130 are located in the receiving space 1501, the first insulating member 150 has a second wall 151, at least a part of the second wall 151 is located between the support member 140 and the first wall 113, and the support member 140 and the second wall 151 are an integral structure.

The second wall 151 of the first insulating member 150 and the support member 140 are manufactured by an integral forming process such as integral injection molding or integral die-casting.

With the adoption of the technical solution of the embodiments, the second wall 151 of the first insulating member 150 and the support member 140 are integrally formed, which can save manufacturing processes and improve production efficiency.

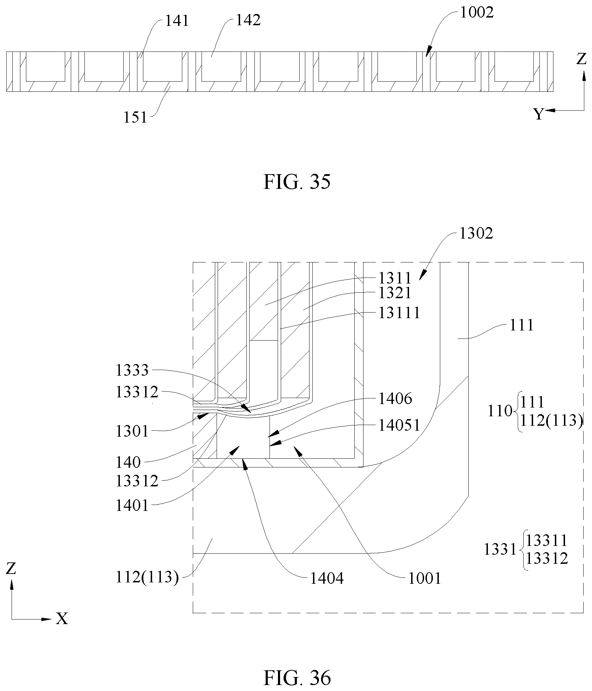

As shown in FIG. 34 and FIG. 35, in some embodiments, the battery cell 100 has a third through hole 1002, and the third through hole 1002 extends through the support member 140 and the second wall 151 in the thickness direction Z of the support member 140.

The third through hole 1002 may extend through the second wall 151 and the support member 140 in the thickness direction Z of the support member 140, and one or more third through holes 1002 may be provided.

By way of example, the third through hole 1002 extends through the second wall 151 and the first branch portion 141 in the thickness direction Z of the support member 140.

By way of example, the third through hole 1002 extends through the second wall 151 and the connecting portion 142 in the thickness direction Z of the support member 140.

With the adoption of the technical solution of the embodiments, the electrolyte outside the first insulating member 150 may directly wet the electrode assembly 130 through the third through hole 1002, improving the wetting effect of the electrode assembly 130 and enhancing the cycle performance of the battery cell 100.

As shown in FIG. 6 to FIG. 8, in some embodiments, the battery cell 100 includes a first insulating member 150, at least a part of the first insulating member 150 being located within the housing 110, where the first insulating member 150 has a receiving space 1501, and the support member 140 and at least a part of the electrode assembly 130 are located in the receiving space 1501.

With the adoption of the technical solution of the embodiments, the first insulating member 150 can insulate and separate the electrode assembly 130 from the housing 110, which is beneficial for improving the reliability of use of the battery cell 100.

As shown in FIG. 6 to FIG. 8, in some embodiments, the battery cell 100 includes a second insulating member 170, at least a part of the second insulating member 170 being located on a side of the end cover 120 facing the electrode assembly 130, where the first insulating member 150 is connected to the second insulating member 170.

The second insulating member 170 may also refer to a component disposed on a side of the end cover 120 facing the electrode assembly 130, and the second insulating member 170 is made of an insulating material, such as polypropylene or polyphenylene sulfide. The second insulating member 170 may also be referred to as a lower plastic component.

By way of example, the first insulating member 150 is wrapped around the electrode assembly 130, the first insulating member 150 may form a receiving space 1501, an end portion of the receiving space 1501 facing away from the first wall 113 forms an opening, the second insulating member 170 may be located in this opening, the first insulating member 150 is annularly disposed around a periphery of the second insulating member 170, and an end portion of the first insulating member 150 near the opening may be fixedly connected to the second insulating member 170 by welding or bonding.

With the adoption of the technical solution of the embodiments, the second insulating member 170 can insulate and separate the electrode assembly 130 from the end cover 120, reducing the risk of a short circuit in the electrode assembly 130 and improving the reliability of use of the battery cell 100.

As shown in FIG. 4, in some embodiments, the battery cell 100 includes an electrode terminal 160 and a second insulating member 170, where the electrode terminal 160 is disposed on the end cover 120, the electrode terminal 160 is electrically connected to the electrode assembly 130, at least a part of the second insulating member 170 is located on a side of the end cover 120 facing the electrode assembly 130, and the second insulating member 170 insulates and separates the electrode terminal 160 from the end cover 120.

The electrode terminal 160 may refer to a component of the battery cell 100 electrically connected to an external circuit, and the electrode terminal 160 may be fixedly connected to the end cover 120 by screwing, snap-fitting, or other methods. A portion of the second insulating member 170 may be disposed between the end cover 120 and the electrode assembly 130, and another portion of the second insulating member 170 may be located between the end cover 120 and the electrode terminal 160, thereby achieving insulation between the electrode terminal 160 and the end cover 120.

The electrode terminal 160 includes a positive electrode terminal 161 and a negative electrode terminal 162, the positive electrode terminal 161 and the negative electrode terminal 162 are respectively electrically connected to a positive tab 1305 and a negative tab 1306 of the electrode assembly 130, thereby enabling charging and discharging of the battery cell 100.

In some examples, one end cover 120 is provided, and the positive electrode terminal 161 and the negative electrode terminal 162 may be disposed on the end cover 120, facilitating electrical connection with an external circuit.

In some examples, two end covers 120 are provided, the positive electrode terminal 161 and the negative electrode terminal 162 are separately disposed on the two end covers 120; or, both the positive electrode terminal 161 and the negative electrode terminal 162 are disposed on one of the end covers 120.

With the adoption of the technical solution of the embodiments, the second insulating member 170 can insulate and separate the electrode assembly 130 from the end cover 120 as well as the end cover 120 and the electrode terminal 160, reducing the risk of a short circuit in the battery cell 100 and improving the reliability of use of the battery cell 100.

In some embodiments, the housing 110 is an insulating housing.

The insulating housing is made of an insulating material, such as polypropylene, polyphenylene sulfide, or epoxy resin.

With the adoption of the technical solution of the embodiments, the insulating housing itself has insulating properties, enabling insulation between the housing 110 and the electrode assembly 130. This is beneficial for eliminating the need for the first insulating member 150 and improving the energy density of the battery cell 100.

In some embodiments, an inner wall of the housing 110 is covered with an insulating coating.

The material of the insulating coating may be various, such as ceramic-based insulating coating, polyimide coating, or fluorinated ethylene propylene copolymer coating.

With the adoption of the technical solution of the embodiments, the insulating coating can insulate and separate the housing 110 from the electrode assembly 130, which is beneficial for eliminating the need for the first insulating member 150 and improving the energy density of the battery cell 100.

As shown in FIG. 6 to FIG. 14, in some embodiments, the electrode assembly 130 includes a second electrode plate 132 and a separator 133, the first electrode plate 131 and the second electrode plate 132 have different polarities; a part of the separator 133 is located between the first electrode plate 131 and the second electrode plate 132, an end portion of the separator 133 facing the support member 140 extends beyond the first electrode plate 131 and the second electrode plate 132, and the end portion of the separator 133 facing the support member 140 is bent to form a stacked structure and the first end surface 1301.

The second electrode plate 132 has an opposite polarity to the first electrode plate 131. The first electrode plate 131 is a positive electrode plate 134, and the second electrode plate 132 is a negative electrode plate 135; or, the first electrode plate 131 is a negative electrode plate 135, and the second electrode plate 132 is a positive electrode plate 134.

The separator 133 is located between the first electrode plate 131 and the second electrode plate 132 to insulate and separate the first electrode plate 131 and the second electrode plate 132. A portion of the separator 133 is located between the first electrode plate 131 and the second electrode plate 132, an end portion of the separator 133 near the support member 140 may extend beyond the first electrode plate 131 and the second electrode plate 132, and the end portion of the separator 133 extending beyond the first electrode plate 131 and the second electrode plate 132 is bent to form the first end surface 1301.

In some examples, as shown in FIG. 8 and FIG. 9, the electrode assembly 130 is a wound structure, and after the end portion of the separator 133 extending beyond the first electrode plate 131 and the second electrode plate 132 is bent, end portions of two adjacent turns of the separator 133 overlap, thereby forming a stacked structure.

In some examples, as shown in FIG. 8 and FIG. 10, the electrode assembly 130 is a laminated structure, a plurality of separators 133 are provided, and after the end portions of the plurality of separators 133 extending beyond the first electrode plate 131 and the second electrode plate 132 are bent, end portions of two adjacent layers of separators 133 overlap, thereby forming a stacked structure.

In some examples, as shown in FIG. 12 to FIG. 14, the separator 133 is continuously disposed, the separator 133 is folded to form a plurality of separator segments 1332, and after the end portions of the plurality of separator segments 1332 extending beyond between the first electrode plate 131 and the second electrode plate 132 are bent, end portions of two adjacent layers of separator segments 1332 overlap, thereby forming a stacked structure.

In some cases, the stacked structure is located between the first electrode plate 131 and the support member 140, and the electrode assembly 130 abuts the support member 140, making the stacked structure more tightly stacked, making it difficult for the electrolyte to flow to the first electrode plate 131 and the second electrode plate 132 from between two adjacent layers of the stacked structure, which is unfavorable for improving the cycle performance of the battery cell 100.

With the adoption of the technical solution of the embodiments, the support member 140 is provided with an accommodating groove 1401, and the stacked structure at positions opposite to the first opening 1402 is suspended, making the suspended position of the stacked structure relatively loose. This allows the electrolyte to flow to the first electrode plate 131 and the second electrode plate 132 through the loose portions of the stacked structure, thereby improving the wetting effect of the electrode assembly 130 and enhancing the cycle performance of the battery cell 100. In addition, the electrolyte can also directly pass through the end portion of the separator 133 extending beyond the first electrode plate 131 and the second electrode plate 132 and flow to the first electrode plate 131 and the second electrode plate 132, improving the wetting effect of the first electrode plate 131 and the second electrode plate 132, and enhancing the cycle performance of the battery cell 100. The end portion of the separator 133 facing the support member 140 extends beyond between the first electrode plate 131 and the second electrode plate 132, enabling the separator 133 to insulate and separate the end portions of the first electrode plate 131 and the second electrode plate 132 near the support member 140 from each other, reducing the risk of a short circuit in the electrode assembly 130, and improving the reliability of use of the battery cell 100.

As shown in FIG. 36, in some embodiments, the electrode assembly 130 includes a flat portion 1302, a part of the first electrode plate 131 located in the flat portion 1302 includes a first electrode plate layer 1311, a part of the second electrode plate 132 located in the flat portion 1302 includes a second electrode plate layer 1321, and a part of the separator 133 located in the flat portion 1302 includes a separator layer 1331; and a plurality of first electrode plate layers 1311, the second electrode plate layers 1321, and the separator layers 1331 are provided; where each separator layer 1331 includes a main body portion 13311 and a bent portion 13312, at least a part of the main body portion 13311 is located between the first electrode plate layer 1311 and the second electrode plate layer 1321 that are adjacent, an end portion of the main body portion 13311 facing the support member 140 is connected to the bent portion 13312, the bent portion 13312 is entirely located outside the corresponding adjacent first electrode plate layer 1311 and first electrode plate layer 1311, and the bent portion 13312 is bent relative to the main body portion 13311; the bent portions 13312 of two adjacent separator layers 1331 are stacked, and a gap 1333 is formed between the bent portions 13312 of two adjacent separator layers 1331.

In some examples, as shown in FIG. 8 and FIG. 9, the electrode assembly 130 is a wound structure, the electrode assembly 130 is a flat structure, a part of the electrode assembly 130 with a flat structure is the flat portion 1302, a part of the second electrode plate 132 located in the flat portion 1302 is substantially arranged flat, a layer of flat structure of the second electrode plate 132 in the flat portion 1302 is a second electrode plate layer 1321, and the second electrode plate 132 is wound more than one turn, forming a plurality of second electrode plate layers 1321. A portion of the separator 133 located in the flat portion 1302 is substantially arranged flat, a layer of flat structure of the separator 133 in the flat portion 1302 is a separator layer 1331, and the separator layer 1331 is wound more than one turn, forming a plurality of separator layers 1331.

The electrode assembly 130 further includes curved portions 1303. Two ends of the flat portion 1302 are each connected with a curved portion 1303. A part of the electrode assembly 130 with a bent structure is the curved portion 1303, a part of the second electrode plate 132 located in the curved portion 1303 is substantially curved. By way of example, the part of the second electrode plate 132 in the curved portion 1303 is a semicircular arc structure or a structure similar to a semicircular arc. A portion of the separator 133 located in the curved portion 1303 is substantially curved. By way of example, the part of the separator 133 in the curved portion 1303 is a semicircular arc structure or a structure similar to a semicircular arc.

In some examples, as shown in FIG. 10, the electrode assembly 130 is a laminated structure, the electrode assembly 130 is entirely a flat structure, a layer of flat structure of the second electrode plate 132 in the flat portion 1302 is a second electrode plate layer 1321; and a plurality of second electrode plates 132 are provided, and one second electrode plate 132 is one second electrode plate layer 1321.

In some examples, as shown in FIG. 14, one second electrode plates 132 is provided, and the second electrode plate 132 is folded to form a plurality of second electrode plate layers 1321.

In some examples, as shown in FIG. 10, a layer of flat structure of the separator 133 in the flat portion 1302 is a separator layer 1331; and a plurality of separators 133 are provided, and one separator 133 forms one separator layer 1331.

In some examples, as shown in FIG. 13 and FIG. 14, the separator 133 is folded to form a plurality of separator segments 1332, and one separator segment 1332 is one separator layer 1331.

The separator layer 1331 includes two portions, where a portion located between the first electrode plate layer 1311 and the second electrode plate layer 1321 is the main body portion 13311, and another portion is the bent portion 13312, the bent portion 13312 is connected to an end portion of the main body portion 13311 near the support member 140, the bent portion 13312 is bent relative to the main body portion 13311, the bent portion 13312 is located between the negative electrode plate 135 and the support member 140, and the bent portion 13312 and the main body portion 13311 are divided by an end surface of the negative electrode plate 135 facing the support member 140. The bent portions 13312 of a plurality of separator layers 1331 are bent relative to the main body portion 13311 to form a stacked structure.

A gap 1333 is formed between the bent portions 13312 of two adjacent separator layers 1331. The gap 1333 may refer to a space formed between parts of the bent portions 13312 of two adjacent separator layers 1331 that are not tightly attached.

With the adoption of the technical solution of the embodiments, the electrolyte may flow to the first electrode plate 131 and the second electrode plate 132 through the gap 1333 between the bent portions 13312 of two adjacent separator layers 1331, improving the wetting effect of the electrode assembly 130. In addition, the support member 140 is provided with an accommodating groove 1401, and a position of the bent portion 13312 opposite the first opening 1402 is suspended, making the bent portions 13312 of two adjacent separator layers 1331 relatively loose at the suspended position, such that the gap 1333 between the bent portions 13312 of two adjacent separator layers 1331 has a larger space at the suspended position, allowing the electrolyte to quickly flow to the first electrode plate 131 and the second electrode plate 132 through this space, thereby effectively improving the wetting effect of the electrode assembly 130 and enhancing the cycle performance of the battery cell 100.

As shown in FIG. 8, in some embodiments, portions of the bent portions 13312 of two adjacent separator layers 1331 are arranged in an offset configuration.

In the bent portions 13312 of two adjacent separator layers 1331, the bent portion 13312 of one separator layer 1331 covers a part of the bent portion 13312 of another separator layer 1331, thereby forming a neatly arranged stacked structure.

With the adoption of the technical solution of the embodiments, in the bent portions 13312 of two adjacent separator layers 1331, the electrolyte may directly enter between the bent portions 13312 of two adjacent separator layers 1331 from a part of the bent portion 13312 of one separator layer 1331 that is not covered by the bent portion 13312 of another separator layer 1331, reducing the difficulty of the electrolyte flowing to the first electrode plate 131 or the second electrode plate 132, improving the wetting effect of the electrode assembly 130, and enhancing the cycle performance of the battery cell 100.

As shown in FIG. 8, in some embodiments, a part of the bent portion 13312 of at least one separator layer 1331 away from an end portion of the main body portion 13311 is located in a corresponding accommodating groove 1401.

Partial regions of the bent portions 13312 of one or more separator layers 1331 away from an end portion of the main body portion 13311 are located in corresponding accommodating grooves 1401.

With the adoption of the technical solution of the embodiments, the electrolyte may directly enter between the bent portions 13312 of two adjacent separator layers 1331 through the end portion of the bent portion 13312 away from the main body portion 13311, allowing the electrolyte to flow to the first electrode plate 131 or the second electrode plate 132 more quickly, thereby improving the wetting effect of the electrode assembly 130 and enhancing the cycle performance of the battery cell 100.

As shown in FIG. 4, in some embodiments, the electrode assembly 130 is a wound structure, and a tab 1304 is led out from an end portion of the electrode assembly 130 facing away from the first wall 113.

The tab 1304 includes a positive tab 1305 and a negative tab 1306, the positive electrode plate 134 is provided with the positive tab 1305, the negative electrode plate 135 is provided with the negative tab 1306, and both the positive tab 1305 and the negative tab 1306 are located at an end portion of the electrode assembly 130 facing away from the first wall 113. The positive tab 1305 is used to connect to the positive electrode terminal 161, and the negative tab 1306 is used to connect to the negative electrode terminal 162.

With the adoption of the technical solution of the embodiments, the tab 1304 and the support member 140 are located on two opposite sides of the electrode assembly 130, which can reduce the influence of the tab 1304 on the flow of the electrolyte to the first electrode plate 131 and is beneficial for improving the cycle performance and usability of the battery cell 100.

As shown in FIG. 5, in some embodiments, the electrode assembly 130 is a laminated structure, and a tab 1304 is led out from at least one side portion of the electrode assembly 130, other than a side portion near the first wall 113.

A side portion of the electrode assembly 130 near the first wall 113 is a first side portion, and the tab 1304 may be located at a side portion of the electrode assembly 130 adjacent to the first side portion or at a side portion of the electrode assembly 130 opposite the first side portion.

In some examples, the positive tab 1305 and the negative tab 1306 may be located on a same side of the electrode assembly 130 or on different sides.

By way of example, a plurality of positive electrode plates 134 and negative electrode plates 135 are provided, and the positive tab 1305 and the negative tab 1306 are located on a side of the electrode assembly 130 facing away from the support member 140; or, the positive electrode plate 134 and the negative electrode plate 135 are disposed on the same side of two opposite sides of the electrode assembly 130 in the second direction Y, or the positive electrode plate 134 and the negative electrode plate 135 are separately disposed on two opposite sides of the electrode assembly 130 in the second direction Y.

By way of example, the separator 133 is continuously disposed, and the positive electrode plate 134 and the negative electrode plate 135 are disposed on a same side of two opposite sides of the electrode assembly 130 in the second direction Y, or the positive electrode plate 134 and the negative electrode plate 135 are separately disposed on two opposite sides of the electrode assembly 130 in the second direction Y.

With the adoption of the technical solution of the embodiments, the tab 1304 and the support member 140 are located on two opposite sides of the electrode assembly 130, which can reduce the influence of the tab 1304 on the flow of the electrolyte to the first electrode plate 131 and is beneficial for improving the cycle performance and usability of the battery cell 100.

In some embodiments, the battery cell 100 is a lithium iron phosphate battery cell, and in the thickness direction Z of the support member 140, a dimension of the battery cell 100 ranges from 100 mm to 400 mm.

In the thickness direction Z of the support member 140, a dimension of the battery cell 100 is denoted as H. H may refer to a height of the battery cell 100.

A lithium iron phosphate battery cell generally refers to a lithium iron phosphate battery (Lithium Iron Phosphate Battery, abbreviated as LFP battery), which is a lithium-ion battery with lithium iron phosphate (LiFePO₄) as the positive electrode material.

H may be 100 mm, 400 mm, or any value between 100 mm and 400 mm. By way of example, H may include but is not limited to 100 mm, 120 mm, 150 mm, 180 mm, 200 mm, 250 mm, 300 mm, 350 mm, or 400 mm.

With the adoption of the technical solution of the embodiments, in the thickness direction Z of the support member 140, the dimension of the lithium iron phosphate battery cell is set within the above range, and the large dimension of the lithium iron phosphate battery cell in the thickness direction Z of the support member 140 is beneficial for improving the energy density of the lithium iron phosphate battery cell. The electrode assembly 130 within the lithium iron phosphate battery cell has a large dimension in the thickness direction Z of the support member 140, making it difficult for the electrolyte to flow to an end portion of the electrode assembly 130 facing away from the support member 140, limiting the performance of the lithium iron phosphate battery cell. The support member 140 in the embodiment of the present application is provided with an accommodating groove 1401 that can supply the electrolyte to the electrode assembly 130 of the lithium iron phosphate battery cell, enhancing the wicking ability of the electrolyte in the thickness direction Z of the support member 140, and improving the cycle performance of the lithium iron phosphate battery cell.

In some embodiments, the battery cell 100 is a ternary lithium battery cell, and in the thickness direction Z of the support member 140, a dimension of the battery cell 100 ranges from 100 mm to 300 mm.

A ternary lithium battery cell refers to a lithium-ion battery with a composite oxide of three metal elements- nickel (Ni), cobalt (Co), and either manganese (Mn) or aluminum (Al)-as the positive electrode material.

H may be 100 mm, 300 mm, or any value between 100 mm and 300 mm. By way of example, H may include but is not limited to 100 mm, 120 mm, 150 mm, 180 mm, 200 mm, 250 mm, or 300 mm.

With the adoption of the technical solution of the embodiments, in the thickness direction Z of the support member 140, the dimension of the ternary lithium battery cell is set within the above range, and the large dimension of the ternary lithium battery cell in the thickness direction Z of the support member 140 is beneficial for improving the energy density of the ternary lithium battery cell. The electrode assembly 130 within the ternary lithium battery cell has a large dimension in the thickness direction Z of the support member 140, making it difficult for the electrolyte to flow to an end portion of the electrode assembly 130 facing away from the support member 140, limiting the performance of the ternary lithium battery cell. The support member 140 in the embodiments of the present application is provided with an accommodating groove 1401 that can supply the electrolyte to the electrode assembly 130 of the ternary lithium battery cell, enhancing the wicking ability of the electrolyte in the thickness direction Z of the support member 140, and improving the cycle performance of the ternary lithium battery cell.

In some embodiments, a battery apparatus 1100 includes a plurality of battery cells 100 described above.

The battery apparatus 1100 in the embodiments of the present application adopts the above battery cell 100. The battery cell 100 has good cycle performance, which is beneficial for improving the usability and service life of the battery apparatus 1100.

In some embodiments, in the battery apparatus, in the direction of gravity, the bottom wall of the housing 110 forms the first wall 113.

In some examples, "direction of gravity" may refer to the orientation of gravitational force when the battery cell 100 is installed in the battery apparatus 1100. In this state, the support member 140 is located below the electrode assembly 130, the first wall 113 is located below the support member 140, and the first wall 113 is the bottom wall of the housing 110.

By way of example, "direction of gravity" may refer to the thickness direction Z of the support member 140.

In some examples, an enclosure 200 of the battery apparatus 1100 includes an upper enclosure and a lower enclosure connected to each other, the upper enclosure and the lower enclosure being connected to form an installation cavity. The battery cell 100 is installed in the installation cavity, and a wall portion of the bottom wall of the housing 110 of the battery cell 100 facing the lower enclosure 200 is the first wall 113. The upper enclosure may adopt the structure of the first enclosure 210 described above, and the lower enclosure may adopt the structure of the second enclosure 220 described above.

In some examples, the enclosure 200 of the battery apparatus 1100 includes a bottom protective plate, and a wall portion of the housing 110 of the battery cell 100 facing the bottom protective plate is the first wall 113.

With the adoption of the technical solution of the embodiments, in the battery apparatus 1100, under its own gravity, the electrolyte accumulates at the bottom of the housing 110 and in the accommodating groove 1401 of the support member 140, and the first opening 1402 of the accommodating groove 1401 is disposed facing the first end surface 1301, such that the accumulated electrolyte can wet the bottom of the first electrode plate 131 and wick upward along the first electrode plate 131, which is beneficial for overcoming limitations in the height direction and charge rate of the battery cell 100, enabling the battery cell 100 to have higher energy density and cycle performance.

In some embodiments, an electric apparatus includes the battery cell 100 described above or the battery apparatus 1100 described above, where the battery cell 100 or the battery apparatus 1100 is configured to store or supply electrical energy.

The electric apparatus in the embodiments of the present application adopts the above battery cell 100. The battery cell 100 has good cycle performance, which is beneficial for improving the usability and service life of the electric apparatus.

As shown in FIG. 4, and FIG. 6 to FIG. 8, in some embodiments, the battery cell 100 includes a housing 110, an end cover 120, a support member 140, and two electrode assemblies 130. The housing 110 accommodates an electrolyte. The end cover 120 is disposed to cover an opening of the housing 110, and the housing 110 includes a first wall 113. At least a part of the electrode assembly 130 is accommodated within the housing 110, the electrode assembly 130 includes a first electrode plate 131, the electrode assembly 130 has a first end surface 1301 facing the first wall 113, and an end portion of the first electrode plate 131 is disposed facing the first end surface 1301. The support member 140 is located between the first end surface 1301 and the first wall 113, and the support member 140 is in contact with the first end surface 1301; where the support member 140 is provided with an accommodating groove 1401, and the accommodating groove 1401 has a first opening 1402 disposed facing the first end surface 1301.

The electrode assembly 130 includes a flat portion 1302, a part of the first electrode plate 131 located in the flat portion 1302 includes a first electrode plate layer 1311, a plurality of first electrode plate layers 1311 are provided, and the plurality of first electrode plate layers 1311 are stacked in a first direction X. At least a part of the accommodating groove 1401 is a first groove 14011, the first groove 14011 extends in the first direction X, and the first grooves 14011 span at least two adjacent first electrode plate layers 1311 in the first direction X.

As shown in FIG. 15 and FIG. 16, the support member 140 includes a connecting portion 142 and a plurality of first branch portions 141, the plurality of first branch portions 141 are spaced apart in a second direction Y, two ends of the connecting portion 142 are respectively connected to a middle portions of a respective one of two adjacent first branch portions 141, two first grooves 14011 are formed between two adjacent first branch portions 141, and the two first grooves 14011 are respectively located on two opposite sides of the connecting portion 142 in the first direction X.

A plurality of connecting portions 142 are provided, and the plurality of connecting portions 142 include first connecting portions 1421 and second connecting portions 1422. A plurality of first connecting portions 1421 are provided, and a plurality of second connecting portions 1422 are provided. Distances between all the first connecting portions 1421 and the first side surface 14051 are equal, distances between all the second connecting portions 1422 and the first side surface 14051 are equal, and the distance between the first connecting portions 1421 and the first side surface 14051 is not equal to the distance between the second connecting portions 1422 and the first side surface 14051.

The support member 140 has a central axis M, and the central axis M is parallel to the second direction Y. All the first connecting portions 1421 are located on one side of the central axis M in the first direction X, and all the second connecting portions 1422 are located on another side of the central axis M in the first direction X.

The plurality of first connecting portions 1421 are distributed in a straight line in the second direction Y, the plurality of second connecting portions 1422 are distributed in a straight line in the second direction Y, and the plurality of first connecting portions 1421 and the plurality of second connecting portions 1422 are alternately distributed in the second direction Y.

The above descriptions of various embodiments tend to emphasize the differences between the embodiments, and their similarities or identical aspects can be cross-referenced for brevity and are not repeated herein.

Finally, it should be noted that the above embodiments are only used to illustrate the technical solutions of the present application and not to limit them; although the present application has been described in detail with reference to the foregoing embodiments, those of ordinary skill in the art should understand that they can still modify the technical solutions described in the foregoing embodiments or equivalently replace some or all of the technical features; these modifications or replacements do not cause the essence of the corresponding technical solutions to depart from the scope of the technical solutions of the embodiments of the present application, and they should be included within the scope of the claims and specification of the present application. In particular, as long as there is no structural conflict, the technical features mentioned in the various embodiments can be combined in any manner. The present application is not limited to the specific embodiments disclosed herein but includes all technical solutions falling within the scope of the claims.

## Claims

1. A battery cell, **characterized by** comprising:
a housing accommodating an electrolyte;
an end cover disposed to cover an opening of the housing, wherein the housing comprises a first wall;
at least one electrode assembly, at least a part of the electrode assembly being accommodated within the housing, wherein the electrode assembly comprises a first electrode plate, the electrode assembly has a first end surface toward the first wall, and an end portion of the first electrode plate is disposed facing the first end surface; and
a support member, at least a part of the support member being located between the first end surface and the first wall and is in contact with the first end surface, wherein the support member is provided with at least one accommodating groove, and the accommodating groove has a first opening disposed facing the first end surface.

2. The battery cell according to claim 1, **characterized in that** the first end surface of at least one electrode assembly covers the first opening of at least one accommodating groove.

3. The battery cell according to claim 2, **characterized in that** two electrode assemblies are provided, an arrangement direction of the two electrode assemblies is perpendicular to a thickness direction of the support member; and the first end surfaces of the two electrode assemblies cover the first openings of all the accommodating grooves.

4. The battery cell according to any one of claims 1 to 3, **characterized in that** the electrode assembly comprises a flat portion, a part of the first electrode plate located in the flat portion comprises a first electrode plate layer, a plurality of first electrode plate layers are provided, and the plurality of first electrode plate layers are stacked in a first direction; and
at least a part of the accommodating groove is a first groove, and the first groove extends in the first direction.

5. The battery cell according to claim 4, **characterized in that** at least one first groove spans at least two adjacent first electrode plate layers in the first direction.

6. The battery cell according to claim 4 or 5, **characterized in that** the support member comprises a plurality of first branch portions arranged along a second direction, and at least one first groove is formed between two adjacent first branch portions; and the second direction is perpendicular to the first direction and the thickness direction of the support member.

7. The battery cell according to claim 6, **characterized in that** the support member further comprises a connecting portion, the plurality of first branch portions are spaced apart in the second direction, and two adjacent first branch portions are connected through the connecting portion.

8. The battery cell according to claim 7, **characterized in that** two ends of the connecting portion are respectively connected to a middle portion of a respective one of two adjacent first branch portions; and two first grooves are formed between two adjacent first branch portions, and the two first grooves are respectively located on two opposite sides of the connecting portion in the first direction.

9. The battery cell according to claim 8, **characterized in that** the support member has a first side surface and a second side surface distributed oppositely in the first direction, a distance between at least one connecting portion and the first side surface is not equal to a distance between the connecting portion and the second side surface; and/or, two of the first grooves located on two opposite sides of a same connecting portion in the first direction have unequal dimensions in the first direction.

10. The battery cell according to claim 8 or 9, **characterized in that** a plurality of connecting portions are provided, the plurality of connecting portions comprise at least one first connecting portion and at least one second connecting portion; the support member has a first side surface, and the first side surface is located on one side of the support member in the first direction; and
distances between all the first connecting portions and the first side surface are not equal to distances between all the second connecting portions and the first side surface.

11. The battery cell according to claim 10, **characterized in that** the support member has a central axis, the central axis is parallel to the second direction; and at least one first connecting portion is located on one side of the central axis in the first direction, and at least one second connecting portion is located on another side of the central axis in the first direction.

12. The battery cell according to claim 10 or 11, **characterized in that** a plurality of first connecting portions are provided, and the plurality of first connecting portions are distributed in a straight line in the second direction; and/or, a plurality of second connecting portions are provided, and the plurality of second connecting portions are distributed in a straight line in the second direction.

13. The battery cell according to any one of claims 10 to 12, **characterized in that** a plurality of first connecting portions are provided, a plurality of second connecting portions are provided, and the plurality of first connecting portions and the plurality of second connecting portions are alternately distributed in the second direction.

14. The battery cell according to claim 8, **characterized in that** a plurality of connecting portions are provided, and the plurality of connecting portions are distributed in a straight line in the second direction.

15. The battery cell according to claim 14, **characterized in that** the support member has a first side surface and a second side surface distributed oppositely in the first direction, a distance between at least one connecting portion and the first side surface is equal to a distance between the connecting portion and the second side surface; and/or, two first grooves located on two opposite sides of a same connecting portion in the first direction have equal dimensions in the first direction.

16. The battery cell according to claim 15, **characterized in that** at least two first grooves located on a same side of the connecting portion and arranged in the second direction have different dimensions in the first direction.

17. The battery cell according to claim 16, **characterized in that** at least three first grooves located on a same side of the connecting portion and arranged in the second direction have dimensions in the first direction that gradually increase; and/or, another at least three first grooves located on a same side of the connecting portion and arranged in the second direction have dimensions in the first direction that gradually decrease.

18. The battery cell according to claim 14 or 15, **characterized in that** at least three consecutively arranged first grooves located on a same side of the connecting portion and arranged in the second direction have dimensions in the first direction that first decrease and then increase.

19. The battery cell according to claim 7, **characterized in that** two adjacent first branch portions are connected to a same side of the connecting portion in the first direction and form one first groove.

20. The battery cell according to claim 19, **characterized in that** a plurality of first grooves are provided, the plurality of first grooves are arranged in the second direction, and at least two first grooves have equal dimensions in the first direction.

21. The battery cell according to claim 19 or 20, **characterized in that** the support member further comprises a plurality of second branch portions spaced apart in the second direction, two adjacent second branch portions are connected to a side of the connecting portion facing away from the first branch portions, and one first groove is formed between two adjacent second branch portions.

22. The battery cell according to claim 21, **characterized in that** in the first direction, a projection of at least one first branch portion does not completely overlap with projections of all second branch portions.

23. The battery cell according to claim 22, **characterized in that** in the second direction, a plurality of first branch portions and a plurality of second branch portions are alternately distributed.

24. The battery cell according to any one of claims 7 to 23, **characterized in that** in the first direction, at least one first groove has a dimension in the second direction that first decreases and then increases.

25. The battery cell according to claim 19, **characterized in that** two adjacent first branch portions are arranged at an angle to each other.

26. The battery cell according to claim 25, **characterized in that** the support member further comprises a plurality of second branch portions spaced apart in the second direction, two adjacent second branch portions are connected to a side of the connecting portion facing away from the first branch portions, and two adjacent second branch portions are arranged at an angle to each other and form one first groove.

27. The battery cell according to claim 6, **characterized in that** a plurality of first branch portions are sequentially connected in the second direction, and two adjacent first branch portions are arranged at an angle to each other and form one first groove.

28. The battery cell according to any one of claims 1 to 3, **characterized in that** the electrode assembly comprises a flat portion, a part of the first electrode plate located in the flat portion comprises a first electrode plate layer, a plurality of first electrode plate layers are provided, the plurality of first electrode plate layers are stacked in a first direction, and a second direction is perpendicular to the first direction and a thickness direction of the support member; and
at least a part of the accommodating groove is a first groove, and the first groove extends in the second direction.

29. The battery cell according to claim 28, **characterized in that** the support member comprises a connecting portion and a plurality of first branch portions that are spaced apart in the first direction, two ends of the connecting portion are respectively connected to a middle portion of a respective one of two adjacent first branch portions; and two first grooves are formed between two adjacent first branch portions, and the two first grooves are respectively located on two opposite sides of the connecting portion in the second direction.

30. The battery cell according to claim 29, **characterized in that** the support member has a third side surface and a fourth side surface distributed oppositely in the second direction, a distance between at least one connecting portion and the third side surface is equal to a distance between the connecting portion and the fourth side surface; and/or, two first grooves located on two opposite sides of the same connecting portion in the second direction have equal dimensions in the second direction.

31. The battery cell according to claim 29 or 30, **characterized in that** a plurality of connecting portions are provided, and the plurality of connecting portions are distributed in a straight line in the first direction.

32. The battery cell according to any one of claims 4 to 31, **characterized in that** in a direction perpendicular to an extending direction of the first groove and the thickness direction of the support member, a dimension of the first groove ranges from 0.5 mm to 30 mm.

33. The battery cell according to any one of claims 4 to 32, **characterized in that** in the thickness direction of the support member, a dimension of the first groove ranges from 0.1 mm to 3 mm.

34. The battery cell according to any one of claims 1 to 33, **characterized in that** the support member has a first surface and a second surface oppositely disposed in its thickness direction and a side surface connected between the first surface and the second surface, the first surface faces the first end surface, the second surface faces away from the first end surface, the first opening is located on the first surface, and at least one accommodating groove extends through the side surface and forms a second opening.

35. The battery cell according to claim 34, **characterized in that** at least one side portion of the first end surface protrudes beyond the side surface and forms an accommodating space, and the second opening is in communication with the accommodating space.

36. The battery cell according to claim 34 or 35, **characterized in that** at least one end of at least one accommodating groove in the first direction extends through the side surface and forms the second opening, and the first direction is a width direction of the support member.

37. The battery cell according to claim 36, **characterized in that** a width of the support member is denoted as W, and a total dimension of all the electrode assemblies in the first direction is denoted as T₁, wherein 0.9 ≤ W/T₁ < 1.

38. The battery cell according to any one of claims 34 to 37, **characterized in that** at least one end of at least one accommodating groove in a second direction extends through the side surface and forms the second opening, and the second direction is a length direction of the support member.

39. The battery cell according to claim 38, **characterized in that** in the second direction, a dimension of the electrode assembly is denoted as L₁, and a length of the support member is denoted as L₂, wherein 0.95 ≤ L₂/L₁ < 1.

40. The battery cell according to claim 19 or 20, **characterized in that** in the first direction, end portions of two adjacent first branch portions on a same side are connected with the connecting portion, and end portions of two adjacent first branch portions on another side are connected with the connecting portion.

41. The battery cell according to any one of claims 1 to 40, **characterized in that** the support member has a first surface and a second surface oppositely disposed in its thickness direction, the first surface faces the first end surface, the second surface faces away from the first end surface, the first opening is located on the first surface, and at least one accommodating groove extends through the second surface and forms a third opening.

42. The battery cell according to claim 41, **characterized in that** the battery cell comprises a first insulating member, at least a part of the first insulating member being located within the housing, wherein the first insulating member has a receiving space, the support member and at least a part of the electrode assembly are located in the receiving space, and the first insulating member has a first through hole communicating the receiving space with an exterior of the first insulating member.

43. The battery cell according to claim 42, **characterized in that** the first insulating member has a second wall, at least a part of the second wall being located between the support member and the first wall, wherein the second wall is provided with the first through hole, and the first through hole extends through the second wall in the thickness direction of the support member; and in the thickness direction of the support member, a projection of the first through hole does not coincide with projections of all the third openings.

44. The battery cell according to any one of claims 6 to 26, **characterized in that** the support member further comprises a substrate, a plurality of first branch portions are spaced apart in the second direction, the substrate is located between the first end surface and the first wall, and the plurality of first branch portions are connected to a surface of the substrate facing the first end surface.

45. The battery cell according to any one of claims 6 to 27, 29 to 31, 40, or 44, **characterized in that** at least a part of a surface of at least one first branch portion facing the first end surface is an arcuate surface.

46. The battery cell according to any one of claims 7 to 27, 29 to 31, or 40, **characterized in that** at least a part of a surface of at least one connecting portion facing the first end surface is an arcuate surface.

47. The battery cell according to any one of claims 7 to 27, 29 to 31, 40, or 46, **characterized in that** at least one end of the support member in the second direction is provided with a second through hole, the second through hole extends through the support member in the thickness direction of the support member, and the first branch portion is provided with the second through hole; and/or, the connecting portion is provided with the second through hole.

48. The battery cell according to any one of claims 1 to 3, **characterized in that** the support member further comprises a substrate and a plurality of spaced-apart protruding portions; wherein the substrate is located between the first end surface and the first wall, the plurality of protruding portions are connected to a surface of the substrate facing the first end surface, and the plurality of protruding portions and the substrate form at least one accommodating groove.

49. The battery cell according to claim 48, **characterized in that** a plurality of accommodating grooves are provided, and the plurality of protruding portions are arranged in a matrix and form a plurality of accommodating grooves arranged in a crisscross pattern.

50. The battery cell according to claim 48 or 49, **characterized in that** at least a part of a surface of at least one protruding portion facing the first end surface is an arcuate surface.

51. The battery cell according to any one of claims 44, 48 to 50, **characterized in that** in the thickness direction of the support member, a dimension of the substrate ranges from 0.1 mm to 1 mm.

52. The battery cell according to any one of claims 1 to 51, **characterized in that** a thickness of the support member ranges from 0.1 mm to 3 mm.

53. The battery cell according to any one of claims 1 to 52, **characterized in that** the support member has a first surface, the first surface faces the first end surface, and the first opening is located on the first surface; and an area of the first surface is denoted as S₁, and a total area of the first openings of all the accommodating grooves is denoted as S₂, wherein 0.1 ≤ S₂/(S₁+S₂) ≤ 0.8; optionally, 0.4 ≤ S₂/(S₁+S₂) ≤ 0.7.

54. The battery cell according to any one of claims 1 to 53, **characterized in that** the support member is an insulating component.

55. The battery cell according to any one of claims 1 to 42, **characterized in that** the battery cell comprises a first insulating member, at least a part of the first insulating member being located within the housing, wherein the first insulating member has a receiving space, the support member and at least a part of the electrode assembly are located in the receiving space, the first insulating member has a second wall, at least a part of the second wall is located between the support member and the first wall, and the support member and the second wall are an integral structure.

56. The battery cell according to claim 55, **characterized in that** the battery cell has a third through hole, and the third through hole extends through the support member and the second wall in the thickness direction of the support member.

57. The battery cell according to any one of claims 1 to 56, **characterized in that** the battery cell comprises a first insulating member, at least a part of the first insulating member being located within the housing, wherein the first insulating member has a receiving space, and the support member and at least a part of the electrode assembly are located in the receiving space.

58. The battery cell according to claim 57, **characterized in that** the battery cell comprises a second insulating member, at least a part of the second insulating member being located on a side of the end cover facing the electrode assembly, wherein the first insulating member is connected to the second insulating member.

59. The battery cell according to any one of claims 1 to 58, **characterized in that** the battery cell comprises an electrode terminal and the second insulating member, wherein the electrode terminal is disposed on the end cover, the electrode terminal is electrically connected to the electrode assembly, at least a part of the second insulating member is located on a side of the end cover facing the electrode assembly, and the second insulating member insulates and separates the electrode terminal from the end cover.

60. The battery cell according to any one of claims 1 to 59, **characterized in that** the housing is an insulating housing.

61. The battery cell according to any one of claims 1 to 60, **characterized in that** an inner wall of the housing is covered with an insulating coating.

62. The battery cell according to any one of claims 1 to 61, **characterized in that** the housing comprises an integrally formed peripheral wall and an end wall, wherein the peripheral wall is connected to a periphery of the end wall, the end cover is hermetically connected to an opening of the peripheral wall facing away from the end wall, and the end wall forms the first wall.

63. The battery cell according to any one of claims 1 to 62, **characterized in that** in the direction of gravity, the bottom wall of the housing forms the first wall.

64. The battery cell according to any one of claims 1 to 63, **characterized in that** the electrode assembly comprises a second electrode plate and a separator, and the first electrode plate and the second electrode plate have different polarities; wherein
a part of the separator is located between the first electrode plate and the second electrode plate, an end portion of the separator facing the support member extends beyond the first electrode plate and the second electrode plate, and the end portion of the separator facing the support member is bent to form a stacked structure and the first end surface.

65. The battery cell according to claim 64, **characterized in that** the electrode assembly comprises a flat portion, a part of the first electrode plate located in the flat portion comprises a first electrode plate layer, a part of the second electrode plate located in the flat portion comprises a second electrode plate layer, and a part of the separator located in the flat portion comprises a separator layer; and a plurality of first electrode plate layers, the second electrode plate layers, and the separator layers are provided; wherein
each of the separator layers comprises a main body portion and a bent portion, wherein at least a part of the main body portion is located between the first electrode plate layer and the second electrode plate layer that are adjacent, an end portion of the main body portion facing the support member is connected to the bent portion, the bent portion is entirely located outside the corresponding adjacent first electrode plate layer and first electrode plate layer, and the bent portion is bent relative to the main body portion; and
the bent portions of two adjacent separator layers are stacked, and a gap is formed between the bent portions of two adjacent separator layers.

66. The battery cell according to claim 65, **characterized in that** portions of the bent portions of two adjacent separator layers are arranged in an offset configuration.

67. The battery cell according to claim 65 or 66, **characterized in that** a part of the bent portion of at least one separator layer away from an end portion of the main body portion is located in a corresponding accommodating groove.

68. The battery cell according to any one of claims 1 to 67, **characterized in that** the electrode assembly is a wound structure, and a tab is led out from an end portion of the electrode assembly facing away from the first wall; or
the electrode assembly is a laminated structure, and a tab is led out from at least one side portion of the electrode assembly, other than a side portion near the first wall.

69. The battery cell according to any one of claims 1 to 68, **characterized in that** the battery cell is a lithium iron phosphate battery cell, and in the thickness direction of the support member, a dimension of the battery cell ranges from 100 mm to 400 mm; or
the battery cell is a ternary lithium battery cell, and in the thickness direction of the support member, a dimension of the battery cell ranges from 100 mm to 300 mm.

70. A battery apparatus, **characterized by** comprising a plurality of battery cells according to any one of claims 1 to 69.

71. The battery apparatus according to claim 70, **characterized in that** in the battery apparatus, in the direction of gravity, the bottom wall of the housing forms the first wall.

72. An electric apparatus, **characterized by** comprising the battery cell according to any one of claims 1 to 69 or the battery apparatus according to claim 70 or 71, wherein the battery cell or the battery apparatus is configured to store or supply electrical energy.
